# EUROPEAN PATENT APPLICATION

(11) **EP 1 263 202 A2**
(43) Date of publication of application: **04.12.2002**
(21) Application number: 02010455.0
(22) Date of filing: 08.05.2002
(51) Int. Cl.: H04M 3/493

(54) **Method and apparatus for incorporating application logic into a voice response system**

(30) Priority: 14.05.2001 US 859107
(71) Applicant: Openwave Systems Inc., Redwood City, CA 94063 (US)
(72) Inventor: Schemers III, Roland J., Redwood City, CA 94062 (US); Dargahi, Ross, Mountain View, CA 94041 (US)
(74) Representative: Jehle, Volker Armin

(57) **Abstract**

A method and apparatus for incorporating application logic into a voice responsive system are described. The system includes a voice server to receive a request from a voice browser in response to user input. The voice server responds by accessing a VXML based call flow document to initiate a call flow. The call flow document may contain standard VXML tags as well as VXML extension elements. The VXML extension elements provide logic for the call flow, either explicitly or by referencing separate objects or functions. The voice server includes an engine to parse the call flow document, including identifying the VXML extension elements and other tags, and to invoke the appropriate code to execute the application logic based on the VXML extension elements. This approach allows application logic provided by "backend" servers to be included in a call flow.

## Description

A portion of the disclosure of this patent document contains material which is subject to copyright protection. The copyright owner has no objection to the facsimile reproduction by any one of the patent document or the patent disclosure, as it appears in the Patent and Trademark Office patent file or records, but otherwise reserves all copyright rights whatsoever.

### FIELD OF THE INVENTION

The present invention pertains to voice responsive processing systems. More particularly, the present invention relates to a method and apparatus for incorporating application logic into a voice responsive processing system.

### BACKGROUND OF THE INVENTION

Interactive Voice Response (IVR) systems may be defined to include automated processing systems capable of carrying out operations in response to the human voice or dual tone multi-frequency (DTMF) tones (a.k.a. "touchtones"). A simple example of such a system is a voice-activated dialer, which responds to a user speaking the name of a person to be called, by automatically dialing the appropriate telephone number. As a more sophisticated example, rapid progress is being made in the development of a "voice web". The voice web will be analogous to (and possibly integrated with) the well-known World Wide Web. However, the information maintained on the voice web will be primarily in audible form, and users will access the information using speech or DTMF tones. More specifically, a user will access the voice web using a telephone or other standard audio equipment to operate a device known as a voice browser. The voice browser will respond to the user's spoken or keyed requests to access information stored on a remote processing system, and will provide the information to the user in audible form, such as in the form of recorded or synthesized speech.

Although the telephone is a common channel through which users access IVR systems, such systems can also be accessed through other types of communication channels, such as by using a computer connected to the Internet. Nonetheless, a session between a user and a voice responsive system may be referred to as a "call" regardless of the type of communication channel used, and the sequence or logical structure of the call is often referred to as the "call flow". A call flow normally includes application logic which defines the various conditions, decisions, branches, and other higher-level operations (i.e., the "flow" of the call) as well as various presentation features (i.e., the input/output characteristics of the call).

It is desirable to allow the individuals and enterprises who maintain and operate IVR systems to create or customize their call flows. With current technology, call flow customization requires programming by development engineers. This results in additional cost in terms of both time and money for development, quality assurance (QA), and release phases. Thus, if an enterprise wishes to modify some aspect of the call flow (e.g., to add a menu item), engineering development effort is normally required.

With the advent of voice extensible markup language (VXML) and VXML browsers, it has become possible to create custom voice applications for IVR systems. VXML is a voice based analogue to hypertext markup language (HTML), and a VXML browser is a voice based analogue to an HTML browser, such as Microsoft Internet Explorer or Netscape Navigator. Like HTML, however, VXML is essentially a presentation language. That is, it does not provide the necessary constructs for building rich applications, such as unified communication or unified messaging applications. For example, when using such applications, a user might wish to retrieve and listen to his new voicemail messages. To do this, he typically has to first proceed through an authentication stage and then be presented with a list of new voicemails. From this list, he may select messages to be played back, messages to be saved, and messages to be deleted. While VXML is able to provide the presentation aspects of this interaction (e.g., prompts and a menu of choices mapped to DTMF keys of voice commands), it is unable to represent the sometimes-complex application logic required for managing interactions with external systems, such as directories, message stores, and personal information management (PIM) servers.

Consequently, the application logic of call flows has traditionally been encoded in a procedural language such as Perl or C. As a result, if an enterprise wishes to modify some aspect of the call flow, modification of that code is normally required, which involves engineering development and QA effort, and therefore, additional cost. The current approach, therefore, is not conducive to creation or customization of call flows for IVR systems that have already been deployed.

### SUMMARY OF THE INVENTION

The present invention includes a method and apparatus to create a VXML based call flow document, for use by a server in a voice responsive system, to define a call flow. A VXML extension element is incorporated into the call flow document to provide application logic for the call flow. The call flow document is stored in the voice responsive system.

Other features of the present invention will be apparent from the accompanying drawings and from the detailed description which follows.

### BRIEF DESCRIPTION OF THE DRAWINGS

The present invention is illustrated by way of example and not limitation in the figures of the accompanying drawings, in which like references indicate similar elements and in which:
Figure 1 is a block diagram of an IVR system that incorporates logic into a call flow using VXML extensions;
Figure 2 is a block diagram showing the elements of the engine;
Figures 3A and 3B collectively form a flow diagram showing an overall process for incorporating logic into a call flow using VXML extensions;
Figure 4 is a flow diagram showing the processing of an element in a call flow document; and
Figure 5 is a block diagram of a processing system that can be used to implement one or more of the elements shown in Figure 1.

### DETAILED DESCRIPTION

A method and apparatus for using VXML extensions to incorporate application logic into a voice responsive system are described. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. Thus, the present invention can include any variety of combinations and/or integrations of the embodiments described herein.

### I. Overview

As described in greater detail below, the solution described herein includes a call flow language which extends VXML with a set of custom elements. These elements provide the necessary expressiveness for interacting with middle tier servers, as well as expressing the necessary application logic for a voice application. The set of elements is easily and canonically extensible; that is, new elements can easily be added to a running system on-the-fly.

The solution also provides a set of objects and functions accessible from this call flow language, that provide aggregate useful capabilities (e.g. playing a folder summary of new emails, faxes, and voicemails) and that also export the ability to access key system functionality, such as account profile information, voice mail messages, personal information management data (e.g. calendar and address book). The set of functions and objects is also easily extensible, such that new functions and objects can be added on-the-fly. In addition, the solution includes a server framework for transparently managing such things as user sessions.

The IVR system described herein includes a voice server to receive a request from a voice browser in response to user input. The voice server responds by accessing a VXML based call flow document to initiate a call flow. The call flow document may contain standard VXML tags as well as VXML extension elements. The VXML extension elements can be used to provide application logic for the call flow, either explicitly or by referencing separate objects or functions containing the logic. The voice server includes an engine to parse the call flow document, including identifying the VXML extension elements and other tags, and to invoke appropriate code to execute the call flow logic based on the VXML extension elements. This approach allows the inclusion of application logic provided by "backend" servers in a call flow.

### II. IVR System and Process

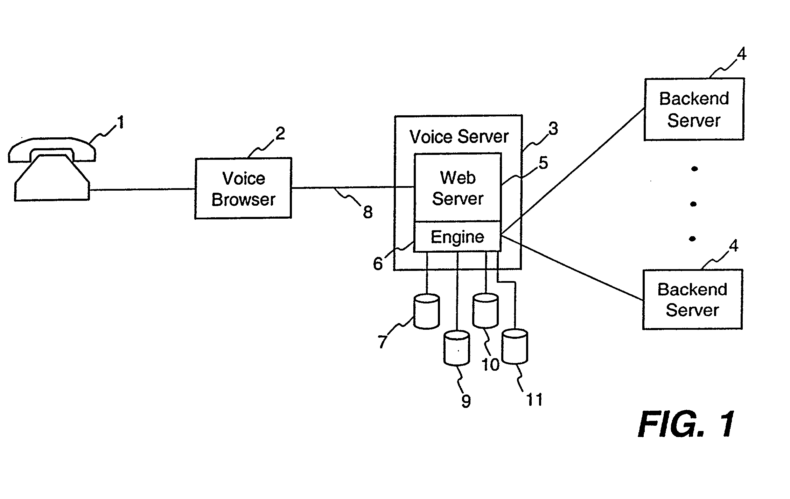

Refer now to Figure 1, which illustrates an example of an IVR system that incorporates logic into a call flow using VXML extensions, in accordance with the present invention. The system includes a voice browser 2, and an audio input/output (I/O) interface 1 by which the user accesses a voice browser 2. The audio I/O interface 1 may be a conventional or cellular telephone, as shown, such that the user may access the voice browser 2 over a conventional or wireless telephone network by dialing a predetermined telephone number. In alternative embodiments, however, the user can access the voice browser 2 through other types of communication channels, such as the Internet or a corporate intranet (using, for example, IP telephony and/or Voice-over-IP).

The voice browser 2 operates in a manner that is analogous to a conventional HTML based web browser, except that it is responsive to voice input from the user and is used to access hyperlinked audio content (as opposed to text, graphics, or video). The voice browser 2 may be implemented in a conventional processing system, such as an AS5300 universal access server from Cisco Systems of San Jose, California

The system also includes a voice server 3. The voice server 3 provides VXML based content to the voice browser 2 over a standard hypertext transport protocol (HTTP) interface 8, in response to requests from the voice browser 2 (which requests are transmitted in response to voice input from the user). The system also includes one or more VXML based call flow documents 7, which may be (but do not have to be) stored within the voice server 3 in one or more conventional mass storage devices. The call flow documents 7 define the call flow and are accessed by the voice server 3 in response to an initial request from the voice browser 2, to control the call. Hence, the call flow documents 7 are at least a part of the "content" which a user accesses through the voice browser 2 and the voice server 3. The call flow documents 7 include both standard VXML as well as various new elements (tags) defined herein, which are referred to as VXML extension elements or custom elements. The VXML extension elements are used to incorporate application logic into the call flow and are described further below.

In one embodiment, the voice server 3 includes a standard web server 5 (e.g., Apache) and a VXML extension engine (or simply "engine") 6. The engine 6 parses and interprets the extended VXML call flow documents. It has the ability to recognize standard VXML tags as well as the extension elements, and includes code for implementing the logic represented by those elements. In one embodiment, the engine 6 includes a conventional, "off-the-shelf" PHP (Hypertext Preprocessor) scripting language interpreter. In one embodiment, the engine 6 also includes additional code, which implements application logic represented by custom elements, as well as various functions and objects (mentioned above and described further below) which are invoked using custom elements. The additional code may be written in PHP scripting language, Perl, and/or C programming language, for example. Referring still to Figure 1, additional elements, functions and objects are stored in external element files 9, function files 10, and object files 11, respectively, for implementing application logic for a call flow.

The system also includes one or more backend servers 4. The backend servers 4 may contain application logic as well as other content accessible to the user via the voice browser 2 and voice server 3. The VXML extension elements may be used to invoke and/or interact with application logic residing on the backend servers 4. As one example, a VXML extension element in a call flow document 7 may be used to invoke a user login/authentication operation carried out by one of the backend servers 4.

An important advantage of this approach is that a call flow can be modified on-the-fly in a running system, simply by modifying one or more of the stored call flow documents 7.

An important service that the voice server 3 provides is session management. As the user interacts with the system during a VXML session, certain application state must be captured and managed for the lifetime of the session. For example, if as part of a call flow the user "logs in" - for example to retrieve voice mail - the system must keep track of the user's authentication token and the fact that the user has logged in. This tracking and management is done by the voice server 3 and is hidden from the call flow developer.

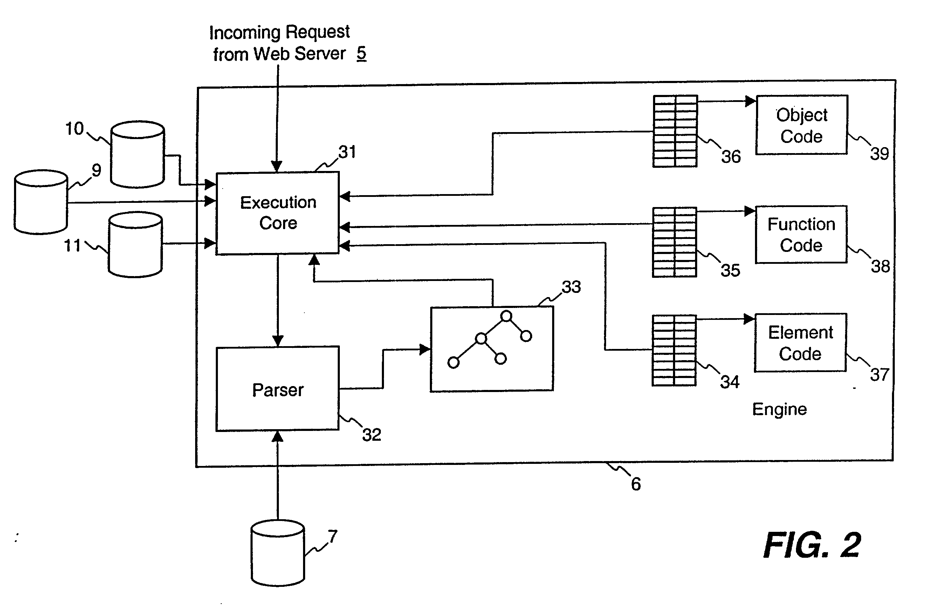

Figure 2 shows the elements of the VXML extension engine 6, according to one embodiment. As shown, the engine 6 includes an execution core 31 and a parser 32. The parser 32 is responsible for parsing call flow documents 7. The result of parsing a call flow document is a parse tree 33, which indicates to the execution core 31 the sequence in which the elements of the call flow document should be processed. The execution core 31 executes a parsed call flow document by invoking the element code, functions and/or objects represented by the elements in the document. The element code, functions and objects may be internal to the engine 6, as is the case with internal element code 37, internal function code 38, and internal object code 39. Tables 34, 35 and 36 contain mappings used by the execution core 31 to determine the storage locations of the internal element code 37, internal function code 38 and internal object code 39, respectively, based on the referencing extension elements. Other element code, objects, and functions are stored in external element files 9, function files 10, and object files 11.

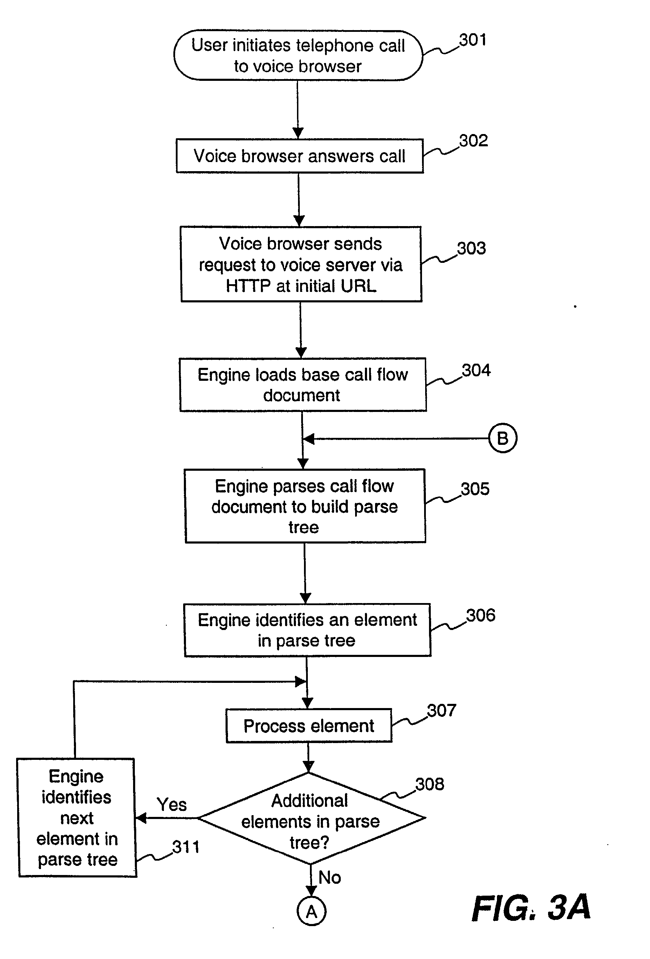

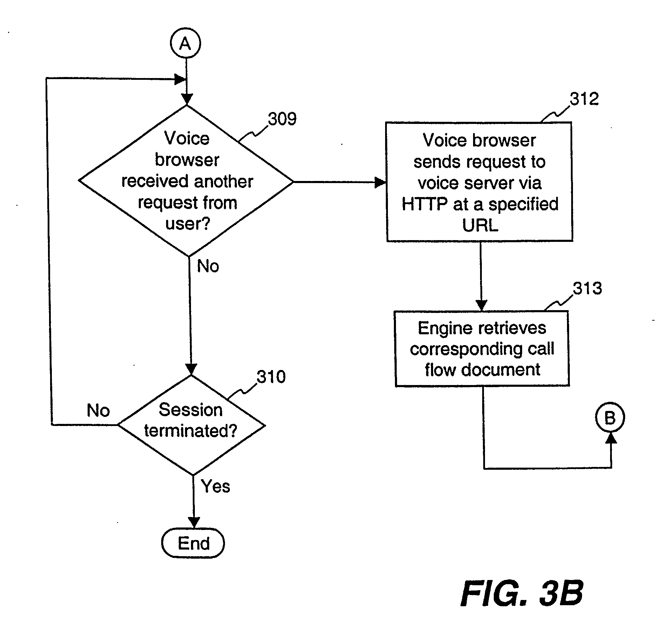

Figures 3A and 3B collectively show an overall process that may be executed by the system of Figure 1 during a call, in accordance with the present invention. This process will now be described, also with reference to Figures 1 and 2. Initially, at block 301 a user initiates a call to the voice browser 2. The voice browser 2 answers the call at block 302 and, at block 303, sends an HTTP request to the voice server 3 specifying an initial uniform resource locator (URL). At block 304, the VXML extension engine 6 identifies and loads the base (main) call flow document of the set of call flow documents 7, based on the URL specified by the browser 2. Note that a call flow can be implemented within a single call flow document or within multiple call flow documents. The engine 6 then parses the call flow document into a parse tree at block 305. At block 306, the engine 6 uses the parse tree to identify the first element (tag) in the call flow document, and at block 307 the engine processes the element in an appropriate manner, as described below in greater detail.

After processing the element, at block 308 the engine 6 determines from the parse tree whether there are additional elements to be processed in the call flow document. If so, the engine 6 identifies the next element at block 311, and the process then continues from block 307 (discussed above). If all of the elements in the call flow document have been processed, then the process continues from block 309. At block 309, if the voice browser 2 has received another request from the user, it sends a request to the voice server 3 via HTTP with a specified URL at block 312. The engine 6 then retrieves the call flow document corresponding to the specified URL at block 313, and the process and continues from block 305. If no further request has been received and if the session is still active at block 310, then the process loops back to block 309. If no further request has been received from the voice browser 2 and the session has terminated, the process ends. The duration of the process is open-ended, in that essentially any number of requests can be received from the user and voice browser 2, depending on the type of call flow being accessed.

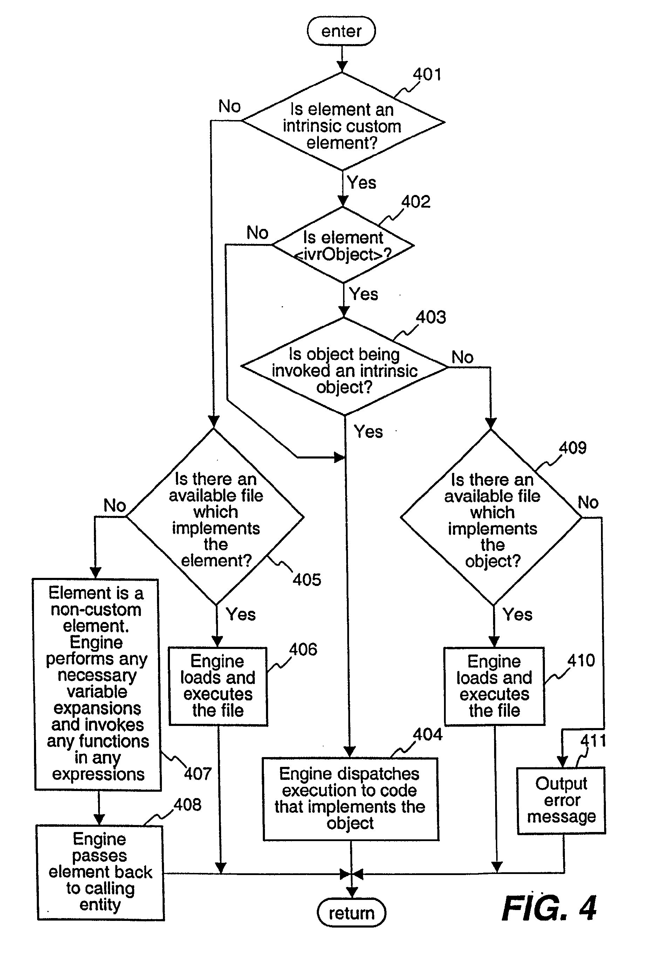

Figure 4 shows the process of block 307 in greater detail, according to one embodiment. Upon entering the process, at block 401 the engine 6 determines whether the element currently being processed is an intrinsic (internal) custom element by consulting its table 34 of internal elements. If the element is an intrinsic custom element, then at block 402 the engine 6 next determines whether the element is the <ivrObject> tag (discussed below), which is used to incorporate an object into the call flow. If the element is the <ivrObject> tag, then the engine 6 determines at block 403 whether the object being invoked in the tag is an intrinsic (internal) object, by consulting its table 36 of internal objects.

If the object being invoked is an intrinsic object, the engine 6 dispatches execution to its internal code that implements the object at block 404, and the process then returns. The code which implements the object may be, for example, a script written in PHP, Perl, or C. Execution of the object may include, for example, one or more local computations, or it may cause the voice server to interact with one or more backend servers, if appropriate. The latter action can be accomplished by calling one or more application program interfaces (APIs). Execution of the object may also include the generation of additional VXML code by the engine 6, which is passed to the voice browser.

If the object is not an internal object, the engine 6 determines at block 409 if there is an external file available which implements the object. In one embodiment, external files are assigned names that match the name of the corresponding element, function or object used in the tag, to allow the engine 6 to easily locate the correct file. If there is such a file at block 409, then the engine 6 loads and executes the file at block 410, and the process then returns. The file may include a PHP, Perl or C script, for example, and execution may involve actions such as described above regarding block 404. If there is no such file, the engine 6 outputs an appropriate error message to the calling entity at block 411, and the process then returns.

If the element currently being processed is an intrinsic custom element but is determined not to be the <ivrObject> tag at block 402, then the process branches from block 402 to block 404 (discussed above).

If the element currently being processed is determined not to be an intrinsic custom element at block 401, then the process branches to block 405, in which the engine 6 determines if there is an external file available which implements the element. If there is such a file, then the engine 6 loads and executes the file at block 406, and the process then returns. The file may include a PHP, Perl or C script, for example, and execution may involve actions such as described above regarding block 404. If there is no such file found at block 405, then the element is determined not to be a custom element (i.e., it is a standard VXML element) at block 407. In that case, at block 407 the engine 6 performs any necessary variable expansions and invokes any functions that are represented in any expressions in the element, and then passes the element (or the result of block 407) back to the calling entity at block 408. The process then returns.

Of course, many variations upon the above-described process are possible within the scope of the present invention. For example, the sequence of operations can be altered and/or operations can be added or deleted while maintaining the essential nature of the process. One particular variation, which will now be described, is directed to improving the speed of execution of a call flow. The speed of execution will depend, at least in part, on the scripting language(s) employed and the particular version of the language(s). The above-described processes involve directly executing a requested call flow document by parsing it and calling the code which implements the custom elements in the document. This approach can be a time-consuming.

The following alternative process may be employed for overall faster performance. This process eliminates the need to parse a call flow document each time it is requested. The first time a call flow document is requested by the voice browser, the engine 6 parses the call flow document and outputs into a file all of the code needed to execute the call flow document (e.g., PHP code representing elements, functions and/or objects). The code may be located in the manner described above in connection with Figure 4. The next time the call flow document is requested, however, if the document has not been modified since the file was generated, the engine 6 simply executes the code from the file. If the document has been modified since the file was generated, the engine 6 will regenerate the file from the modified document, and execute the call flow document.

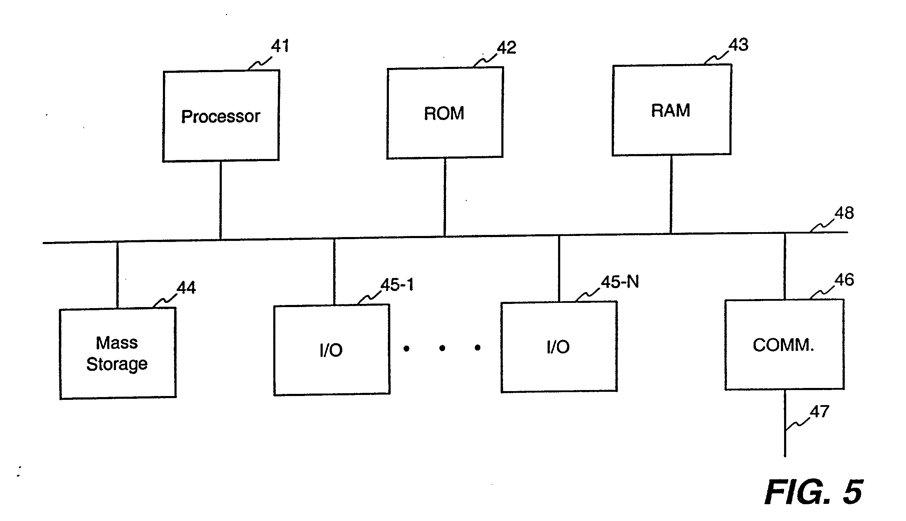

Figure 5 is a block diagram showing an example of a processing system that can be used to implement any of the elements shown in Figure 1. Note that Figure 5 is not intended to represent any one specific physical arrangement of components, as such details are not germane to the present invention and are well within the knowledge of those skilled in the art. In addition, note that the elements shown in Figure 1 may be distributed among two or more such processing systems, which may be connected to each other on a network or on an internetwork. The network or internetwork may be or may include, for example, a local area network (LAN), a wide area network (WAN), an corporate intranet, or the Internet, or a combination thereof. Each such physical machine may be, for example, a conventional personal computer (PC) or server-class computer. Note that the audio I/O interface 1 may also be implemented in a computer, as opposed to a conventional telephone; in that case, the computer might be a personal digital assistant (PDA) or any other type of computing device.

The processing system shown in Figure 5 includes a processor 41, read-only memory (ROM) 42, and random access memory (RAM) 43, each connected to a bus system 48. The processor 41 may be or may include a general-purpose programmable microprocessor, for example. The bus system 48 may include one or more buses connected to each other through various bridges, controllers and/or adapters, such as are well-known in the art. For example, the bus system 48 may include a "system bus" that is connected through an adapter to one or more expansion buses, such as a peripheral component interconnect (PCI) bus or an extended industry standard architecture (EISA) bus. Also coupled to the bus system 48 are a mass storage device 44, a number of input/output (I/O) devices 45-1 through 45-N, and a data communication device 46. Examples of what I/O devices 45 might include are a keyboard, a pointing device (e.g., mouse, touchpad or trackball), a display device, and an audio speaker.

Mass storage device 44 includes a storage medium suitable for storing large volumes of data in a non-volatile manner, such as a magnetic disk or tape, magneto-optical (MO) storage device, or any of various types of Digital Versatile Disk (DVD) or Compact Disk (CD) based storage. Data communication device 46 provides data communication between the illustrated processing system and one or more other (possibly remote) processing systems over a communications link 47. Hence, data communication device 46 may be, for example, a conventional telephone modem, an Integrated Services Digital Network (ISDN) adapter, a Digital Subscriber Line (DSL) modem, a cable modem, a satellite transceiver, an Ethernet adapter, or a combination thereof.

Of course, many variations upon the architecture shown in Figure 5 can be made to suit the needs of a particular machine. Thus, certain components may be added to those shown in Figure 5 for a particular machine, or certain components shown in Figure 5 may be omitted from a particular machine. For example, a server such as the voice server or backend servers does not necessarily require I/O devices designed to interface directly with a user, such as a keyboard, a pointing device, and a display device.

### III. VXML Extension Elements

The VXML extension elements (tags) will now be described in greater detail. First, each extension element will be briefly described, by category. A more complete description is given below (see section "VII"). Of course, additional extension elements may be defined, even after deployment of a system; in fact, the solution described herein facilitates the creation of new extension elements by those who maintain and operate IVR systems.

### A. Document Structure

The following extension elements relate to document structure:
- ivrCallFlow - This is the topmost element in a call flow document. It identifies the name of the call flow, as well as the first page in the call flow.
- ivrPage - Defines a page, in which all other tags will be contained.
- ivrExternalPage - Defines an external page. The file containing the page will be read when an attempt is made to execute the page.
- ivrBlock - Used to group statements together into a block. The main use for ivrBlock is to enclose multiple tags in an include file into a single tag. Other uses are to help organize multiple statements, such as all the tags belonging to an <ivrElse/> tag.
- ivrInclude - Includes the specified file. The pathname is relative to the callflows directory. The file will not be included until the ivrInclude tag is executed.

### B. Control Flow

The following extension elements relate to control flow:
- ivrIf, ivrElseIf, and ivrElse - Implement conditional control flow much like conventional if/then/else programming language construct.
- ivrSwitch, ivrCase, and ivrDefault - implements a switch-like construct. The expression in the ivrSwitch tag is evaluated once, and then compared to each expression in the ivrCase tags until the two are equal. If they are equal, then any tags up to the next ivrCase, ivrDefault, or ivrSwitch tags are executed. If none of the ivrCase expressions matches and there is an ivrDefault tag, any tags after that tag will be executed.
- ivrForEach - Enumerates over each element in an array. Sets local variable {variable}_key and {variable}_val for each key and value. expr should be a PHP expression that evaluates to an array.
- ivrGotoFlow - Updates session data and emits a <goto> tag that starts executing the specified call flow. Also places the session id in the URL, as well as the server name and port for server affinity.
- ivrReturn - Stops processing any more tags on the current page. Useful when it is necessary to do checks at the start of page that might result in an error condition or a goto and one does not want the rest of the page executed and/or want to have to enclose the rest of the page in an <ivrElse/> tag.

### C. Audio Output

The following extension elements relate to audio output:
- ivrPrompt - Outputs VXML <audio> tags to play various ivr (interactive voice response) prompts. Deals with internationalization and localization issues by locating the localized prompt files or saying a number/date in the localized format.
- ivrPhrase, ivrPhraseCond, and ivrPhraseValue - Plays a phrase by looking it up in the phrase file for the current locale. A phrase is either text-to-speech (TTS) -based or based on static prompts. ivrPhraseValue's are used to set phrase variables, and ivrPhraseCond's are used to set phrase conditions.

### D. Events

The following extension elements relate to events:
- ivrNoInput - Used to implement a consistent VXML "no input" handler policy
- ivrNoMatch - Used to implement a consistent VXML "no match" handler policy

### E. Miscellaneous

Other extension elements include the following:\
- ivrDtmfDigits - Used to specify fixed length digits DTMF grammar in a portable way
- ivrVar - When used within the scope of an <ivrPage> tag, sets a variable which lasts for the duration of a page. That variable will override any ivrVar set in a call flow, or any PHP global variable (such as a URL query parameter). When used within the scope of an <ivrVars> tag, sets a variable that can be accessed within any <ivrPage>. The value can either be a "value" or an "expr". An "expr" is evaluated, while a "value" is not.
- ivrObject - Invokes an "object", and passes parameters to it. The value of a parameter can either be a "value" or an "expr". An "expr" is evaluated, while a "value" is not.

### IV. Call Flow Documents

Examples will now be described of call flow documents which include the above-mentioned VXML extension elements and which illustrate the manner of their use.

### A. Top level call flow

The following is an example of an extended VXML file which may be used to specify the top level call flow. It contains some global variables which are used throughout the call flow. It also contains references to the pages which are a part of the call flow. The system uses the <ivrExternalPage> tag to only load pages when they are accessed - thus it is a declaration mechanism which is used to optimize the parsing of the call flow.

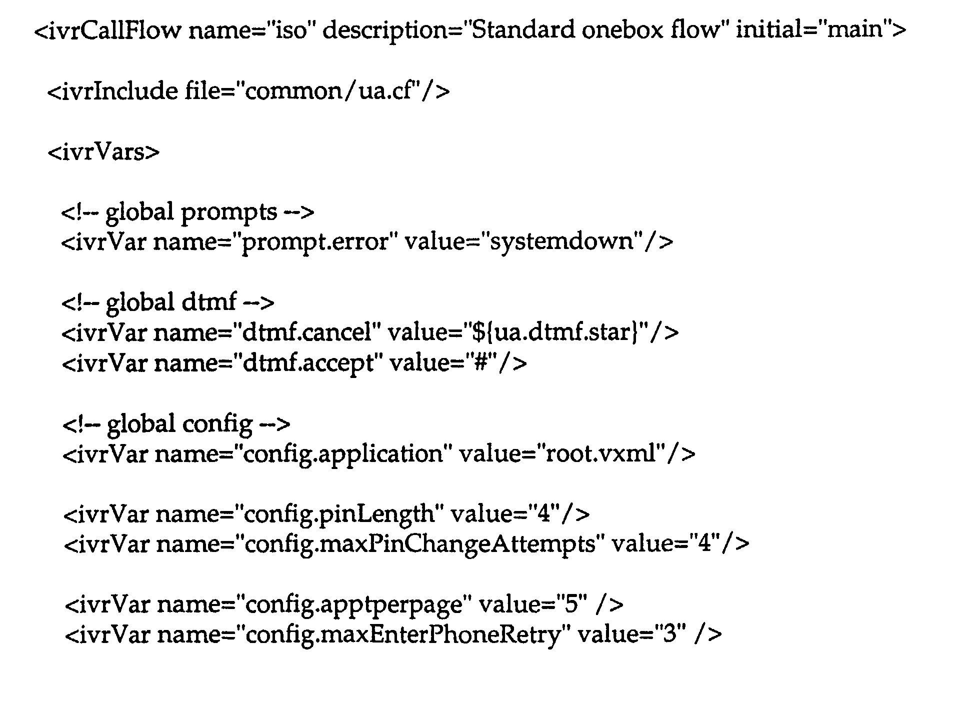

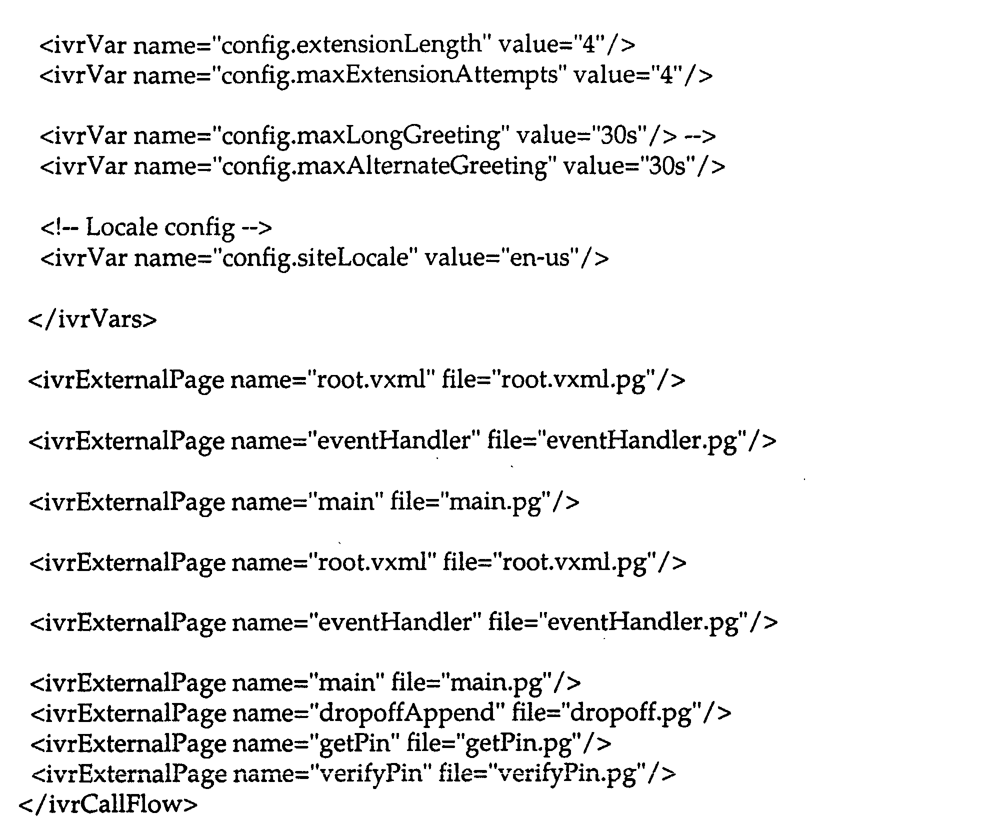

### B. Main page

The main page is the first page that is loaded by the engine. It determines the account which should be accessed based on various phone number information and dispatches accordingly. For the purposes of this example, it is assumed that a "regular" account is being accessed and the user is being taken to the message drop-off page (described below).

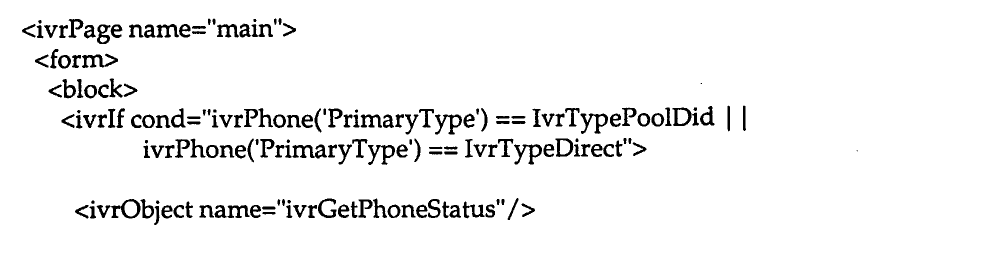

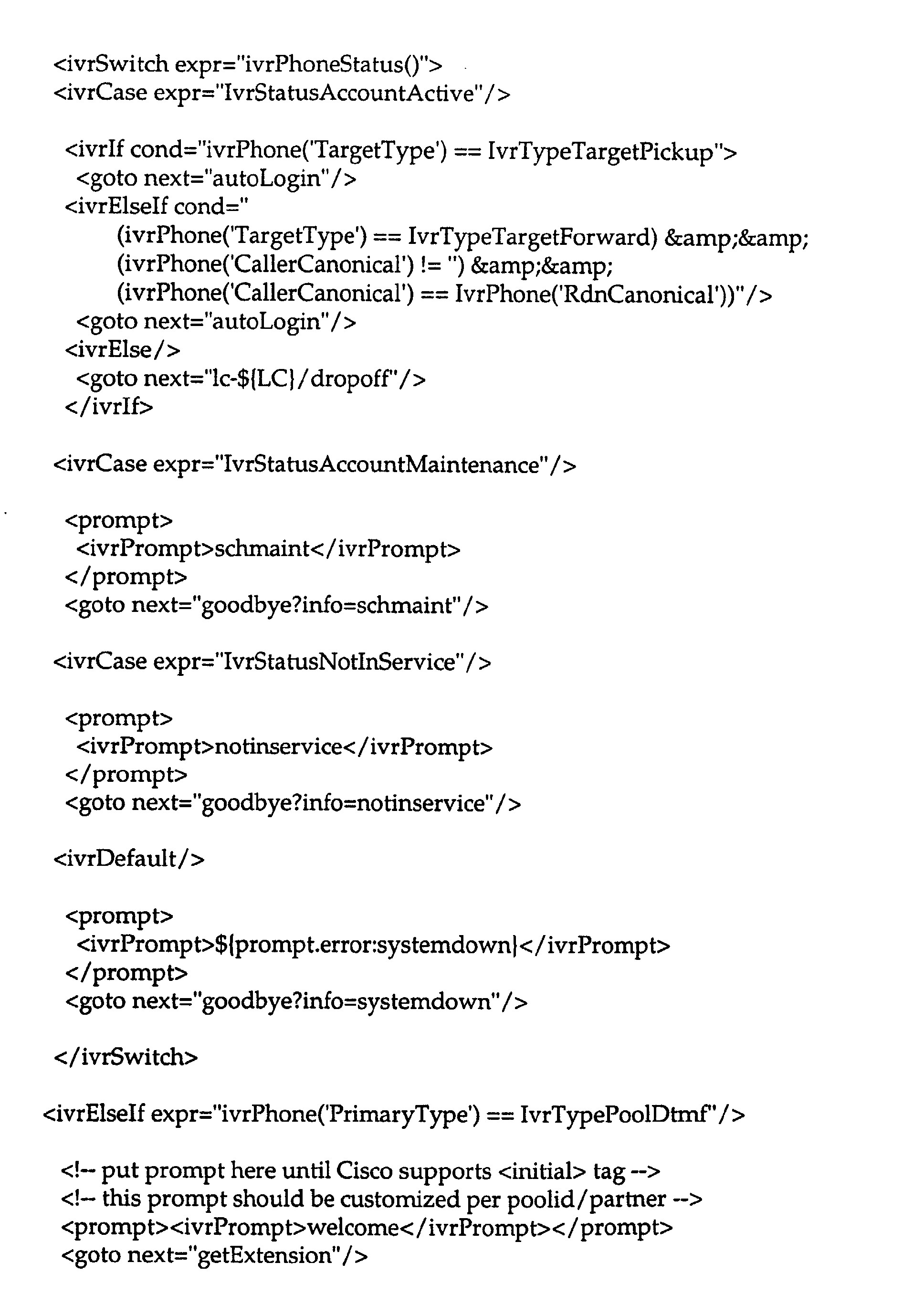

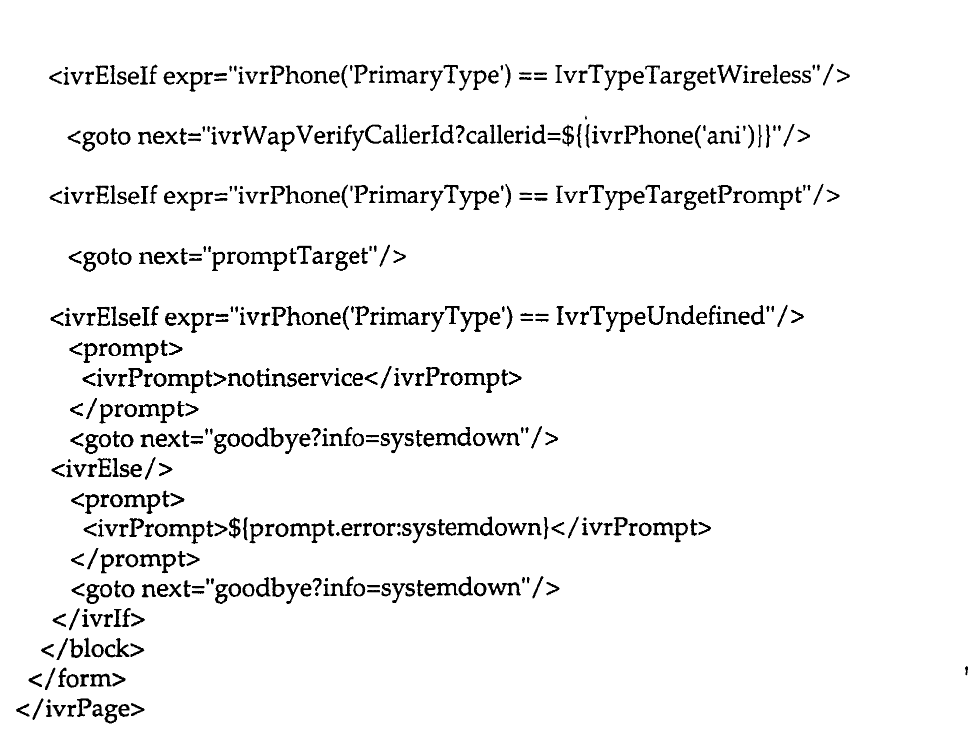

### C. Message Drop-off Page

The message drop-off page prompts the called to leave a message on the system. If the "*" key is pressed, the caller is prompted to login. The following is an example of the message drop-off page:

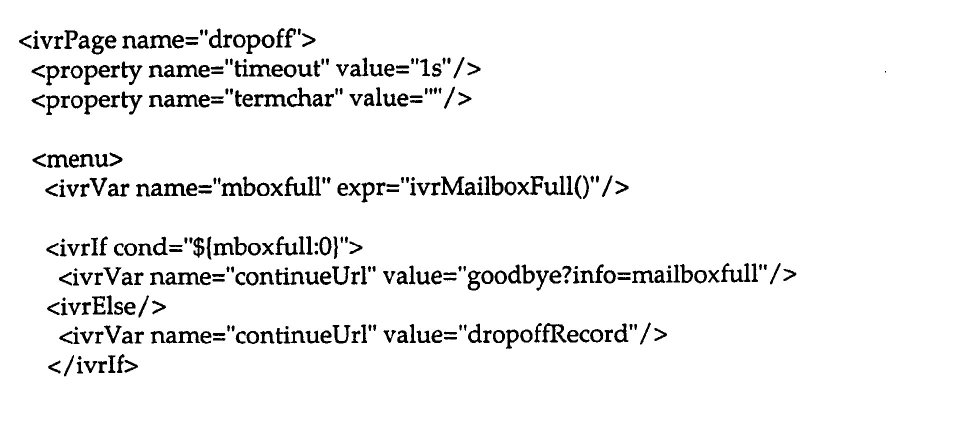

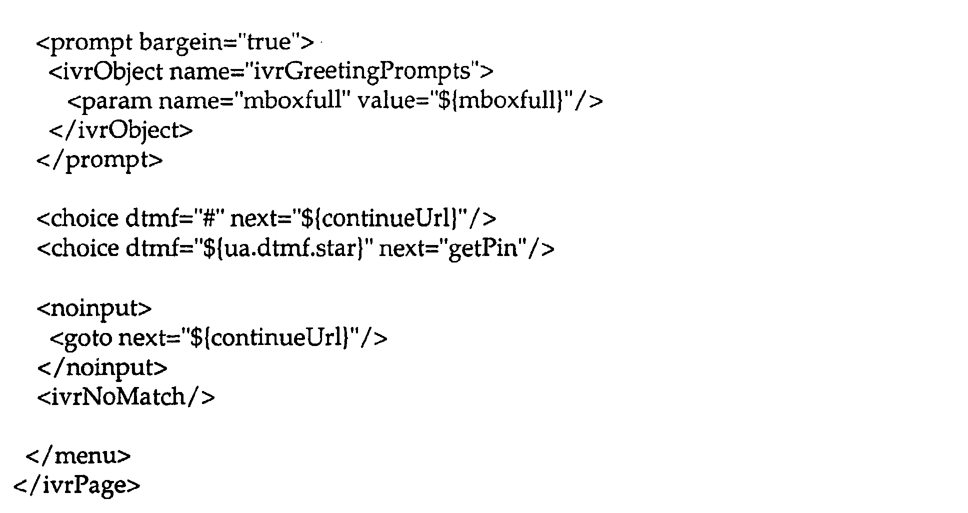

### D. Get a User's PIN

The getPin page prompts the caller for his personal identification number (PIN). Upon entry of a PIN, transfer is passed to the PIN authentication page. The following is an example of the getPIN page:

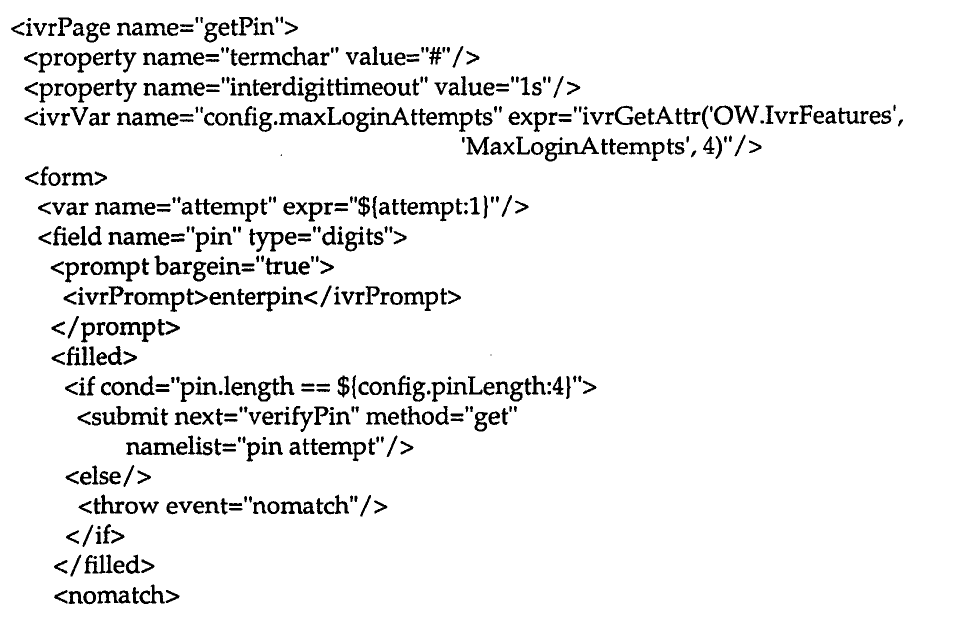

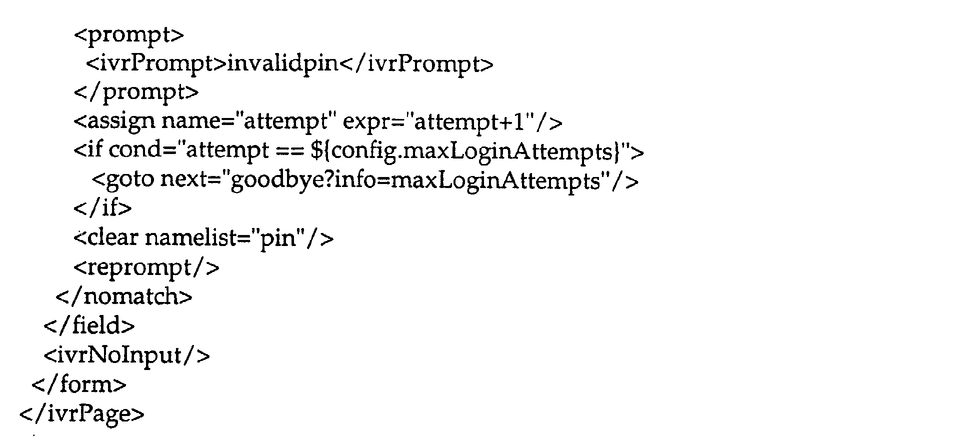

### E. Validate a User's PIN

The verifyPIN page attempts to verify the caller's PIN against a backend authentication server (by calling ivrLogin). The following is an example of the verifyPIN page:

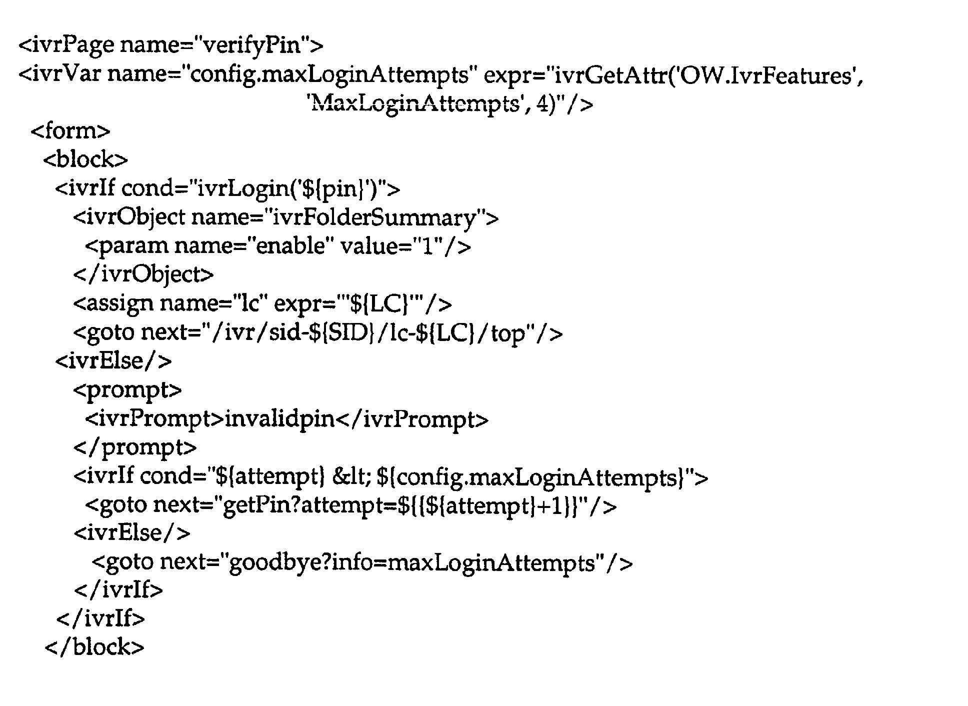

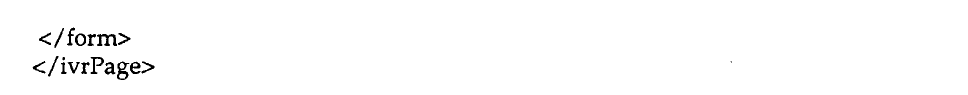

### V. Call Flow Language Document Type Definition (DTD)

The following is an extensible markup language (XML) DTD for the call flow language:

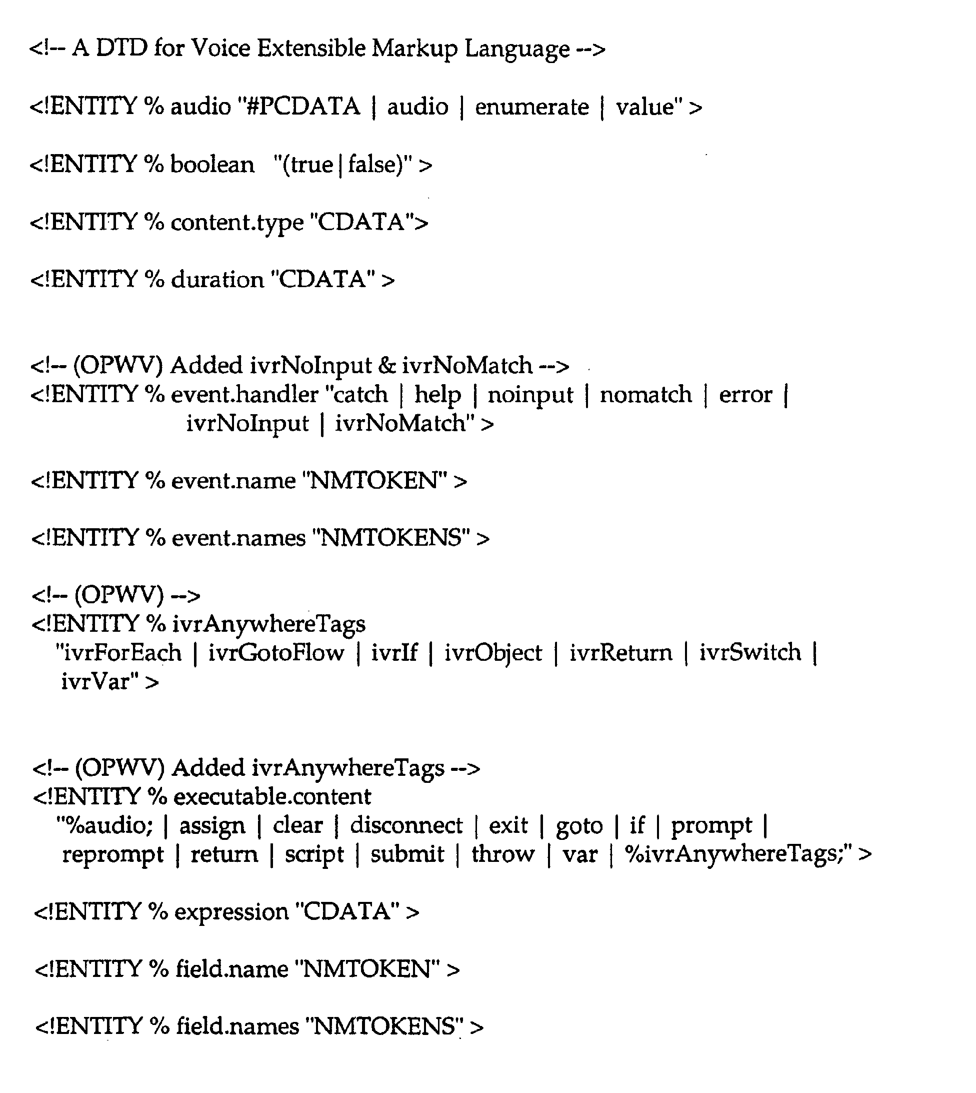

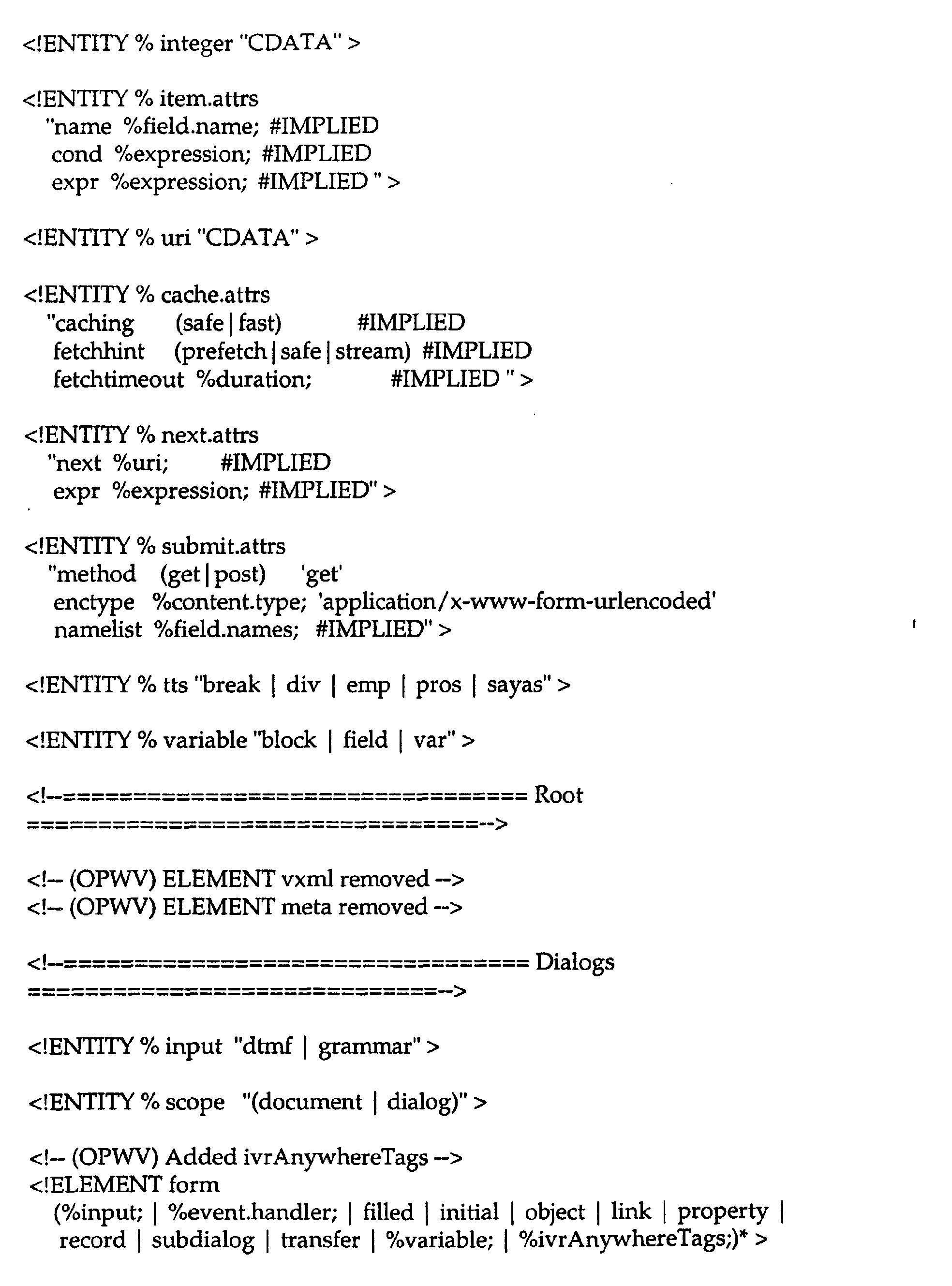

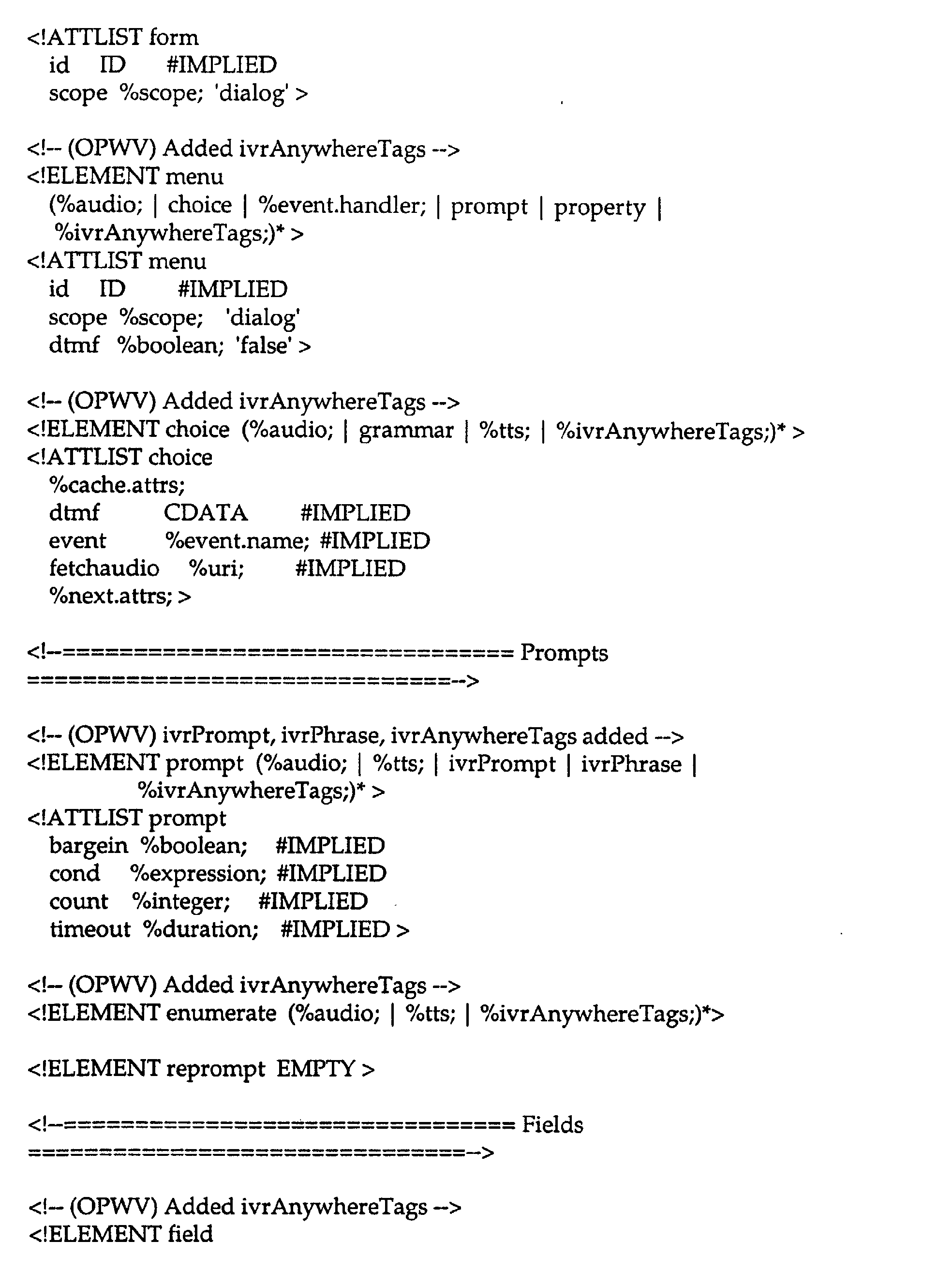

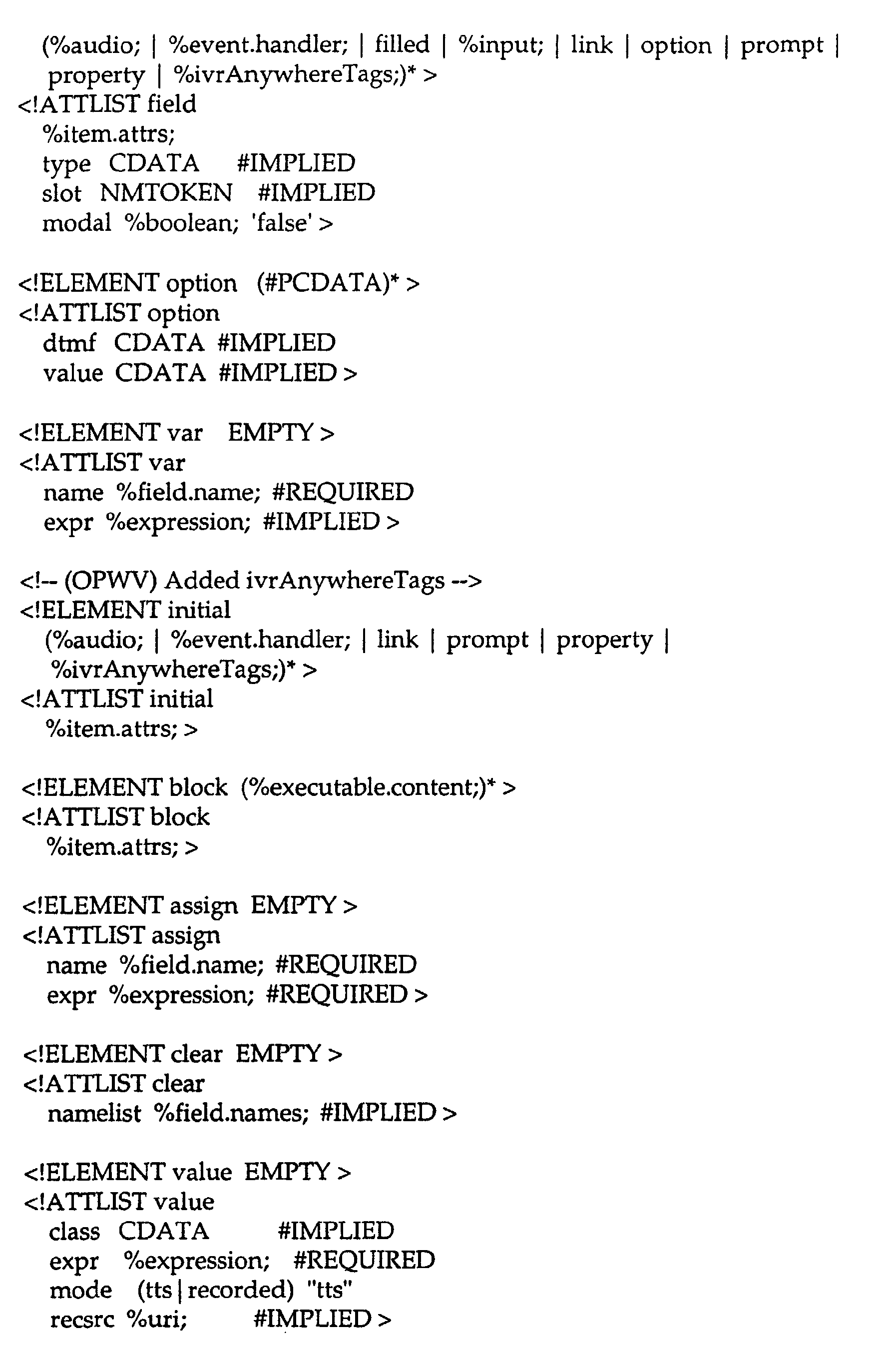

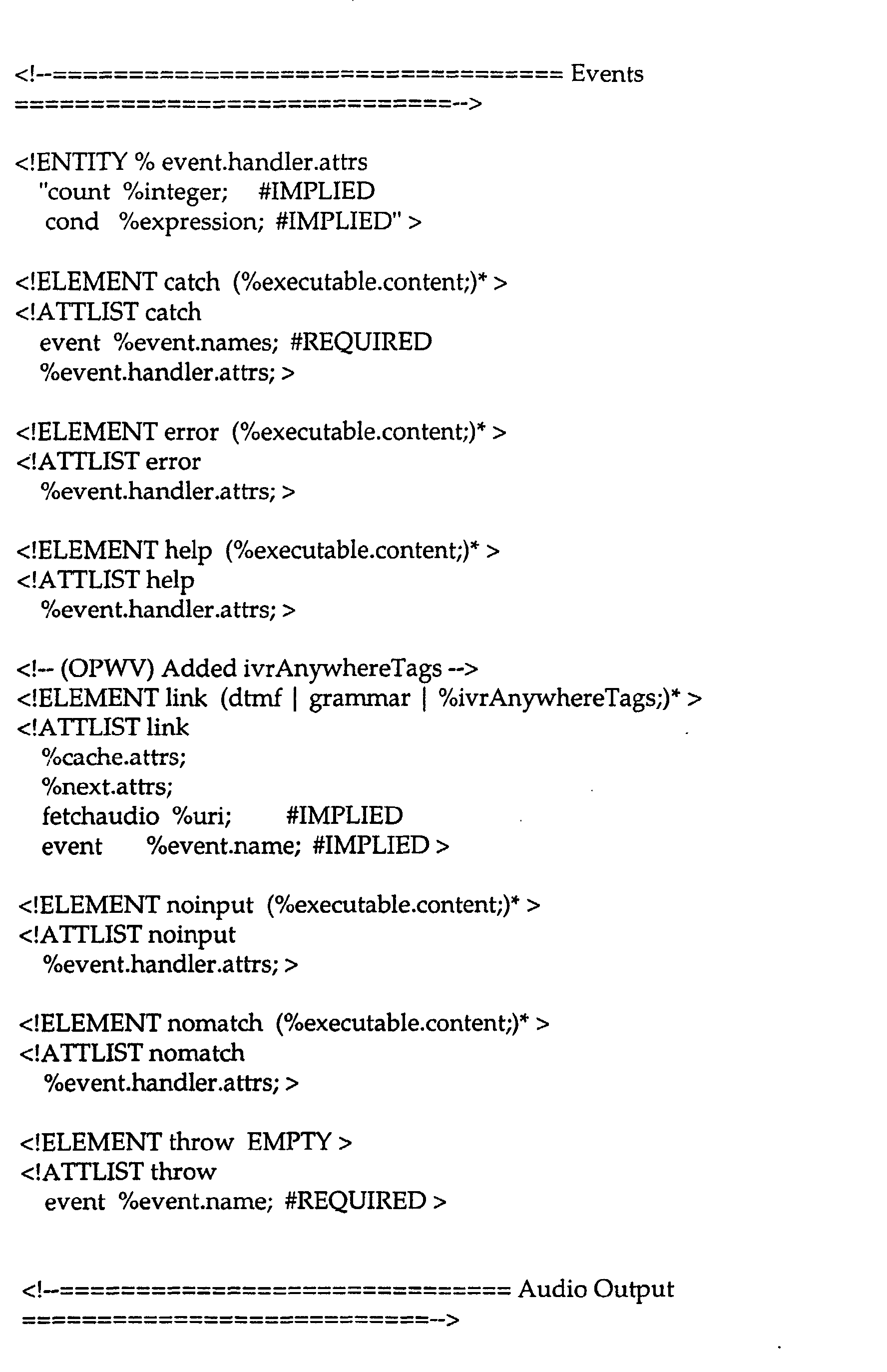

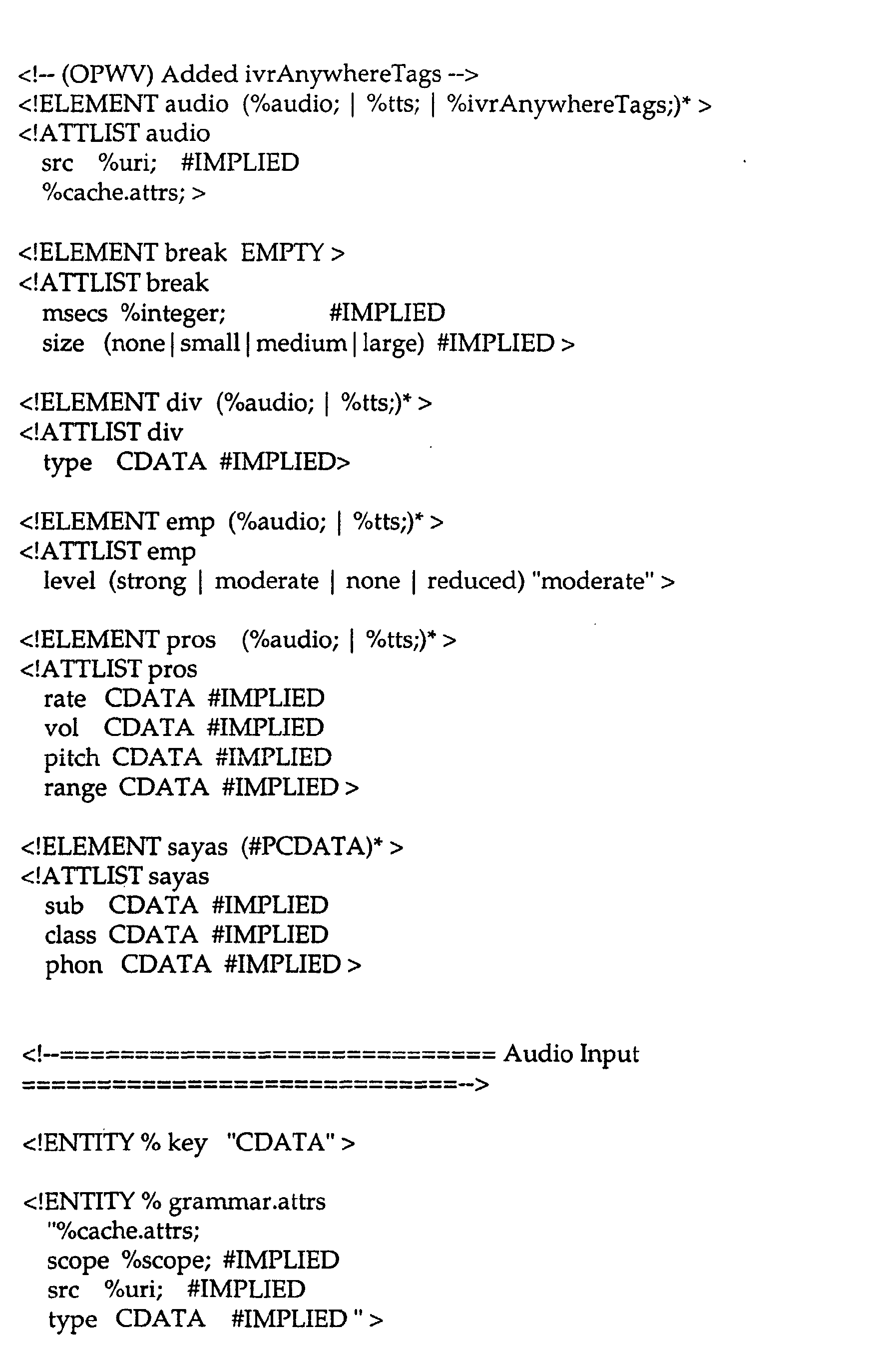

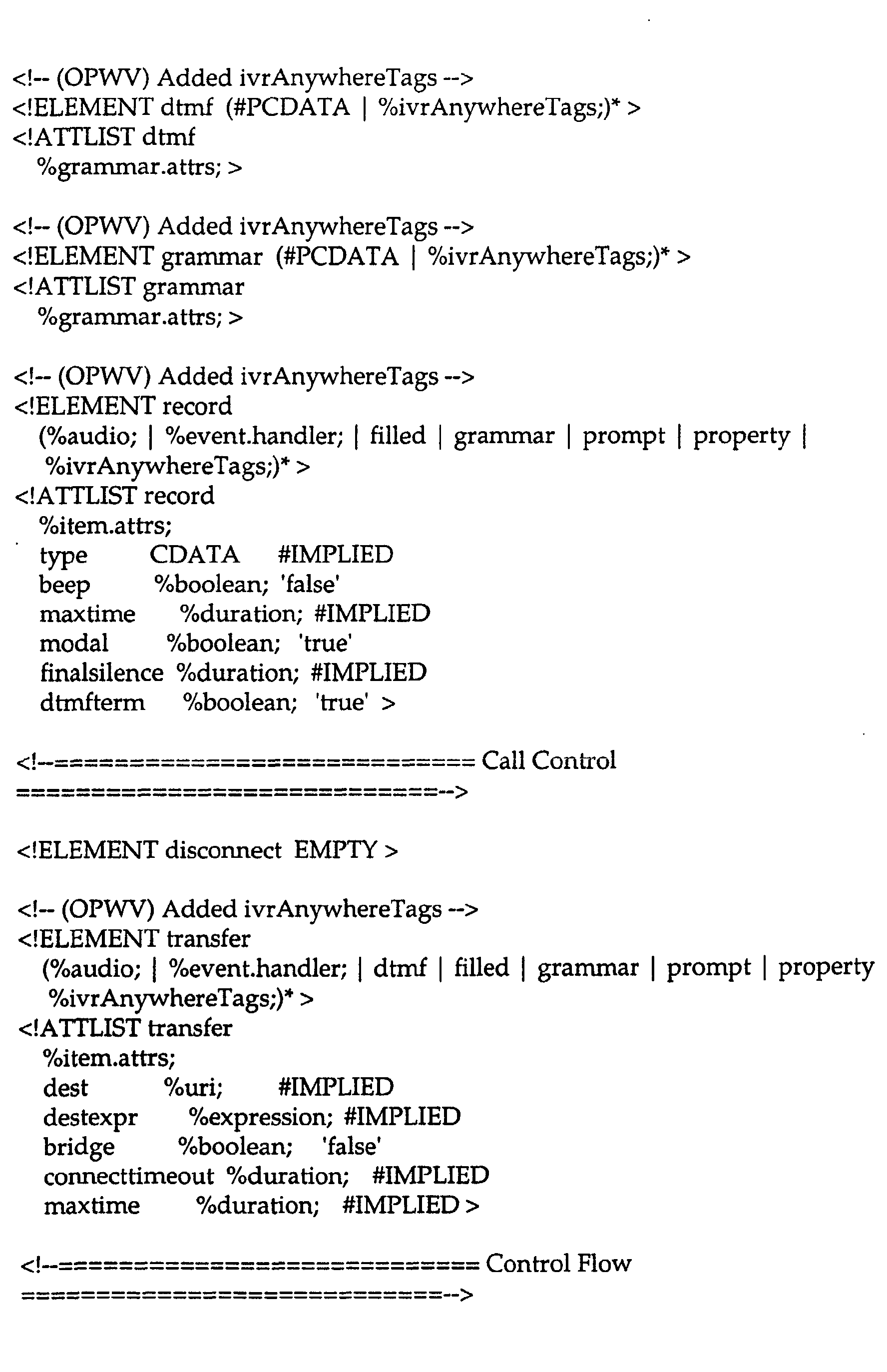

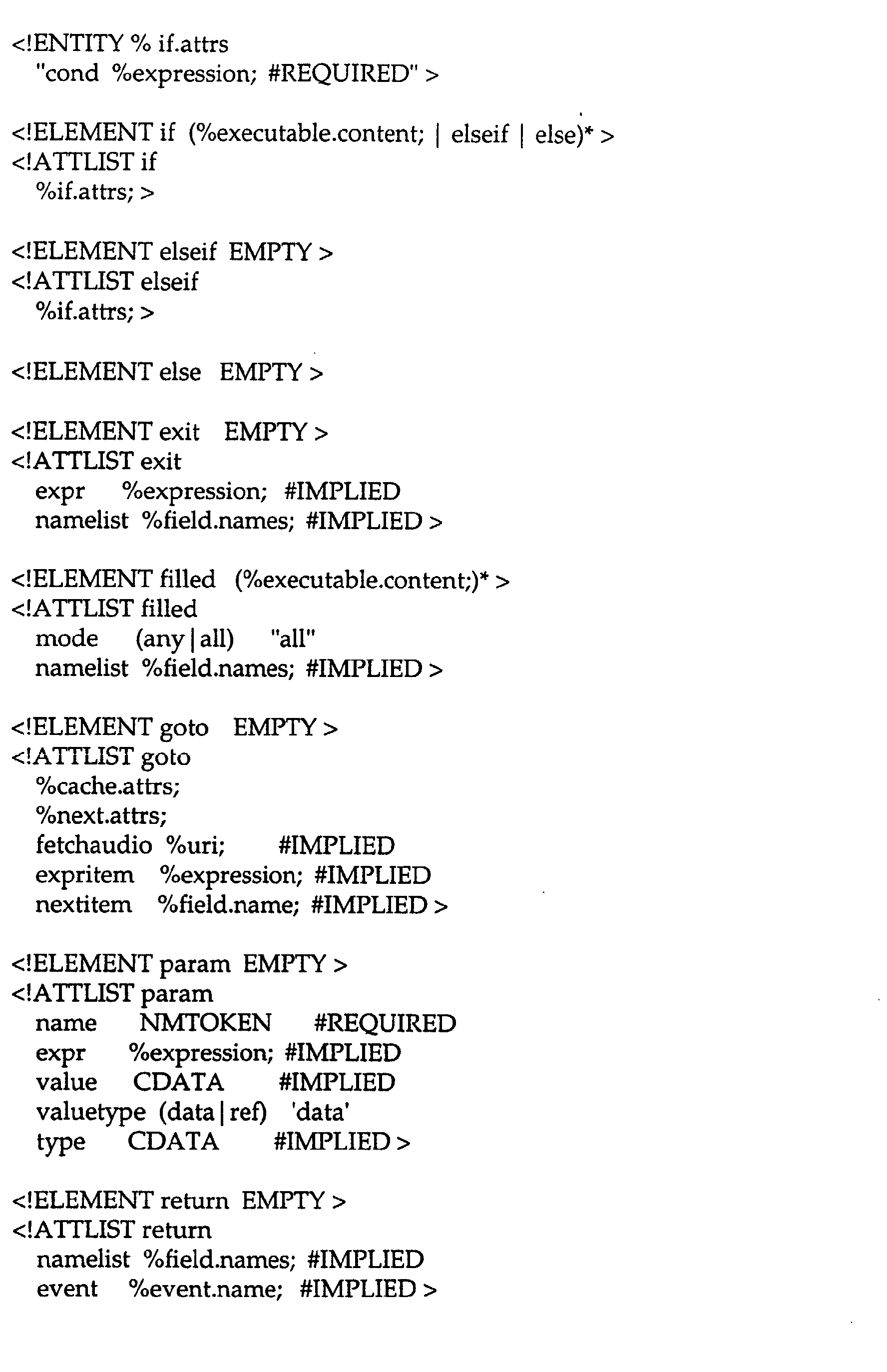

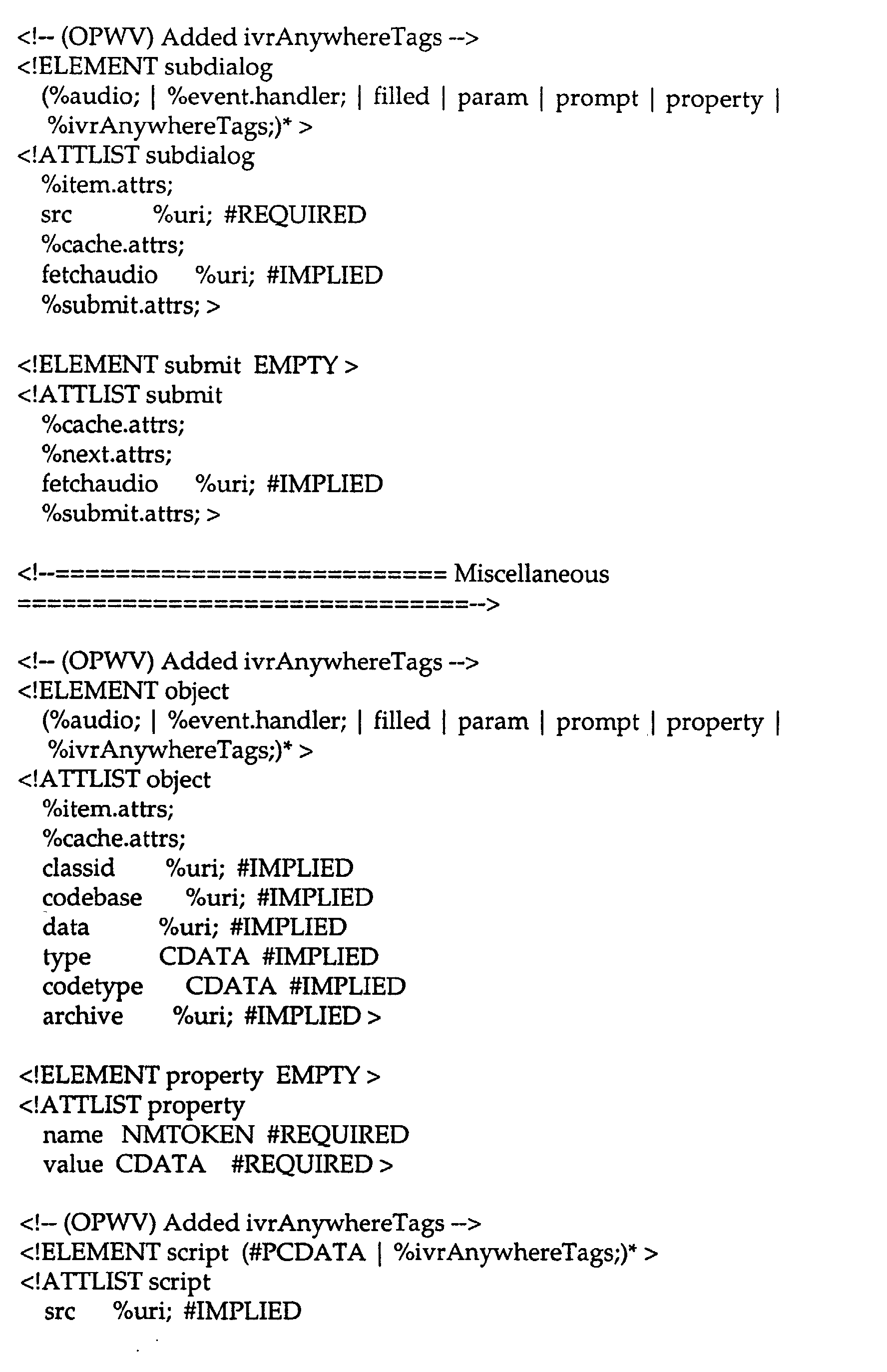

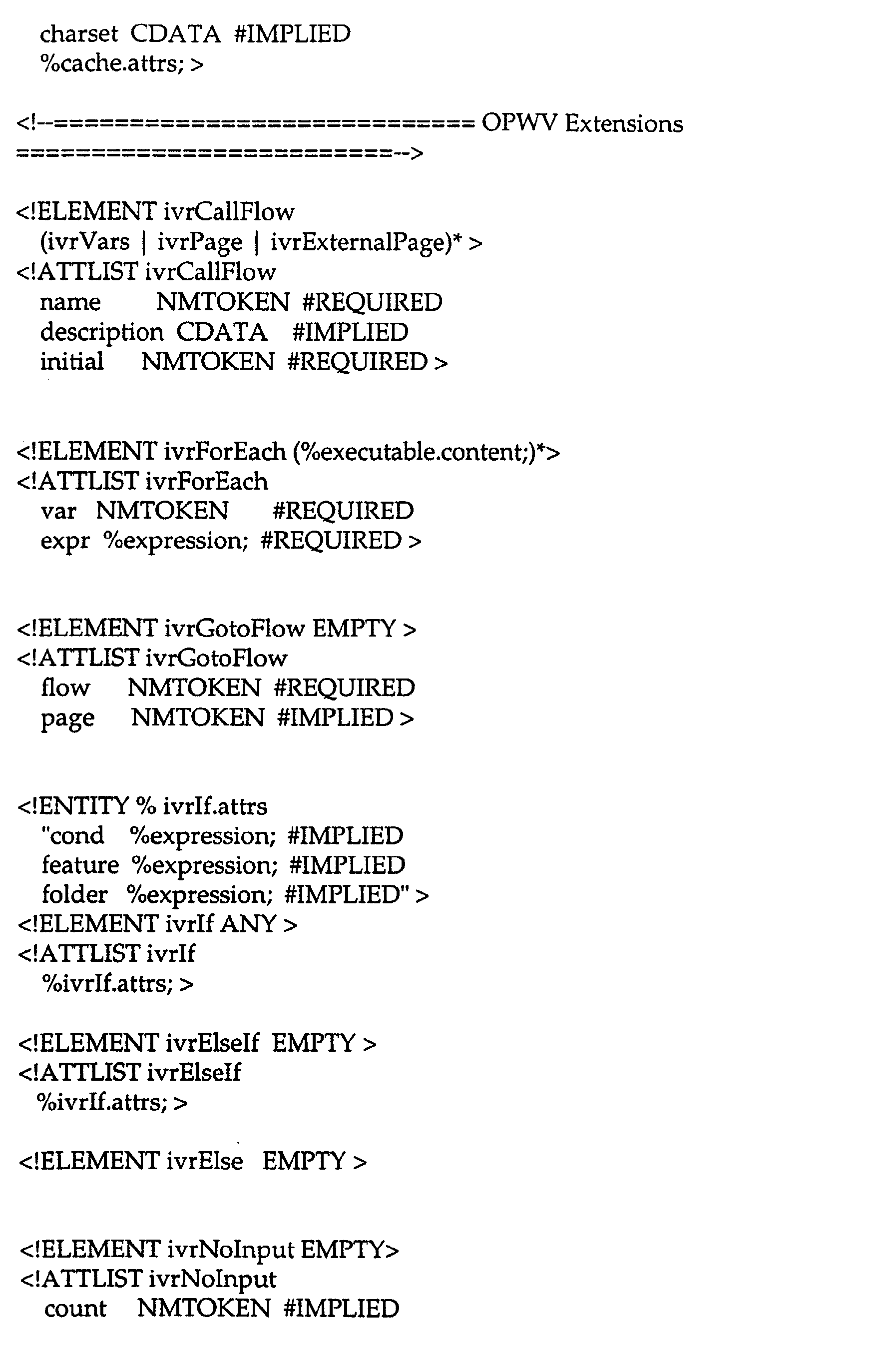

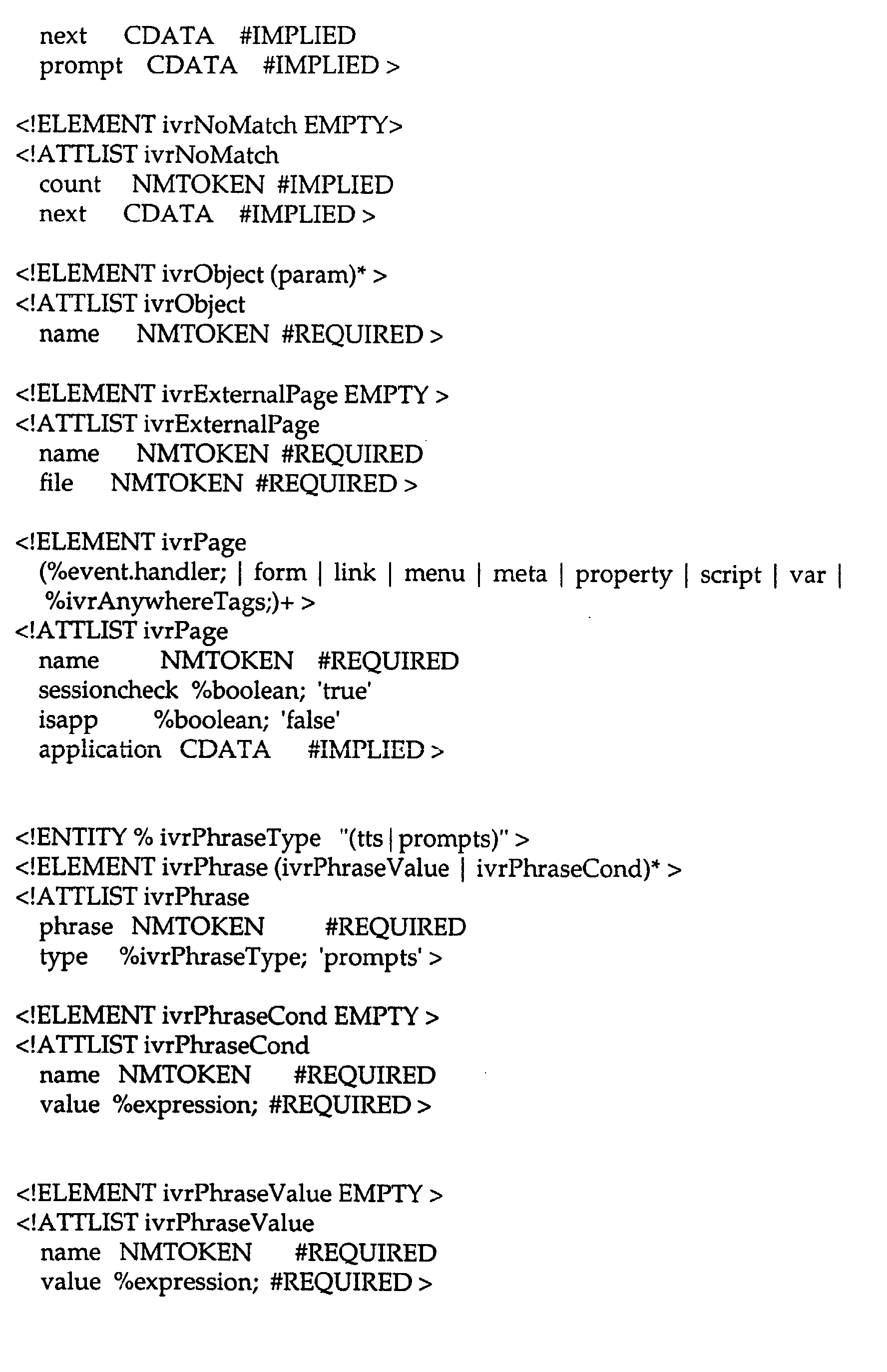

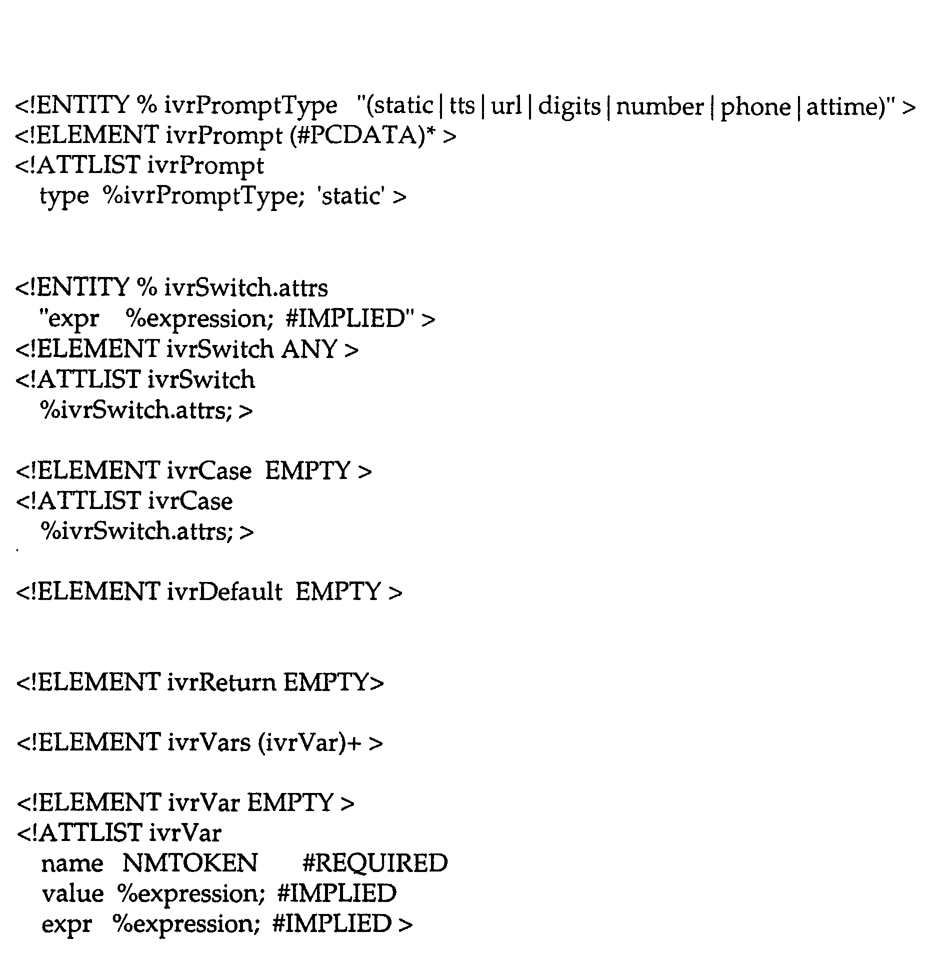

### VI. Functions and Objects

As noted above, the solution described herein provides a set of objects and functions accessible from the call flow language, that provide application logic for call flows (e.g., playing a folder summary of new emails, faxes, and voicemails) and that also export the ability to access key system functionality, such as account profile information, voice mail messages, personal information management data (e.g. calendar and address book). The set of functions and objects is easily extensible, such that new functions and objects can be added on-the-fly. The following description describes examples of these functions and objects.

### A. Functions

The following functions are examples of functions which may be included in the described system. Of course, additional functions can be defined, and these functions can be added to the system on-the-fly. For each function described below, the function name, syntax, and description of the function are given, along with any applicable restrictions, and where appropriate, examples of usage.

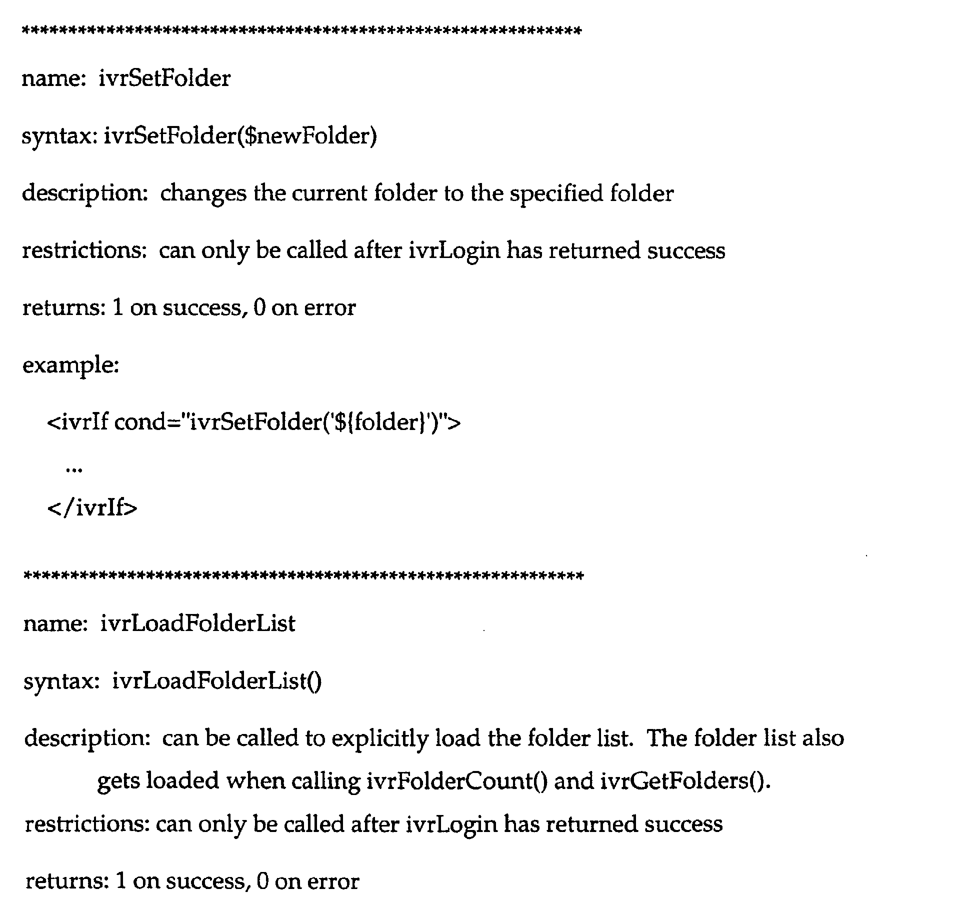

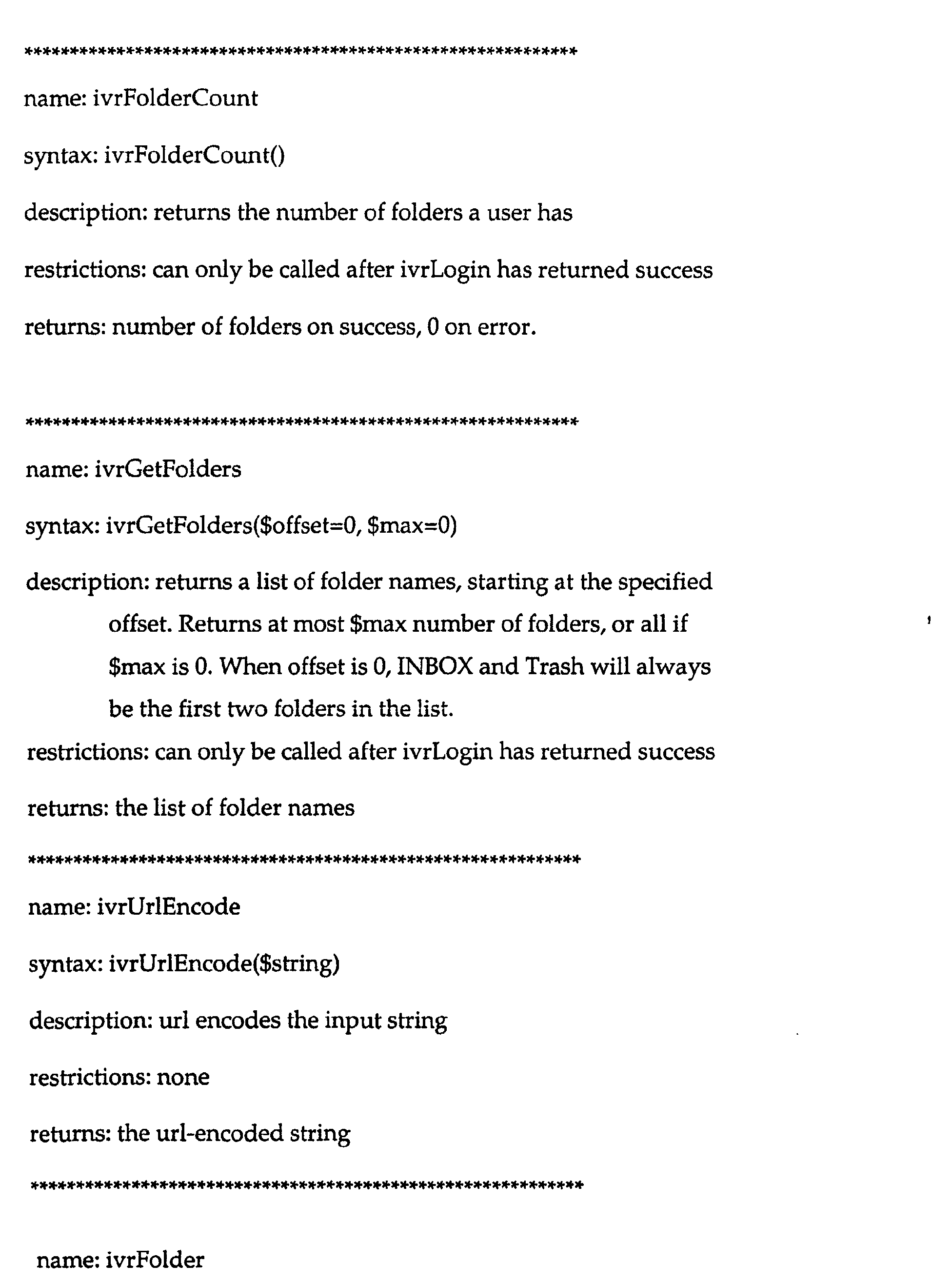

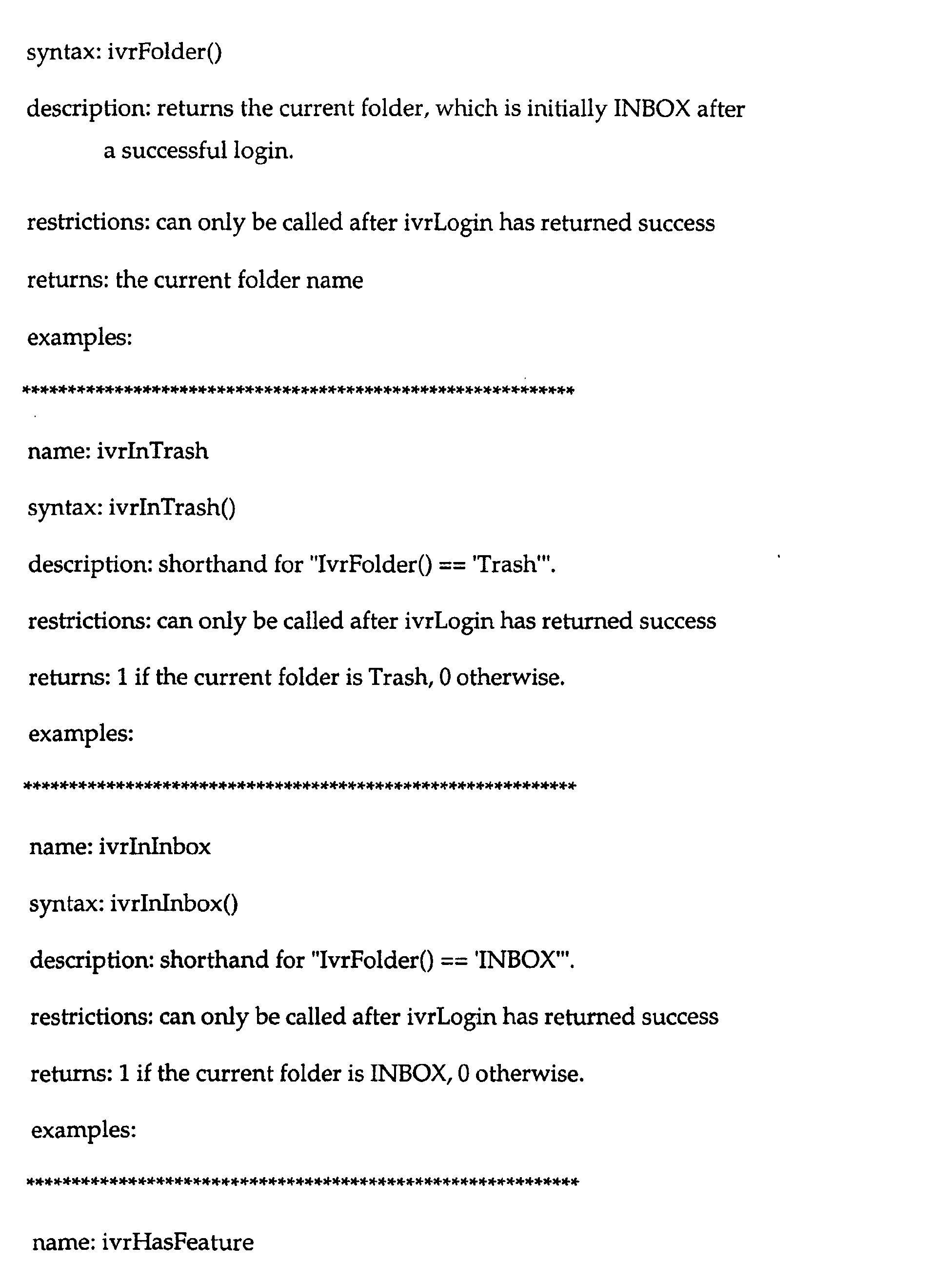

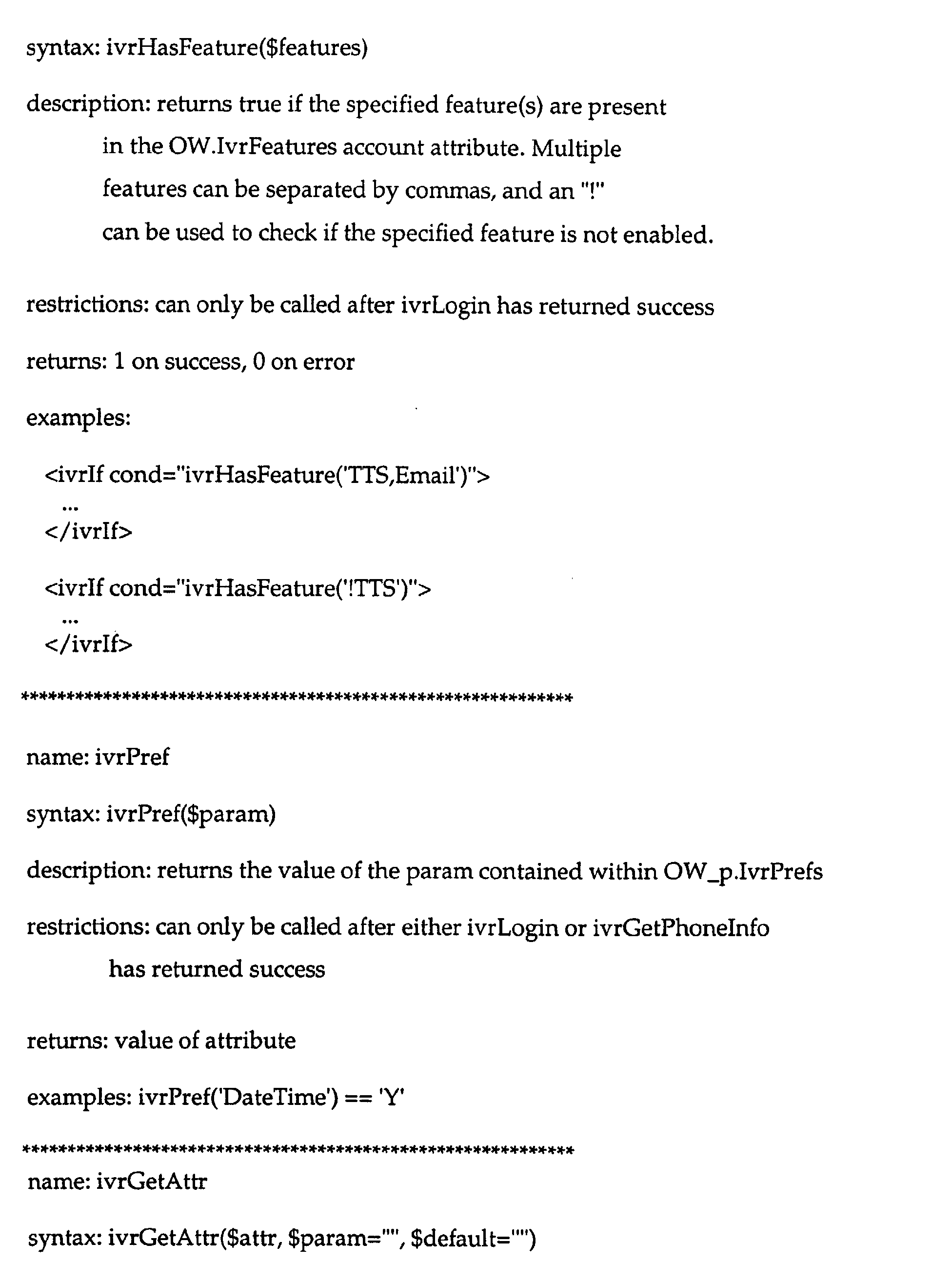

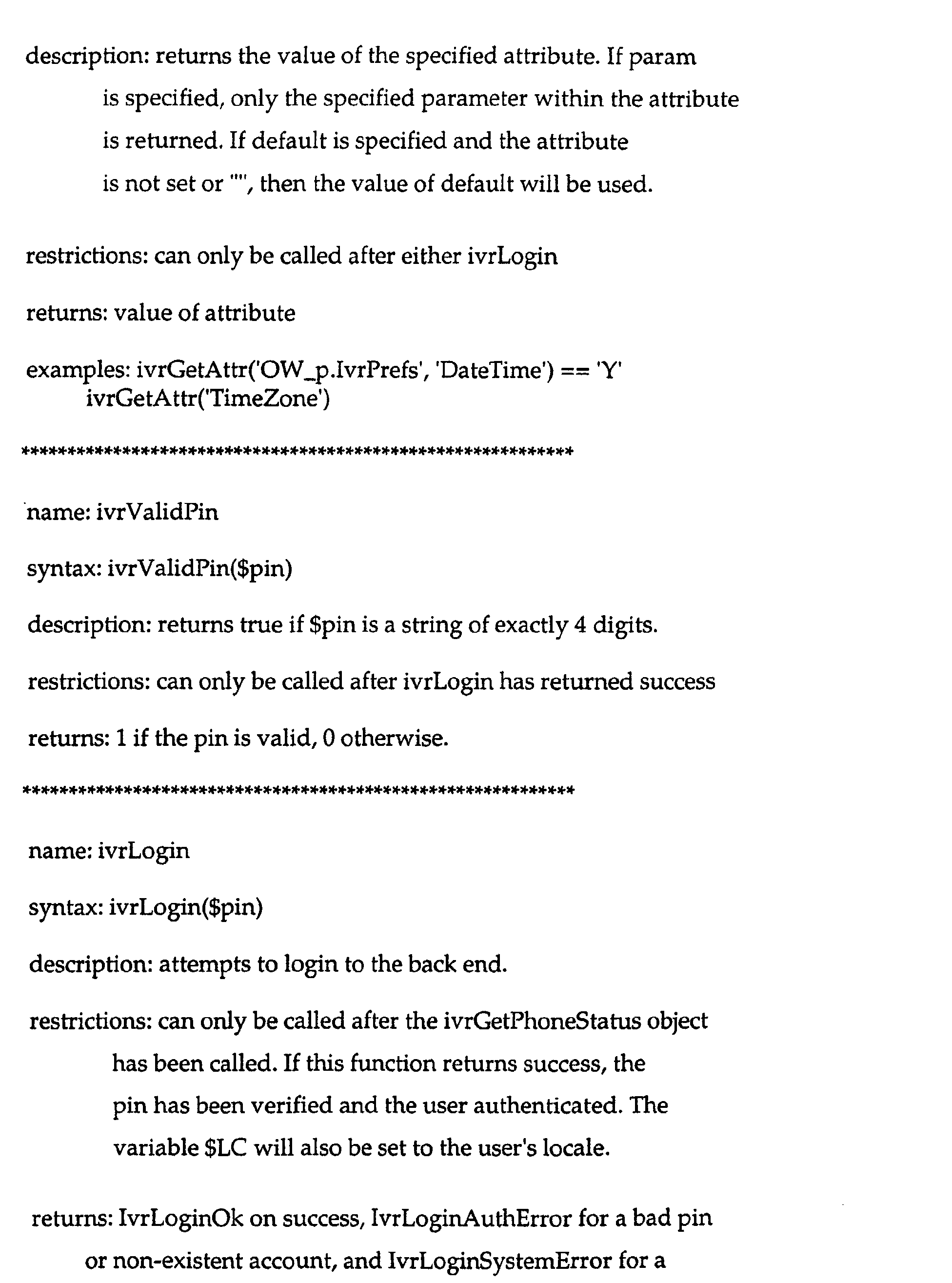

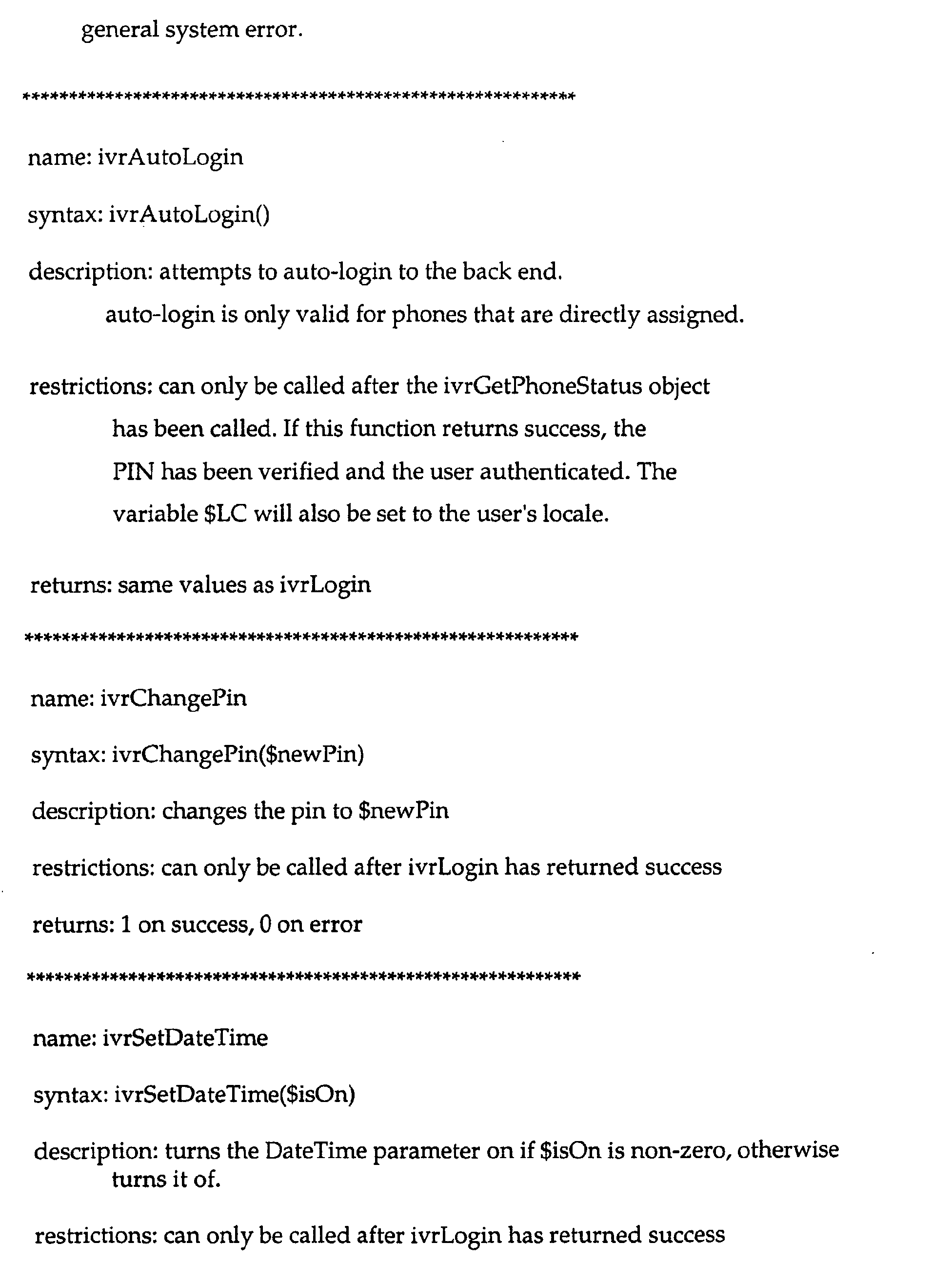

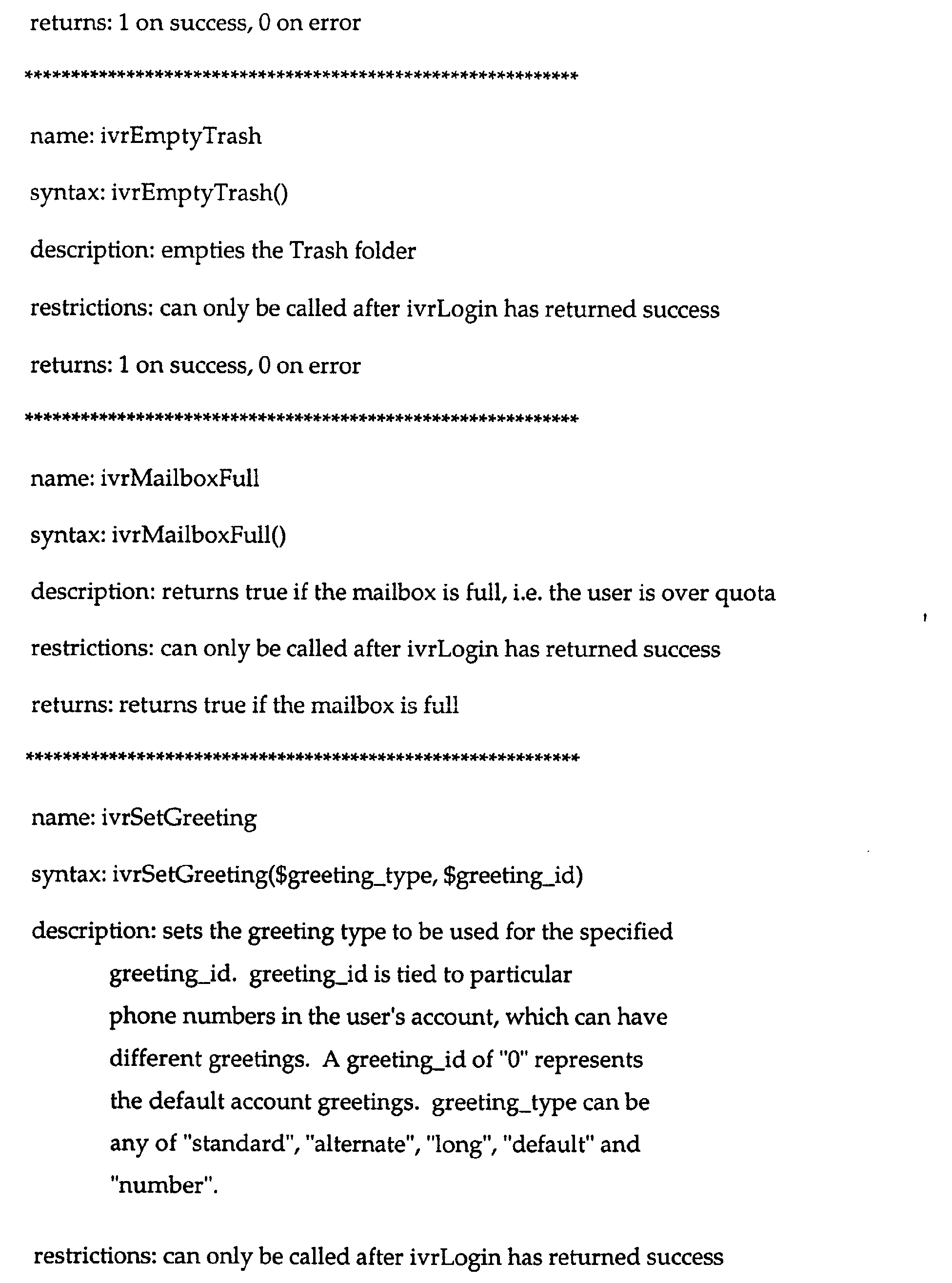

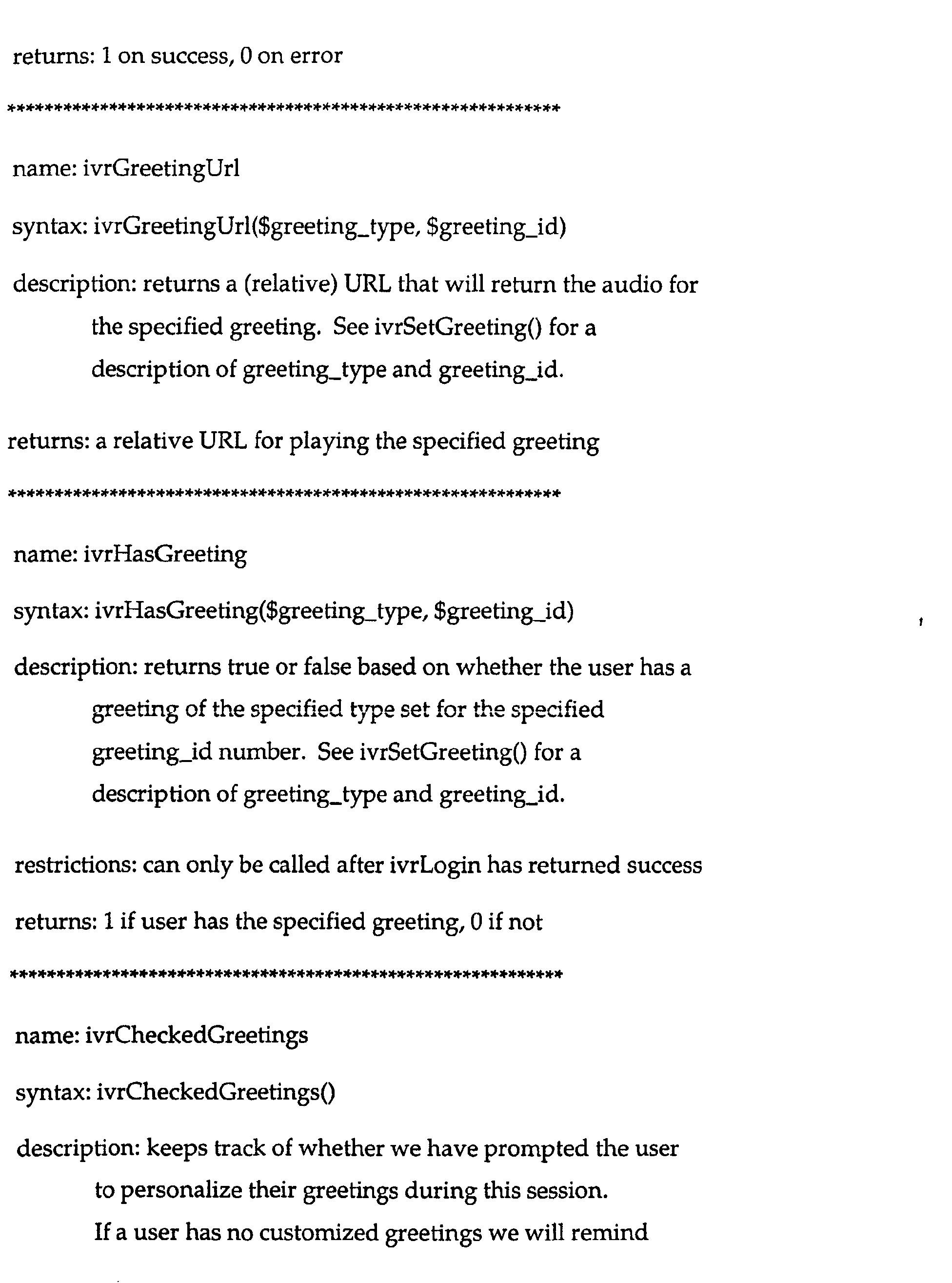

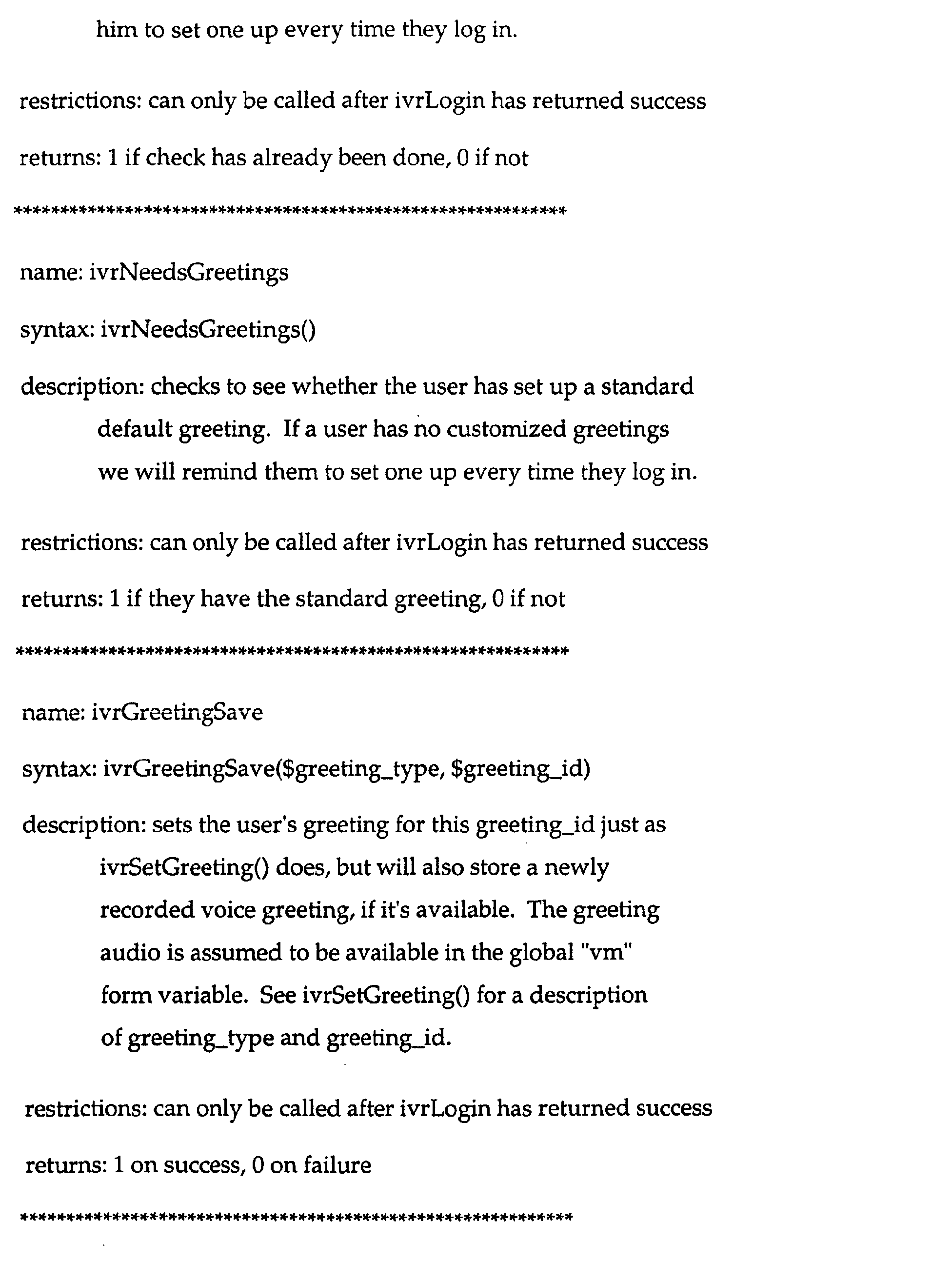

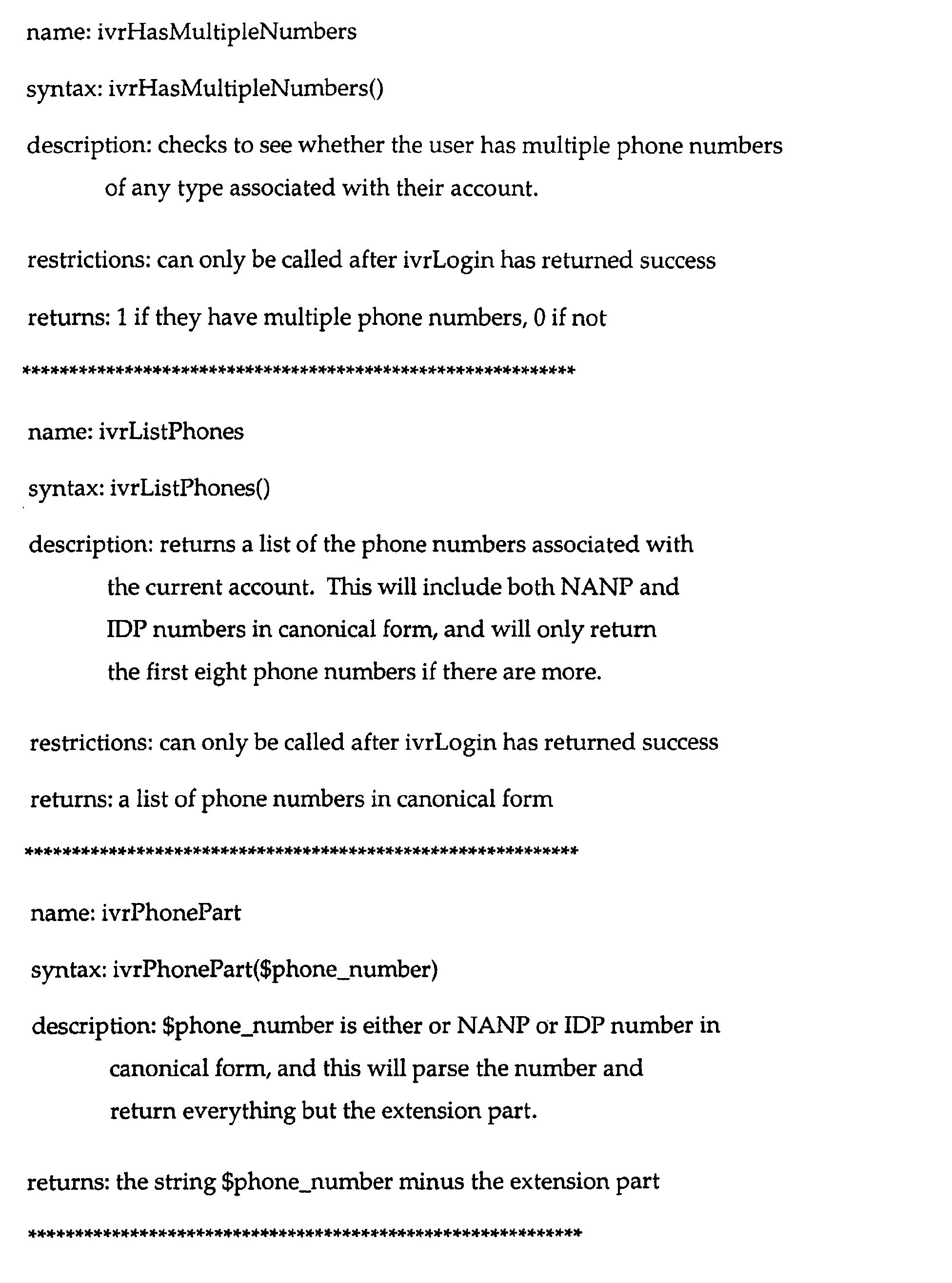

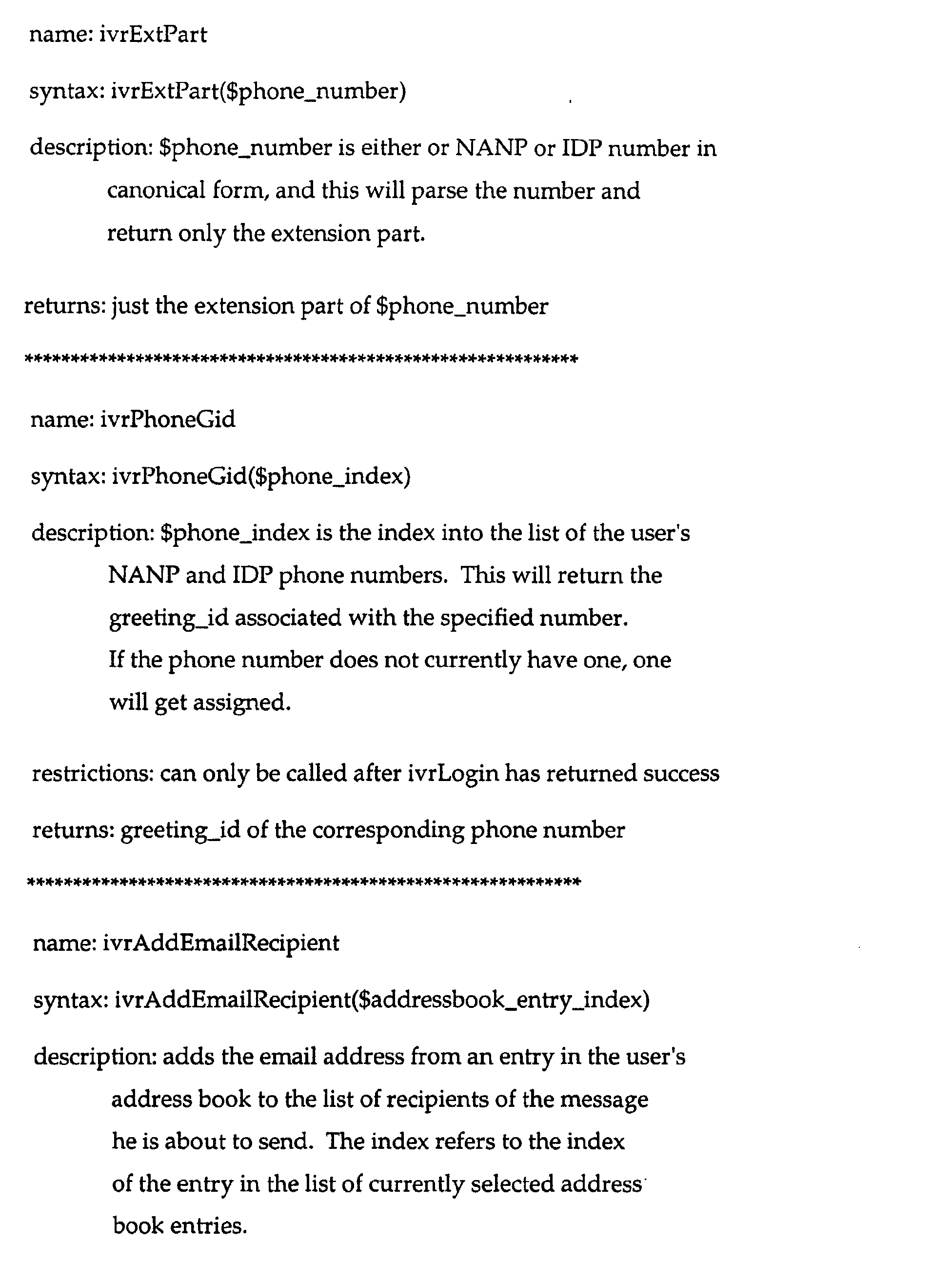

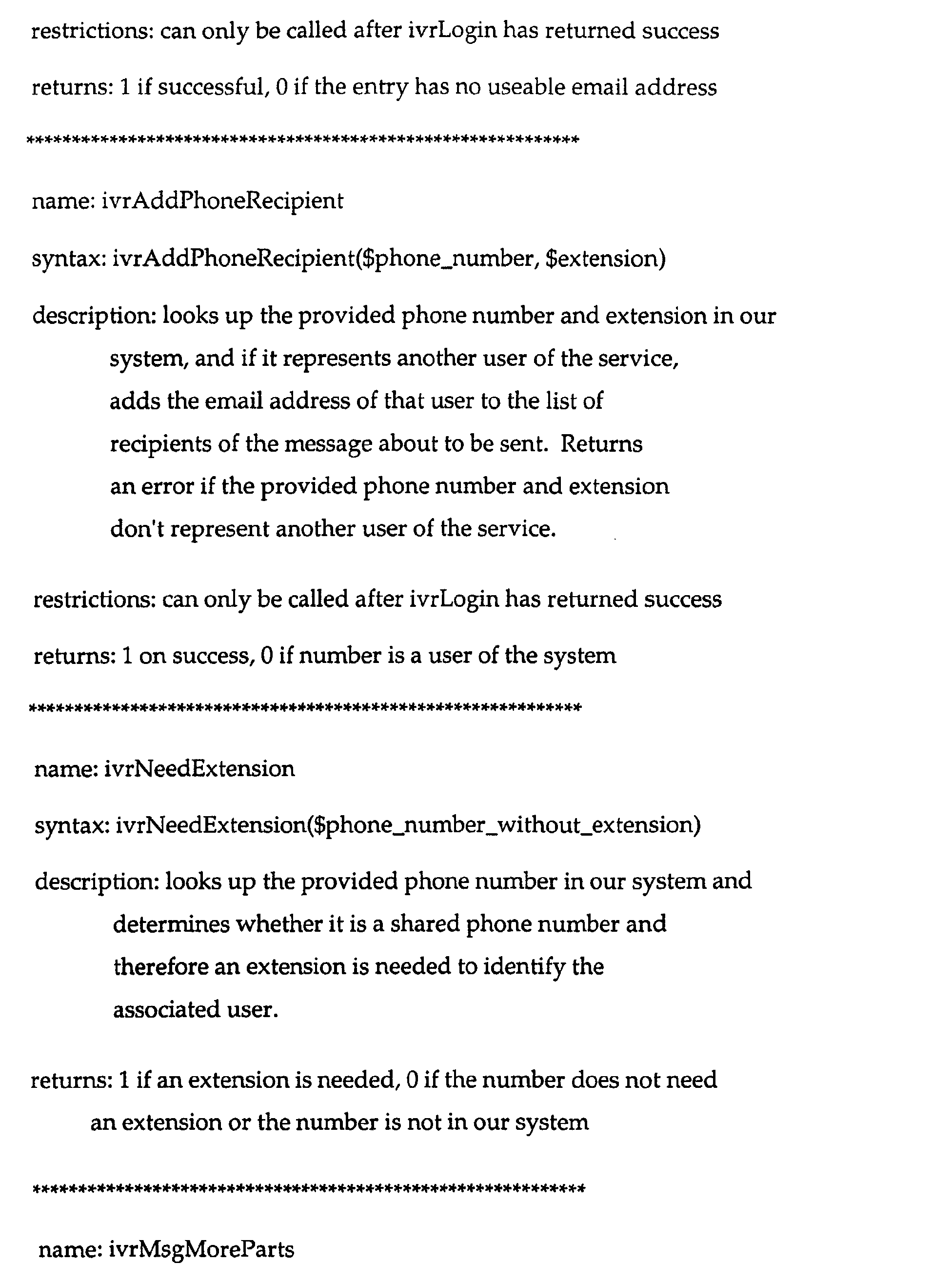

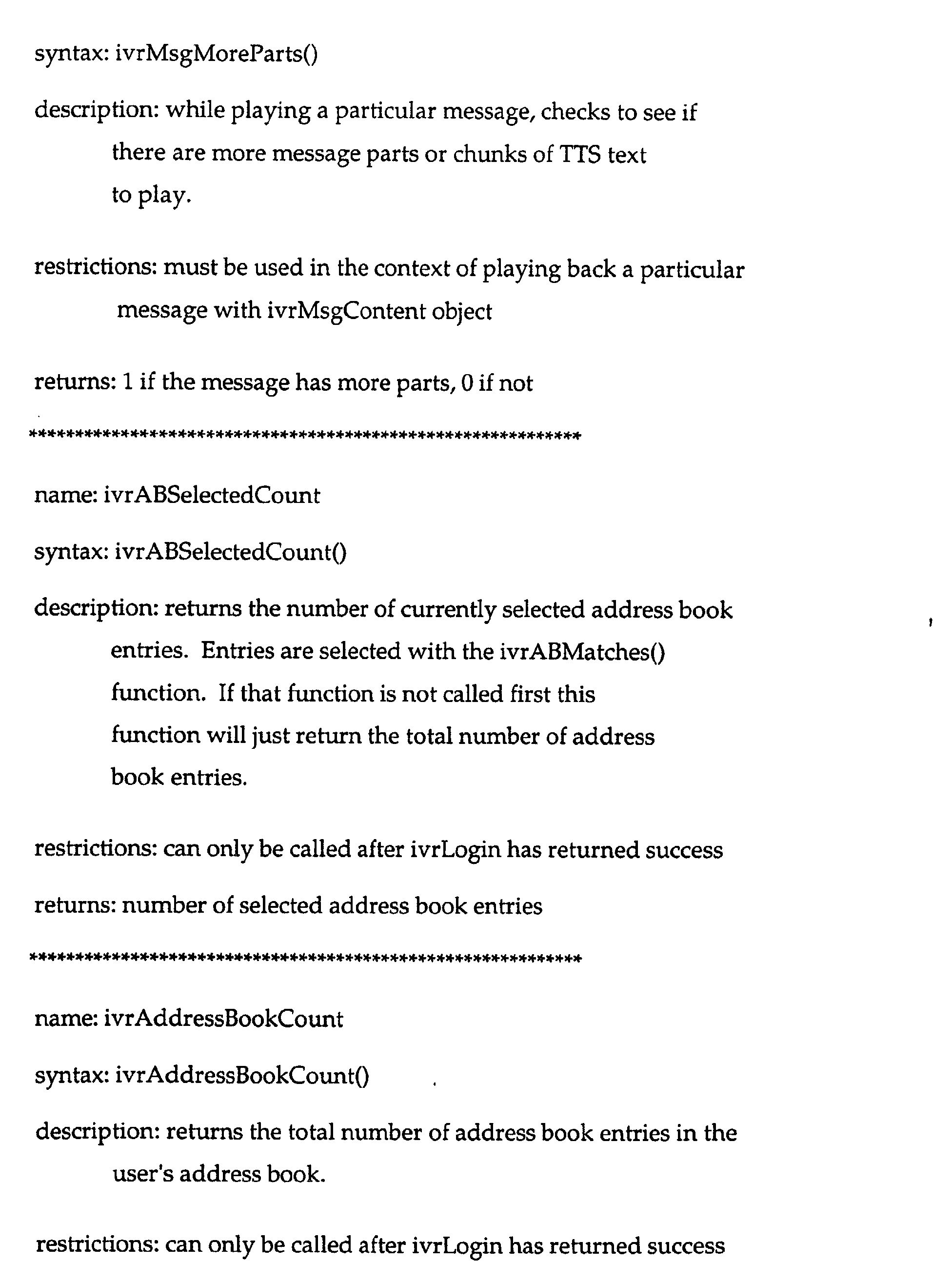

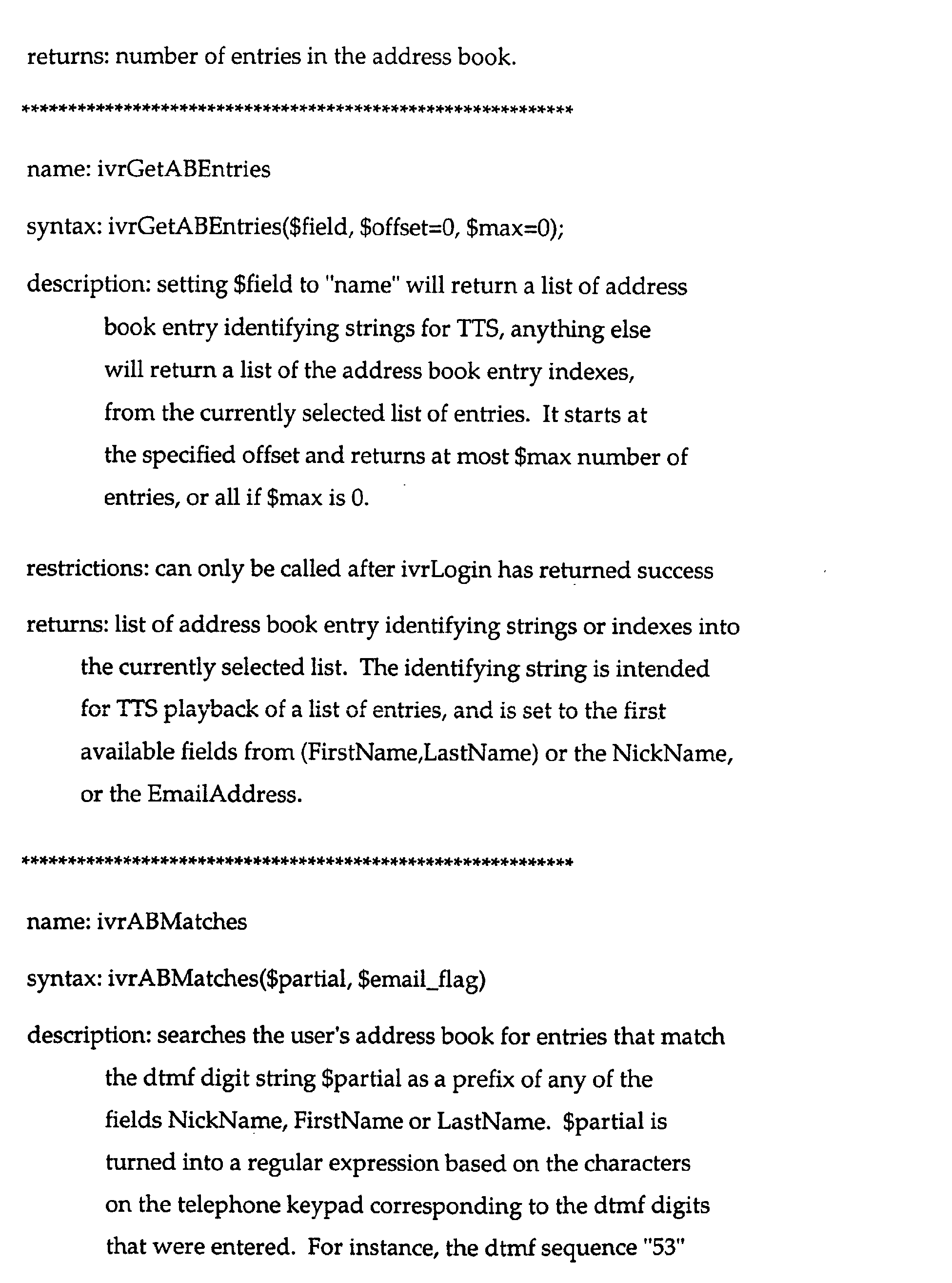

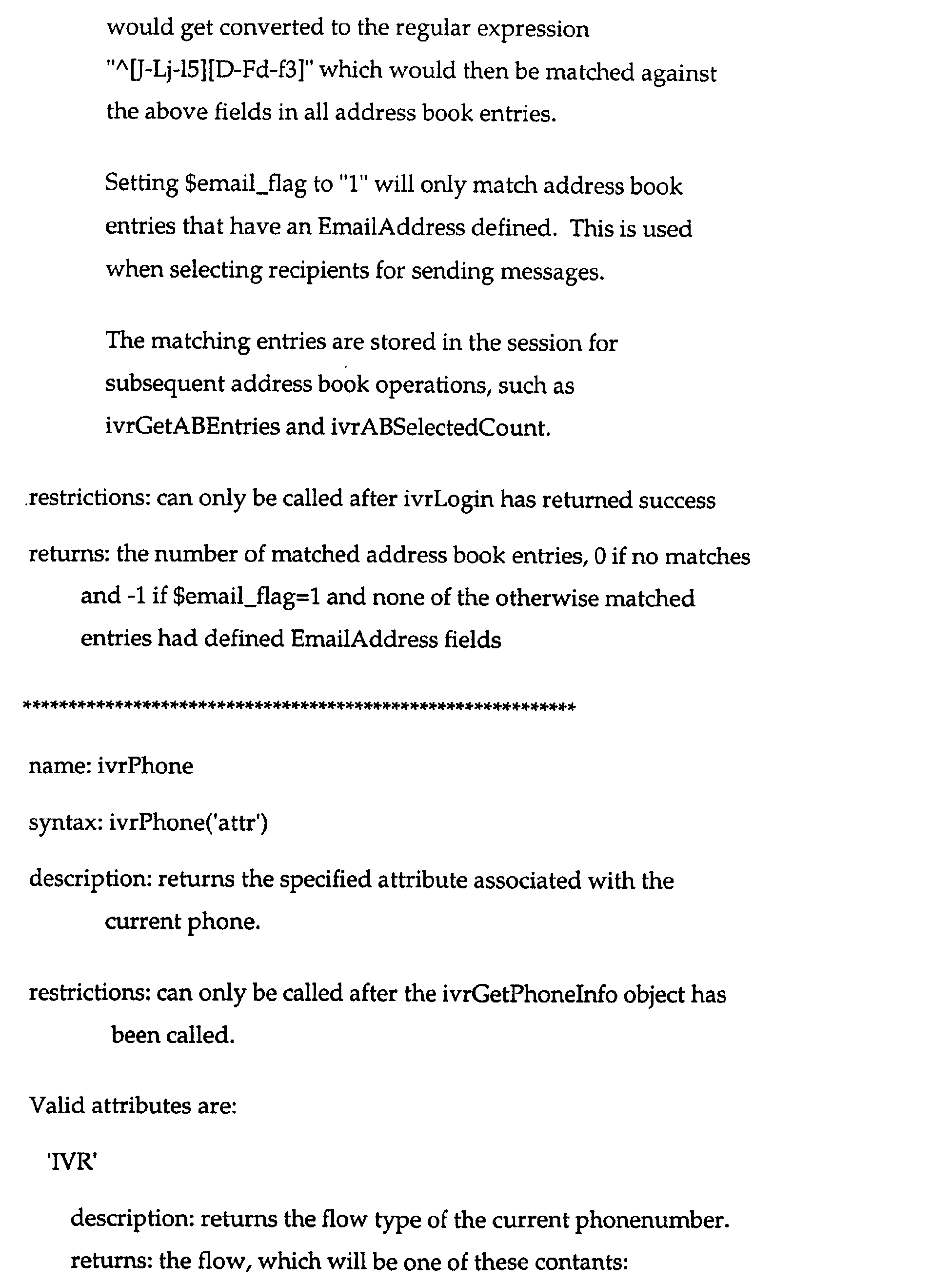

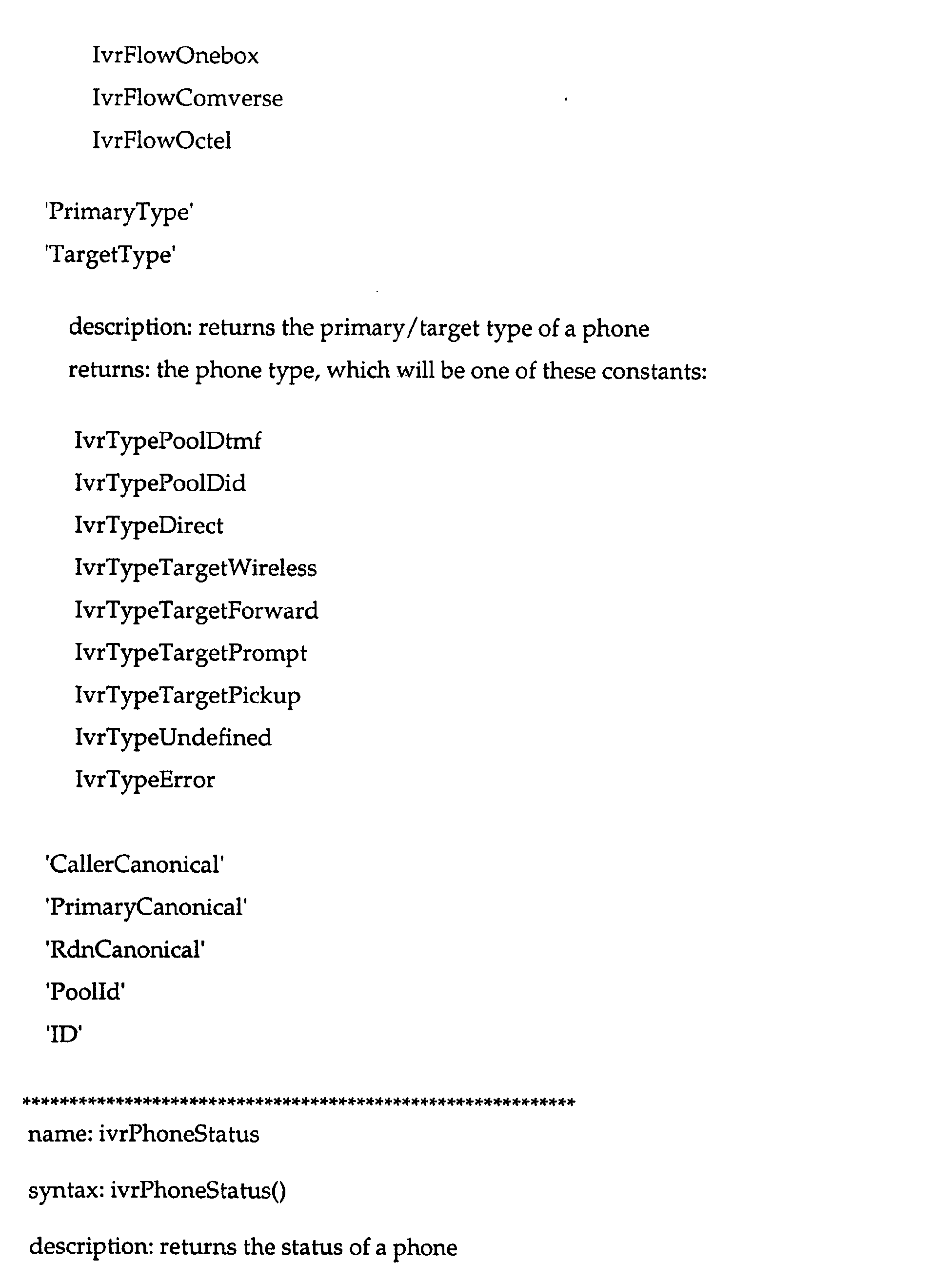

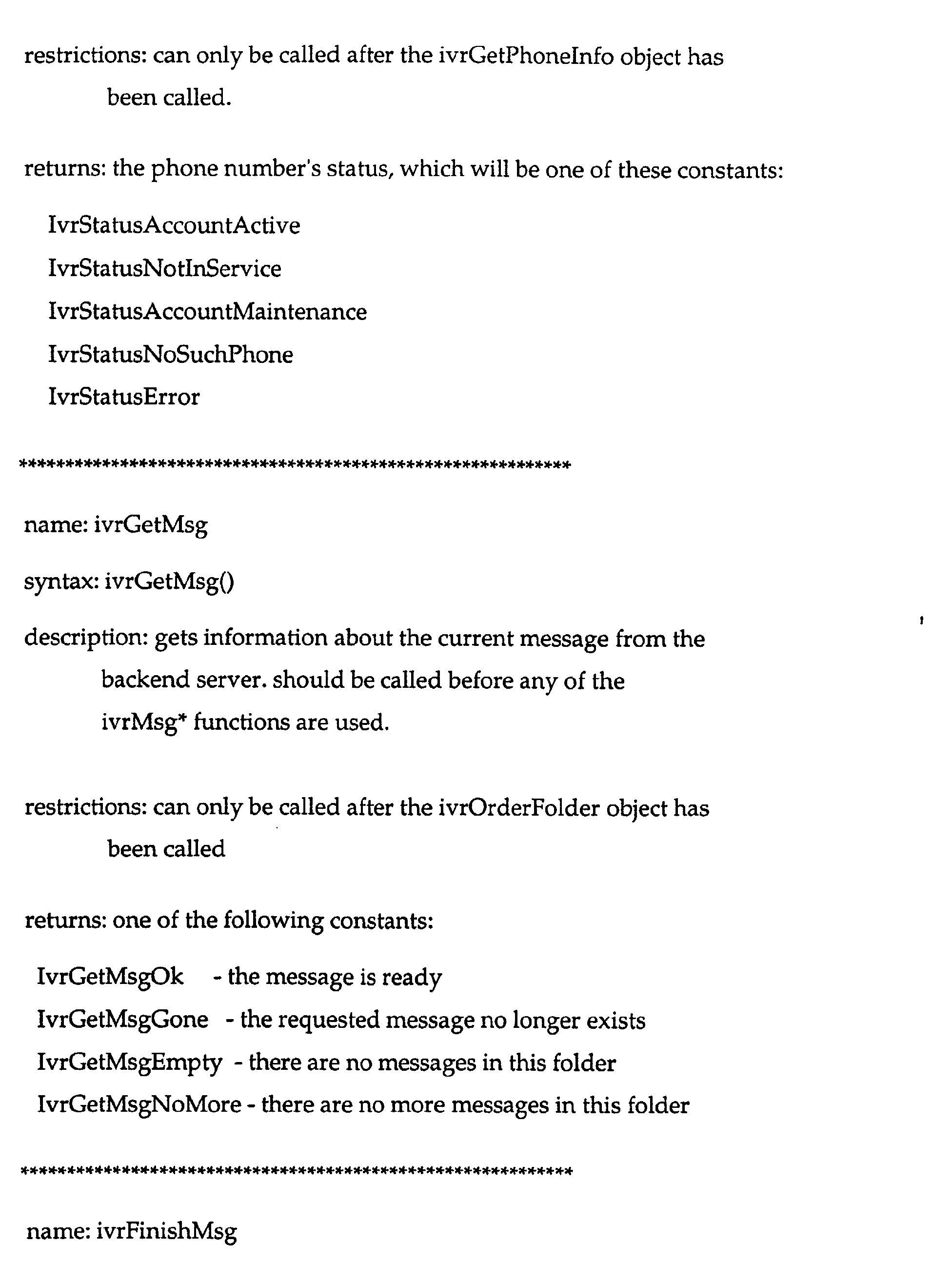

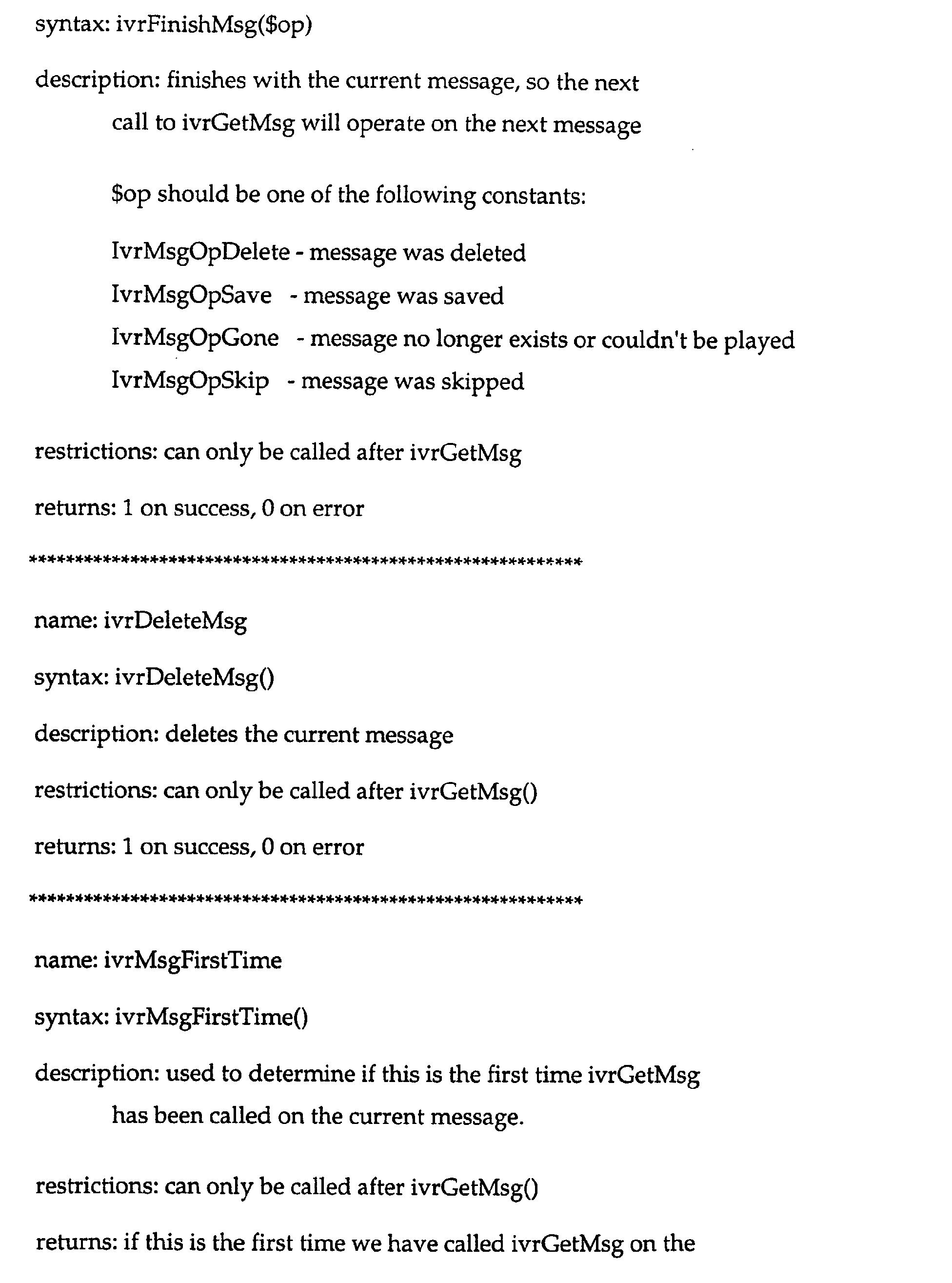

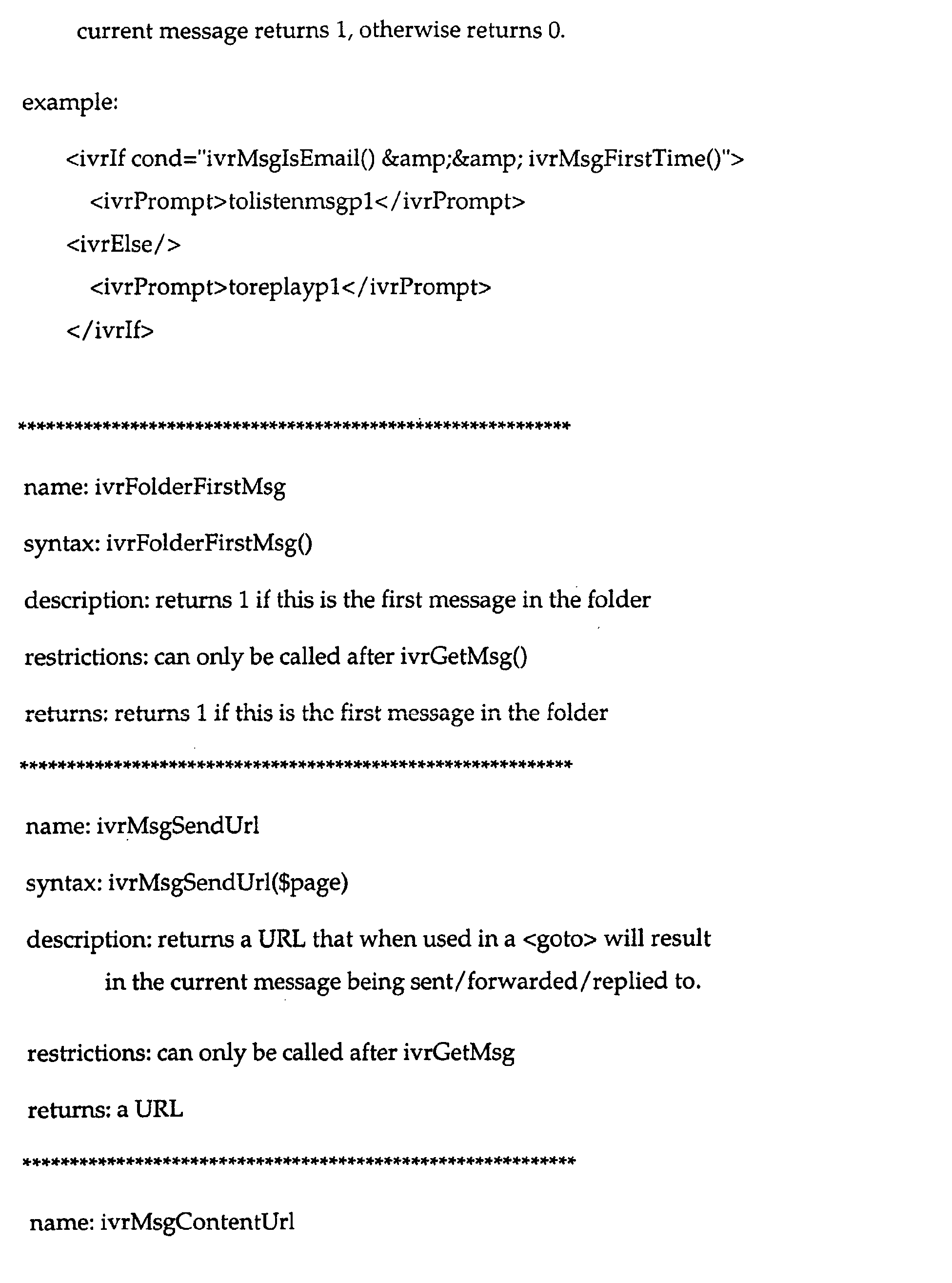

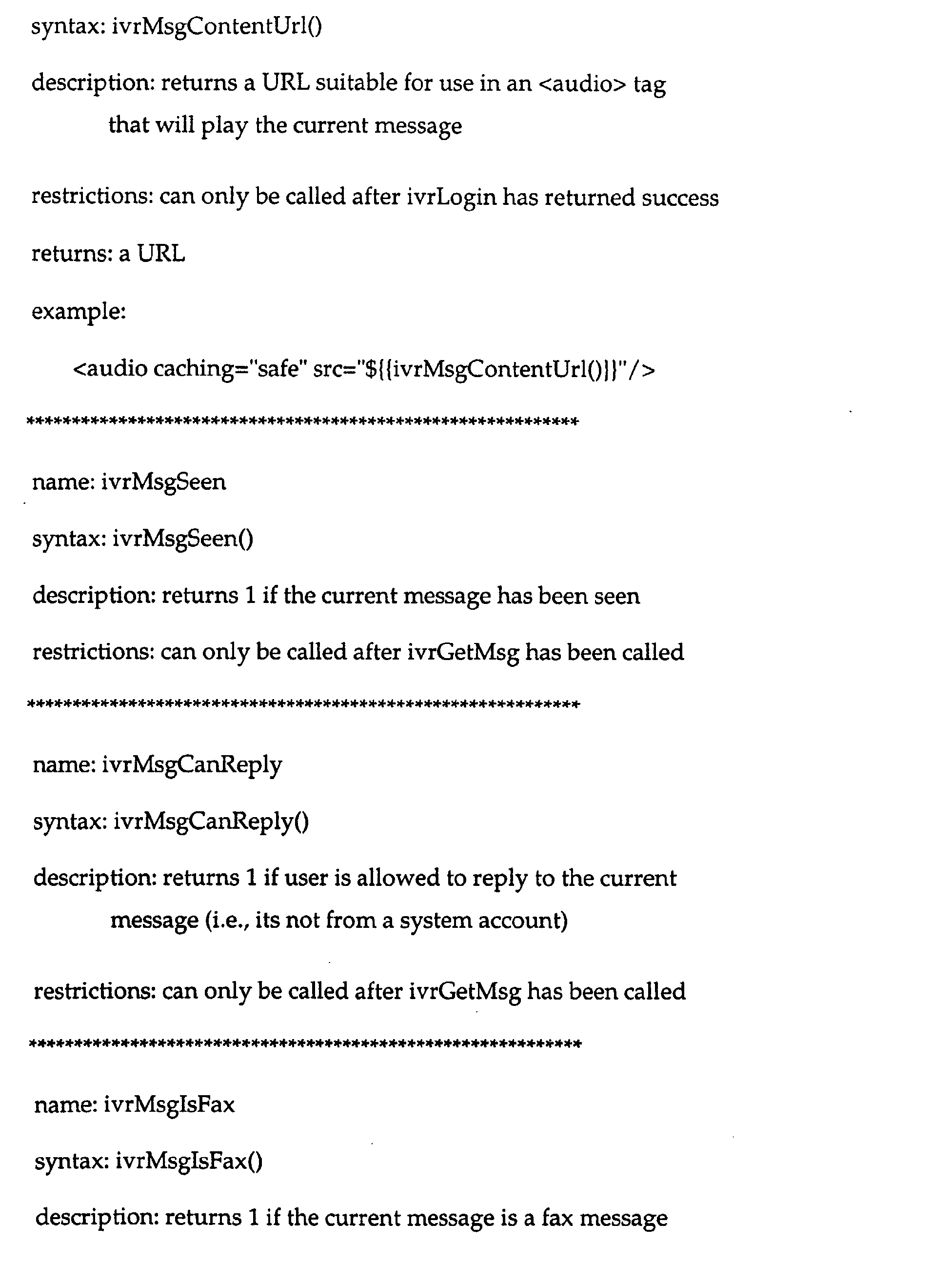

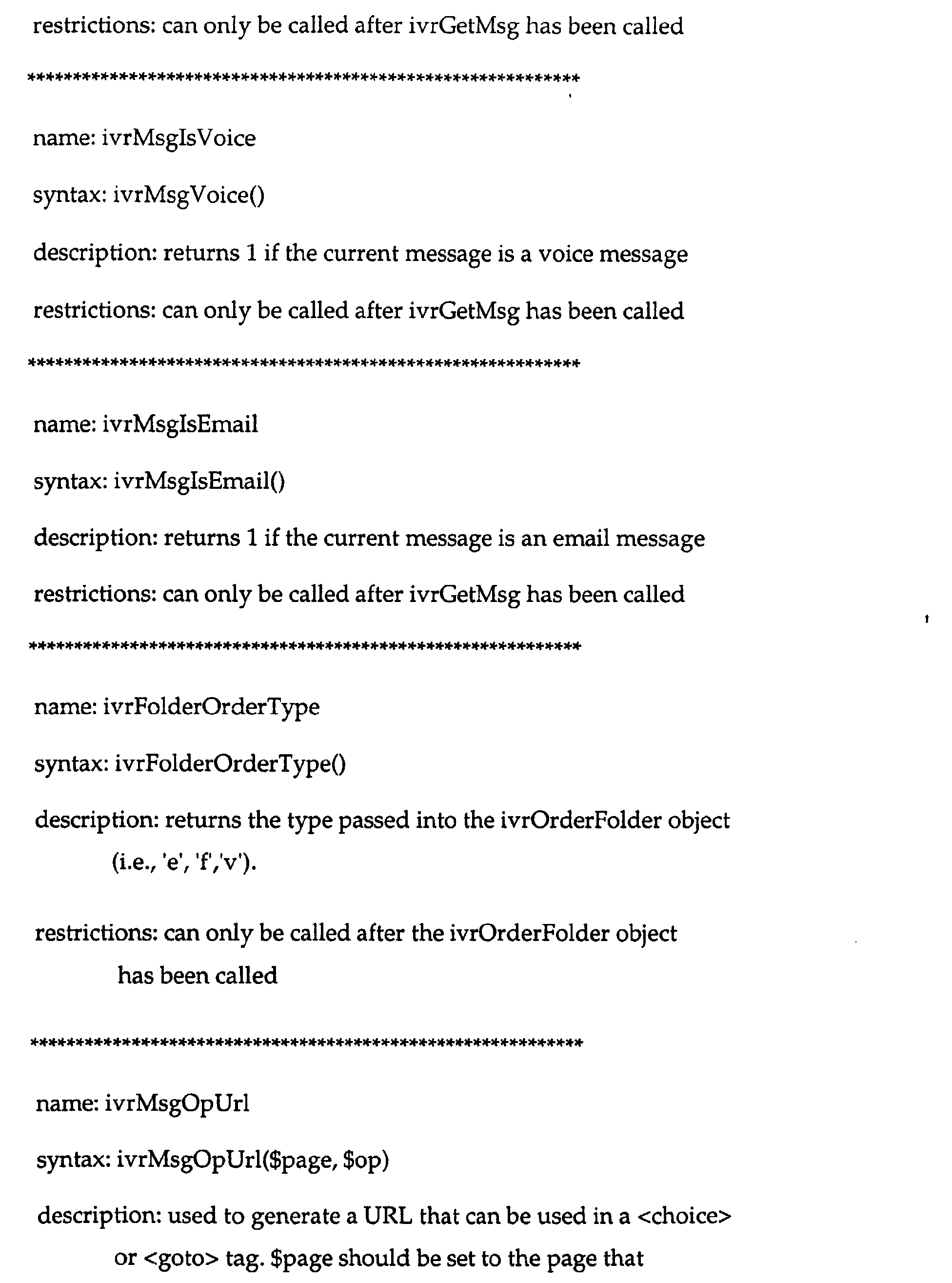

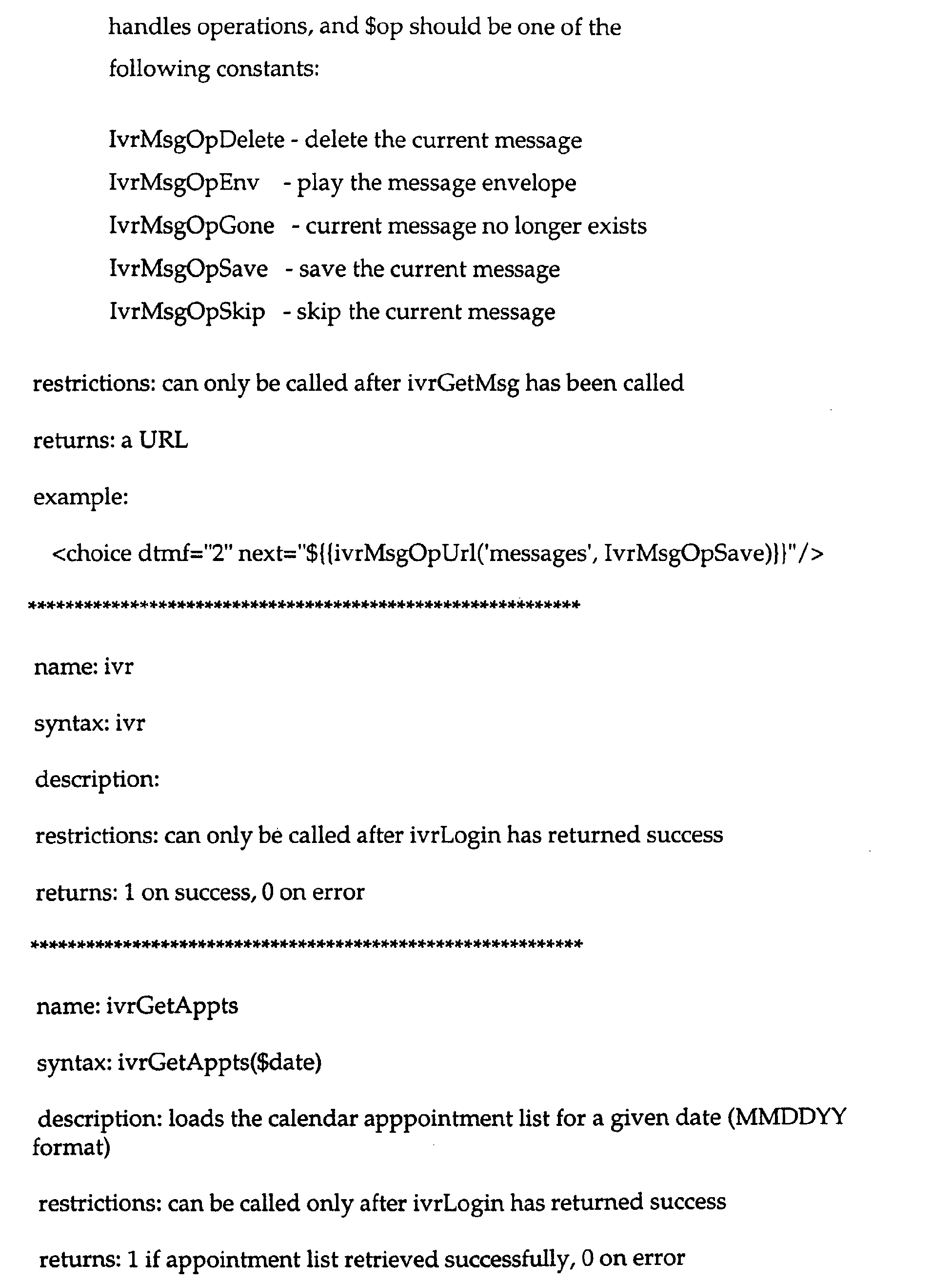

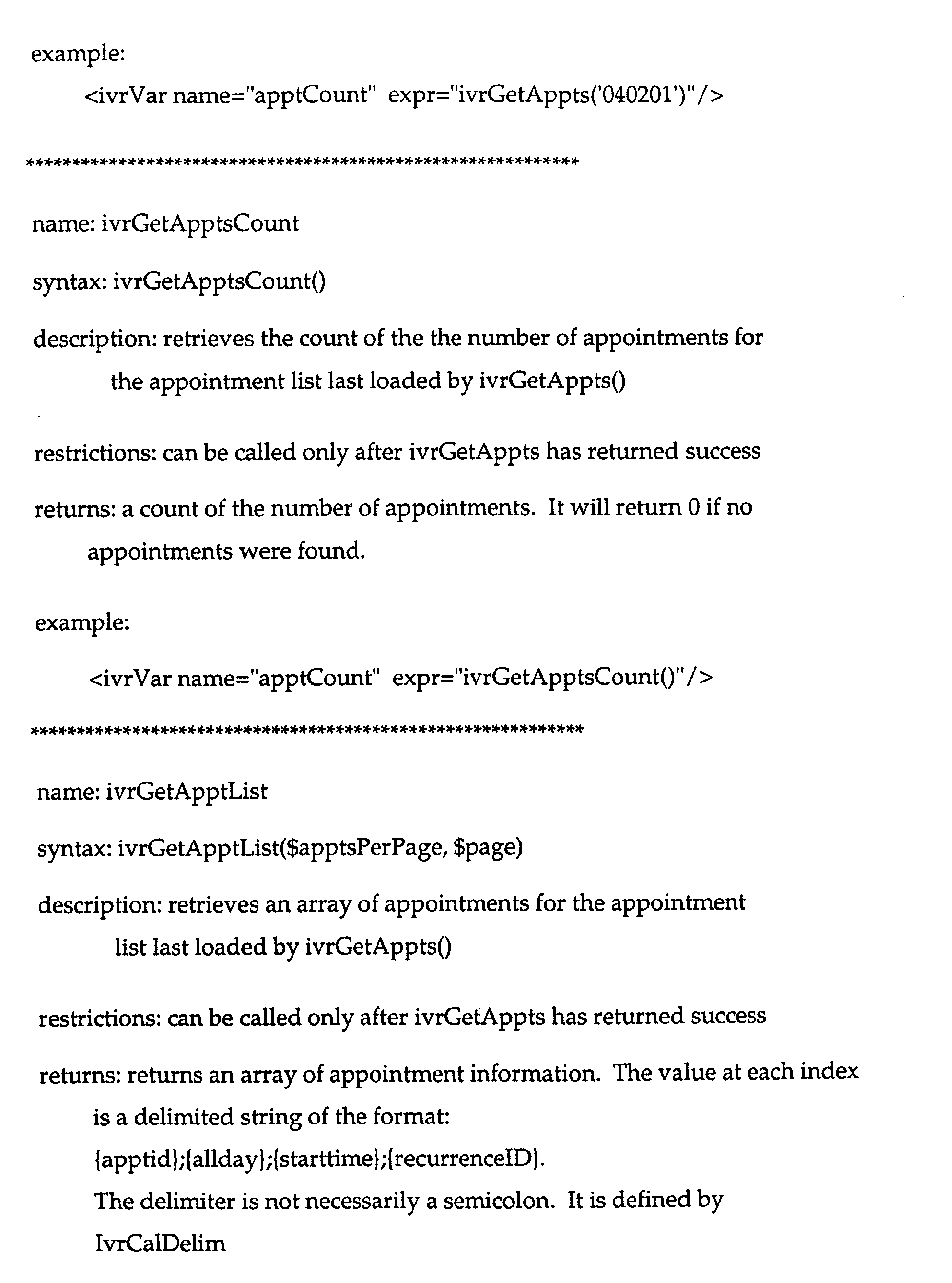

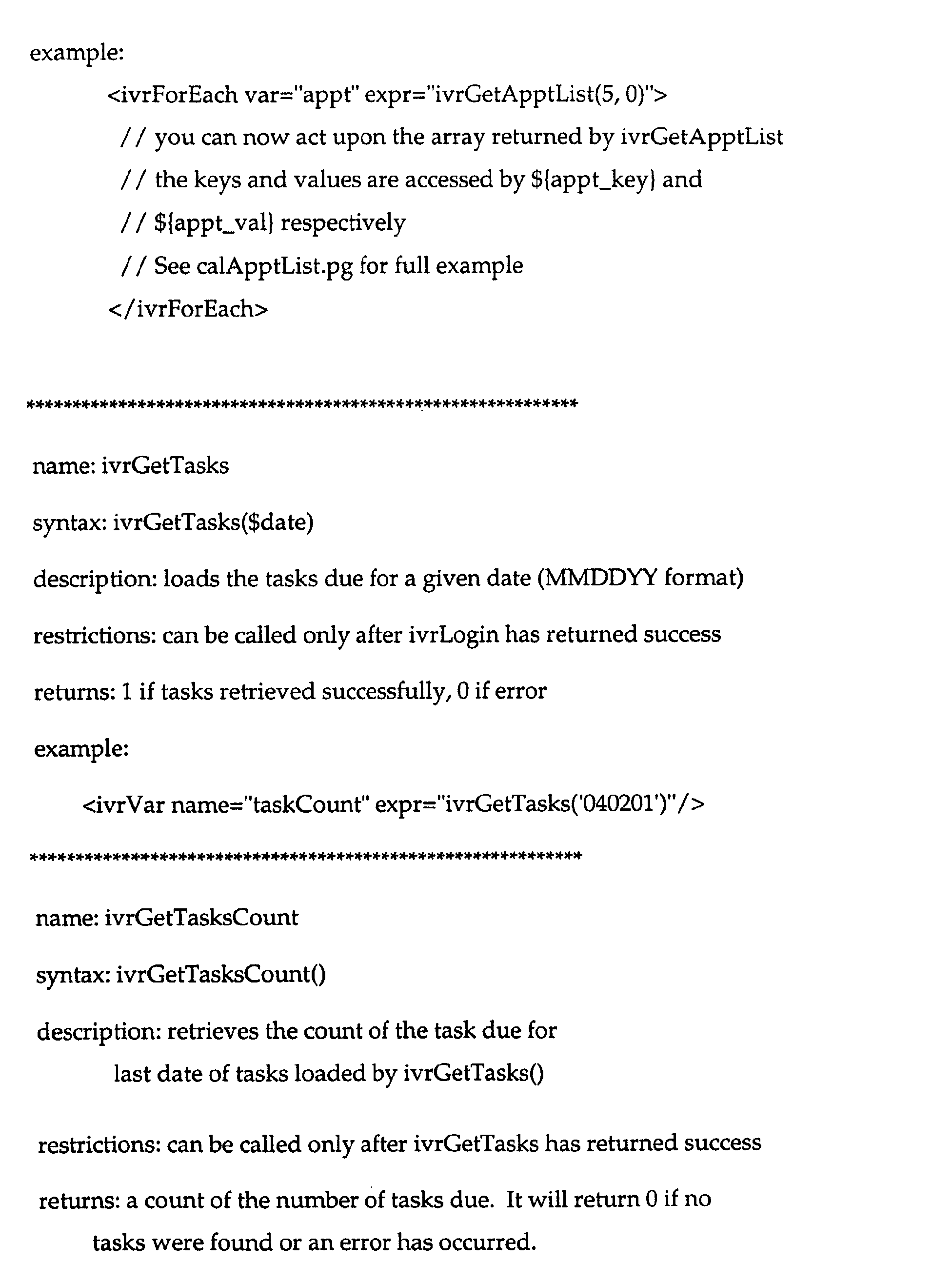

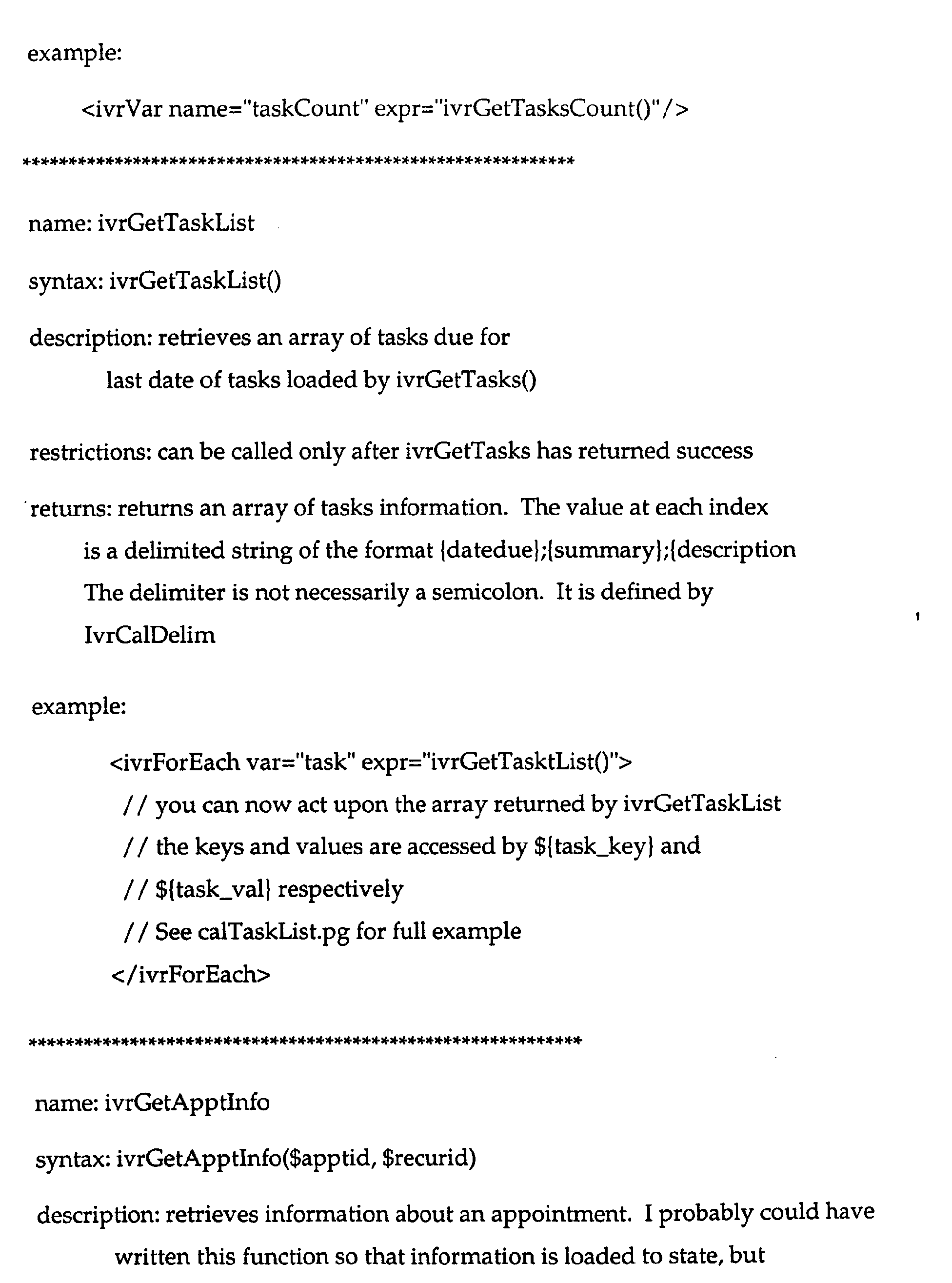

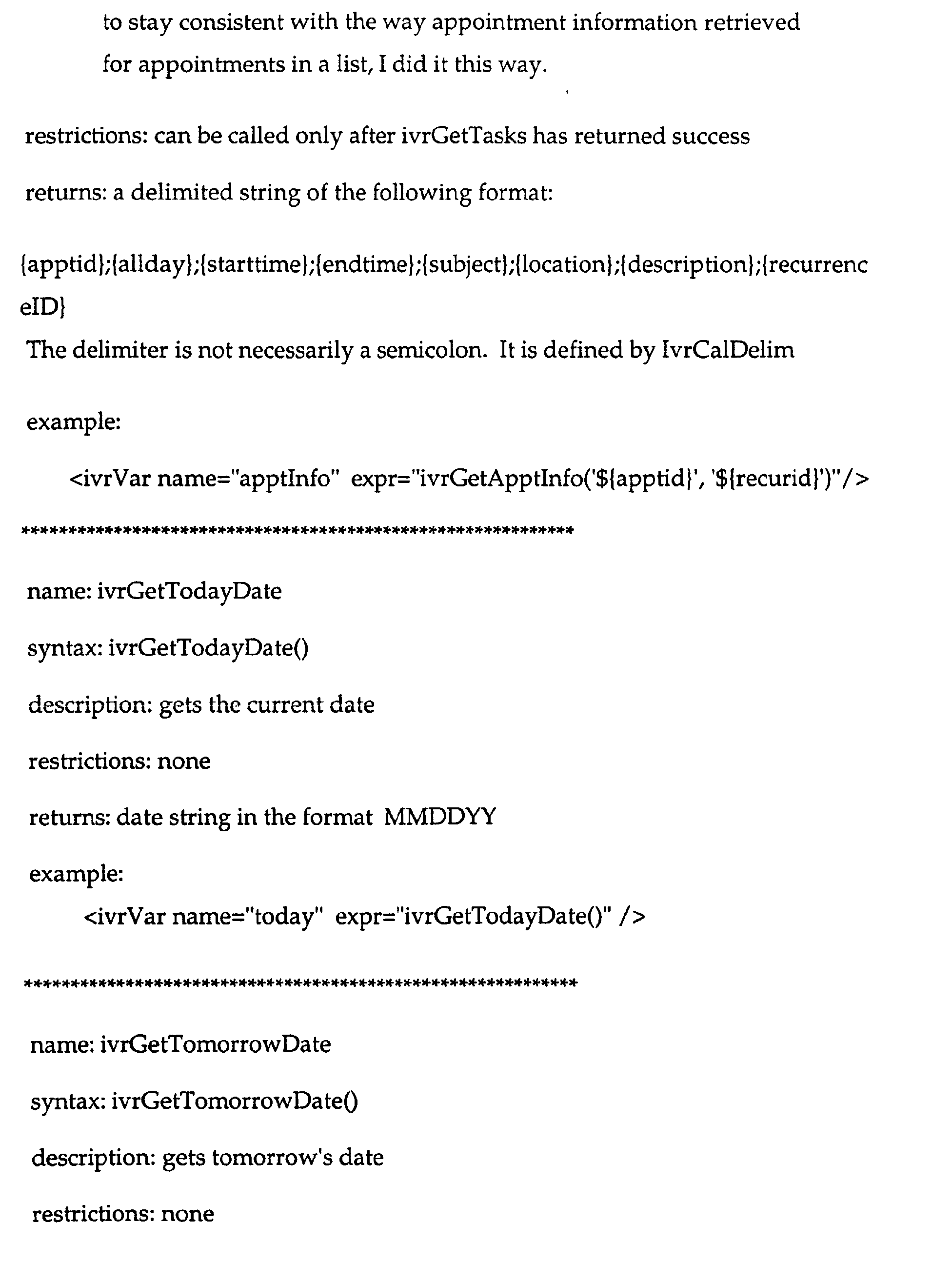

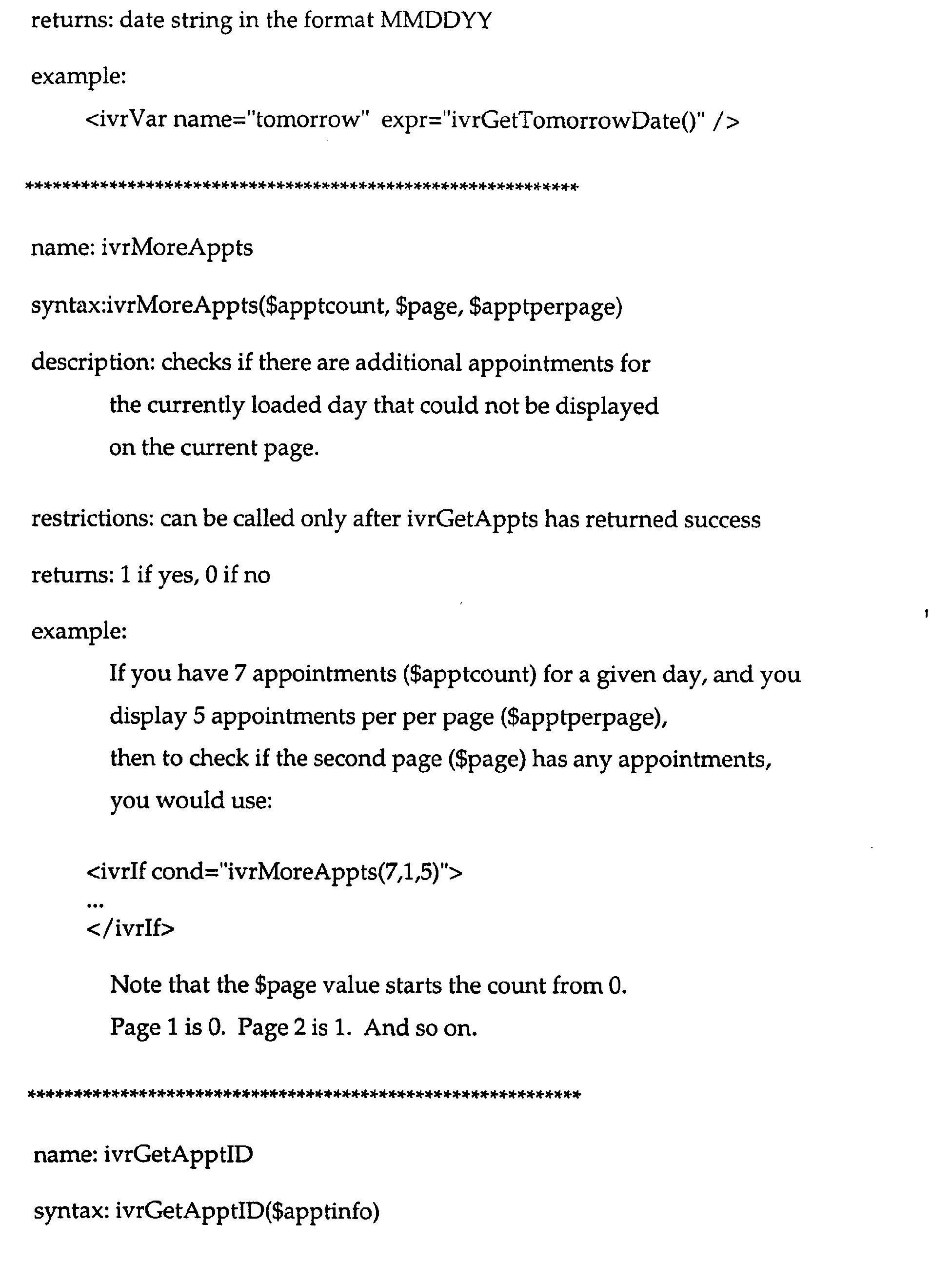

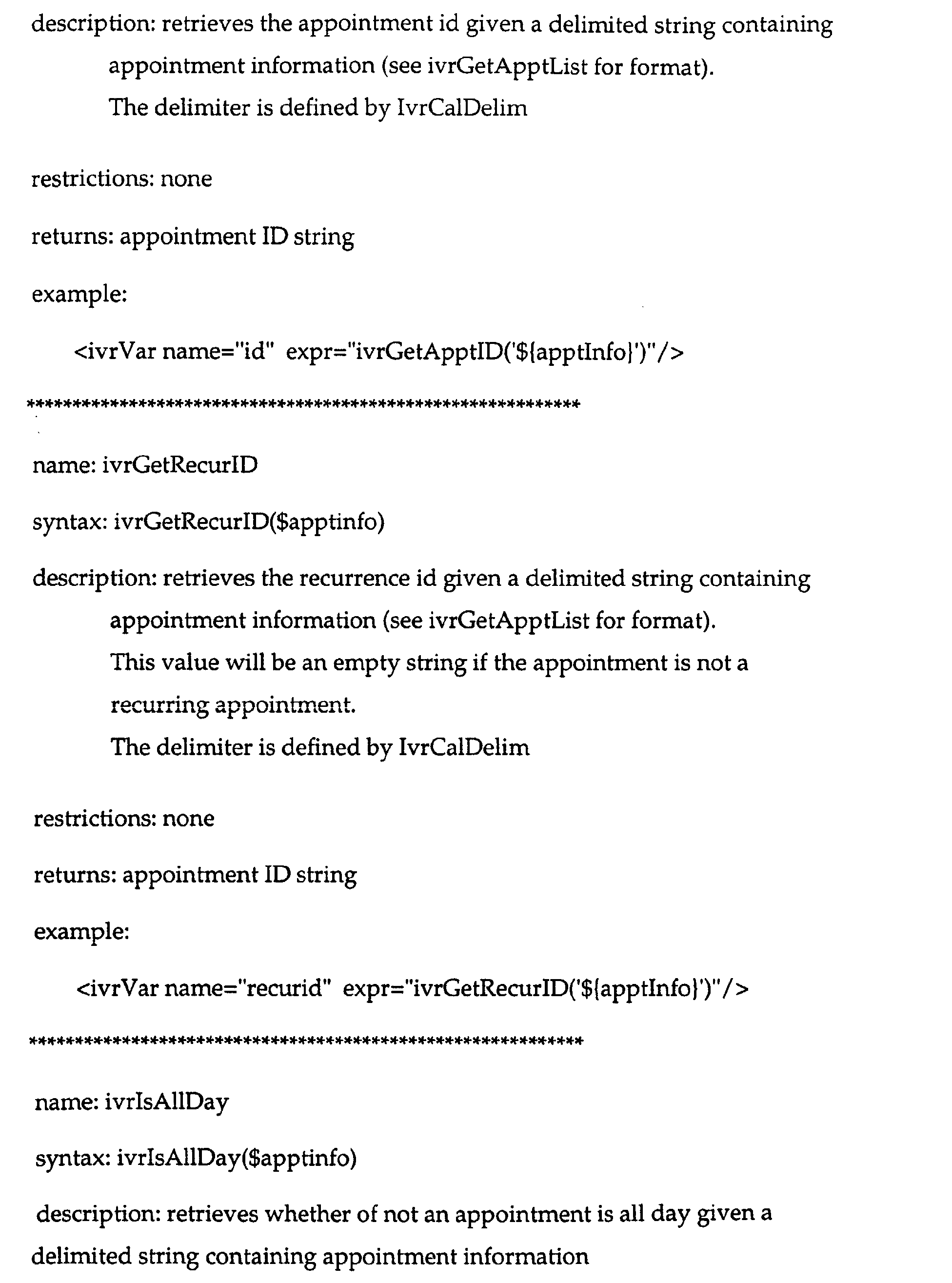

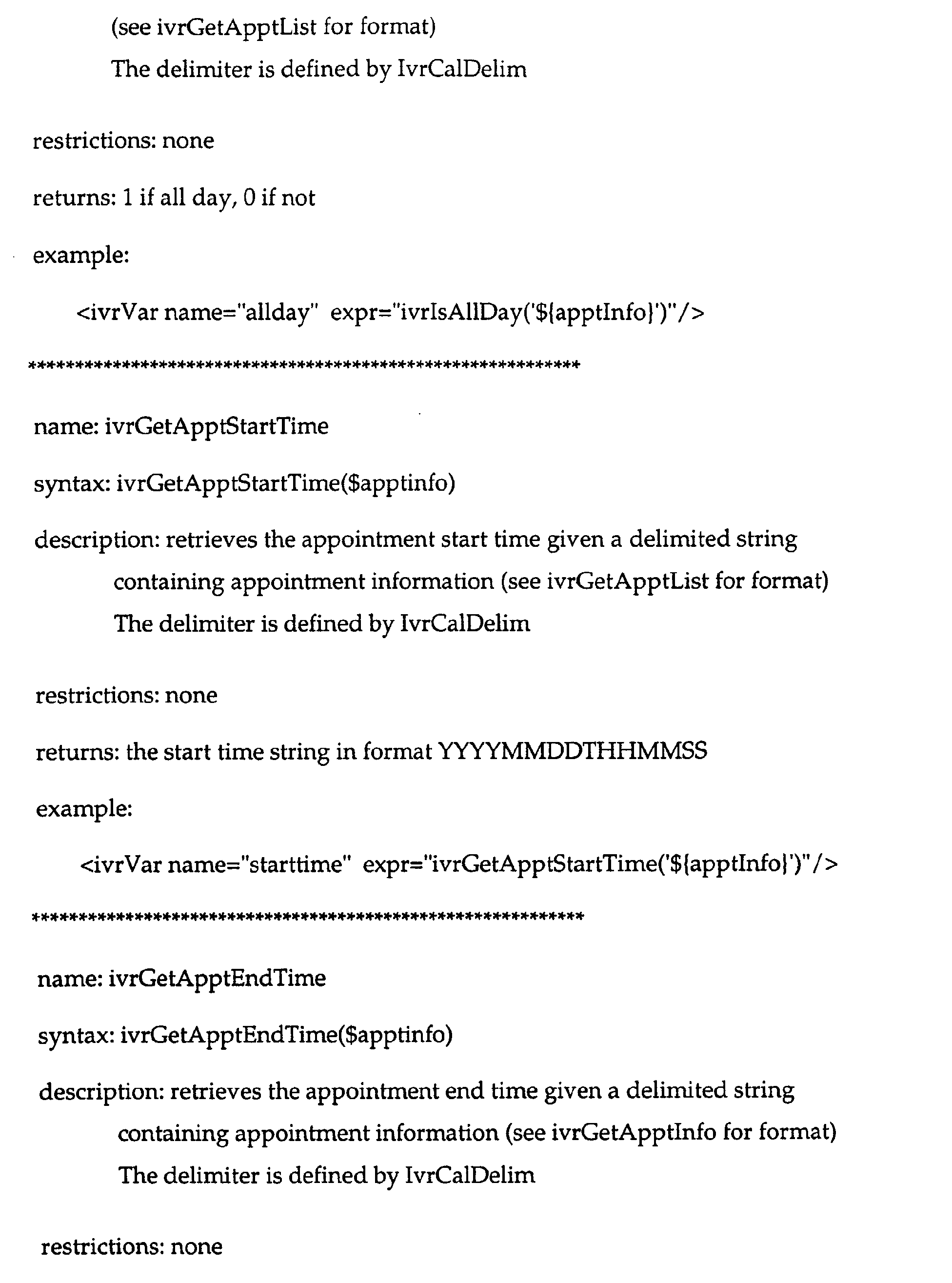

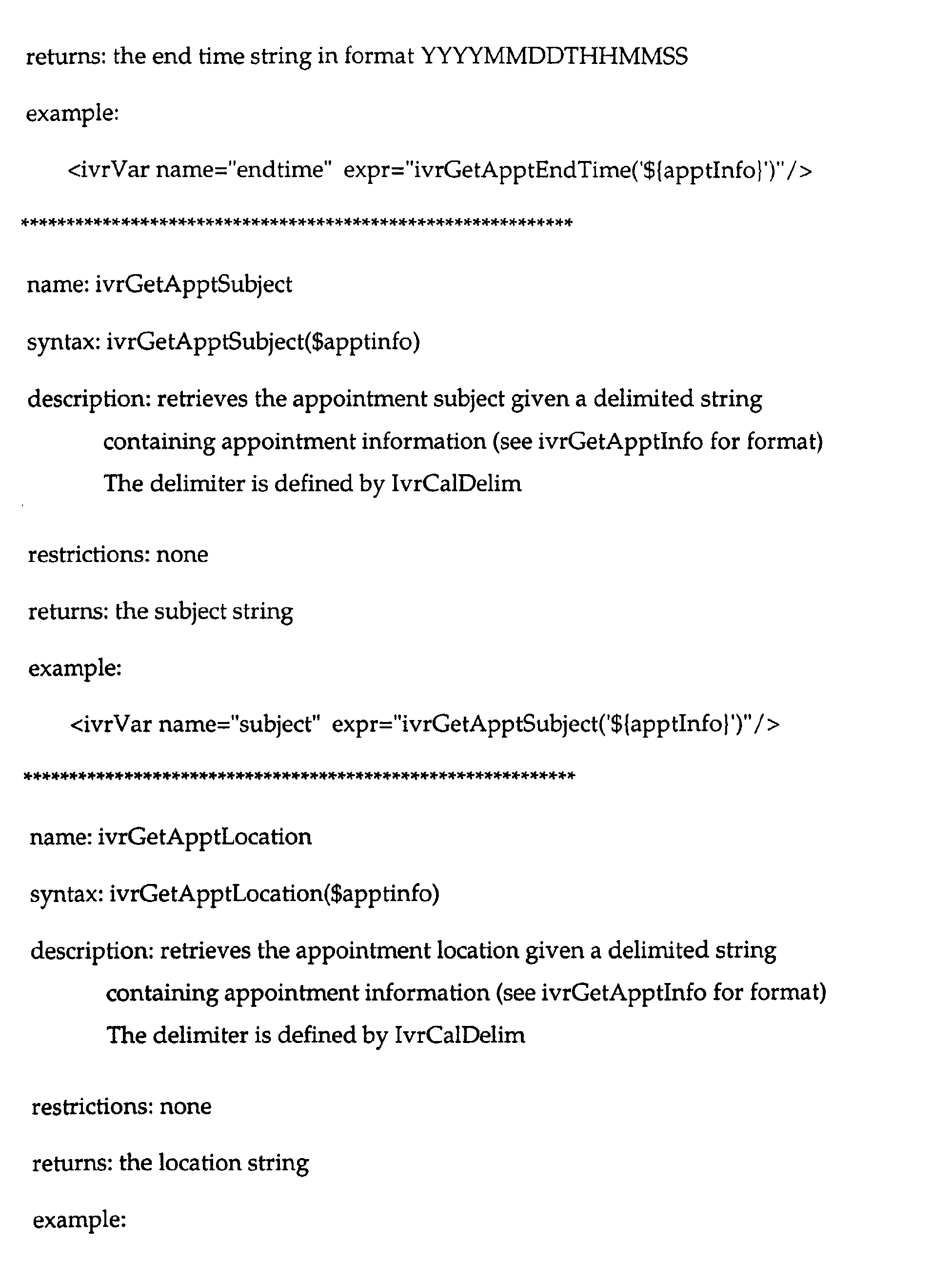

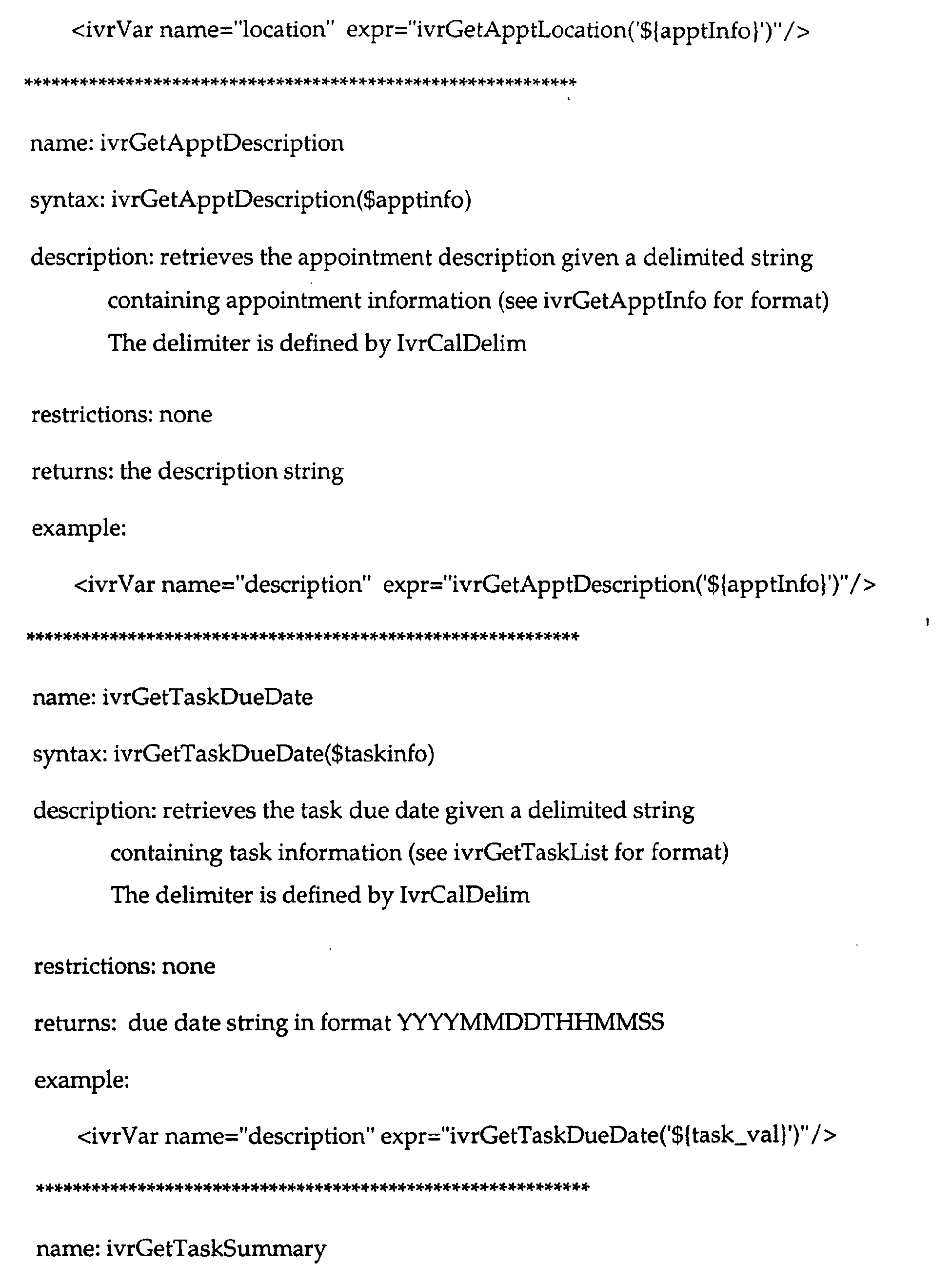

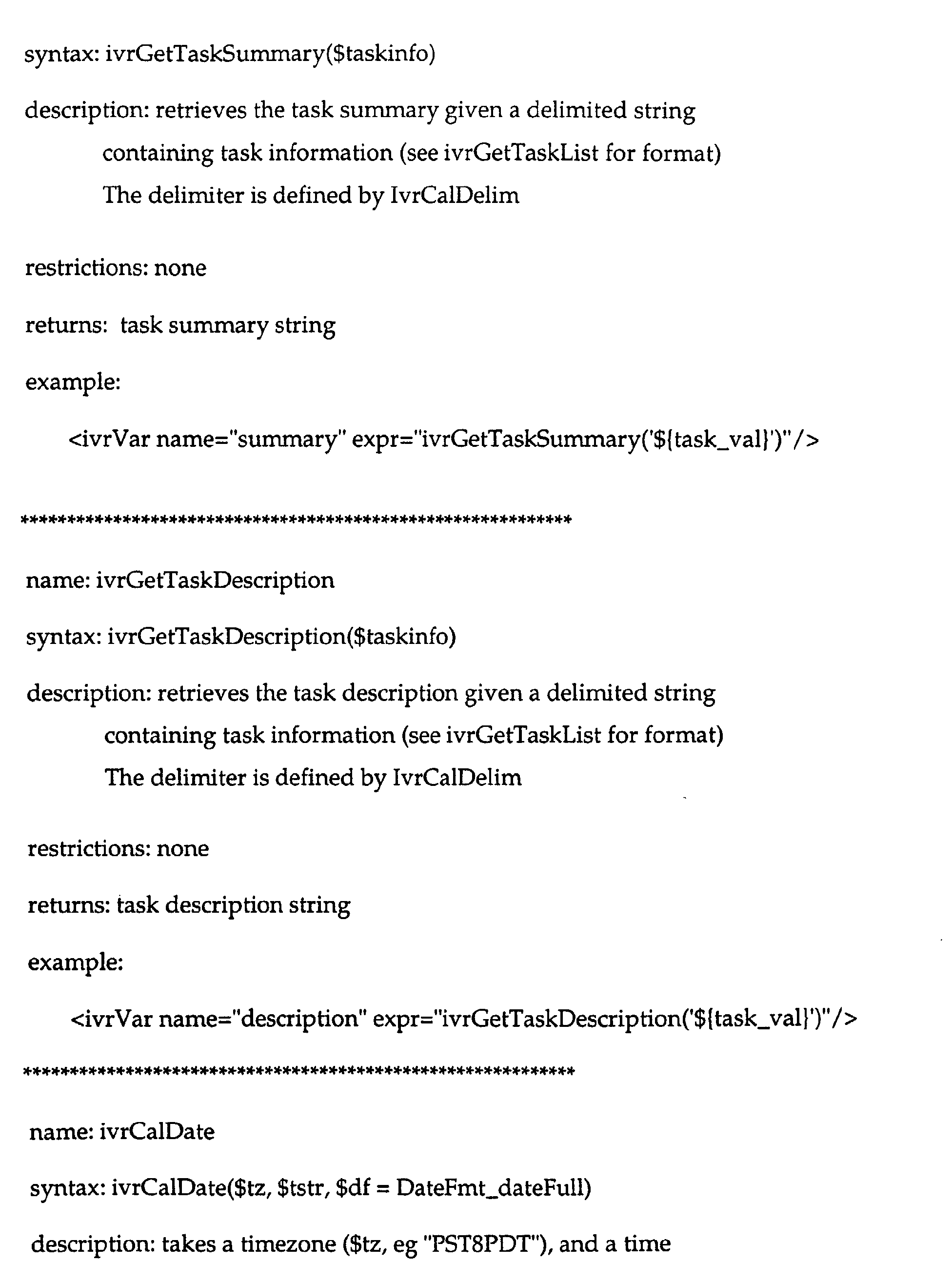

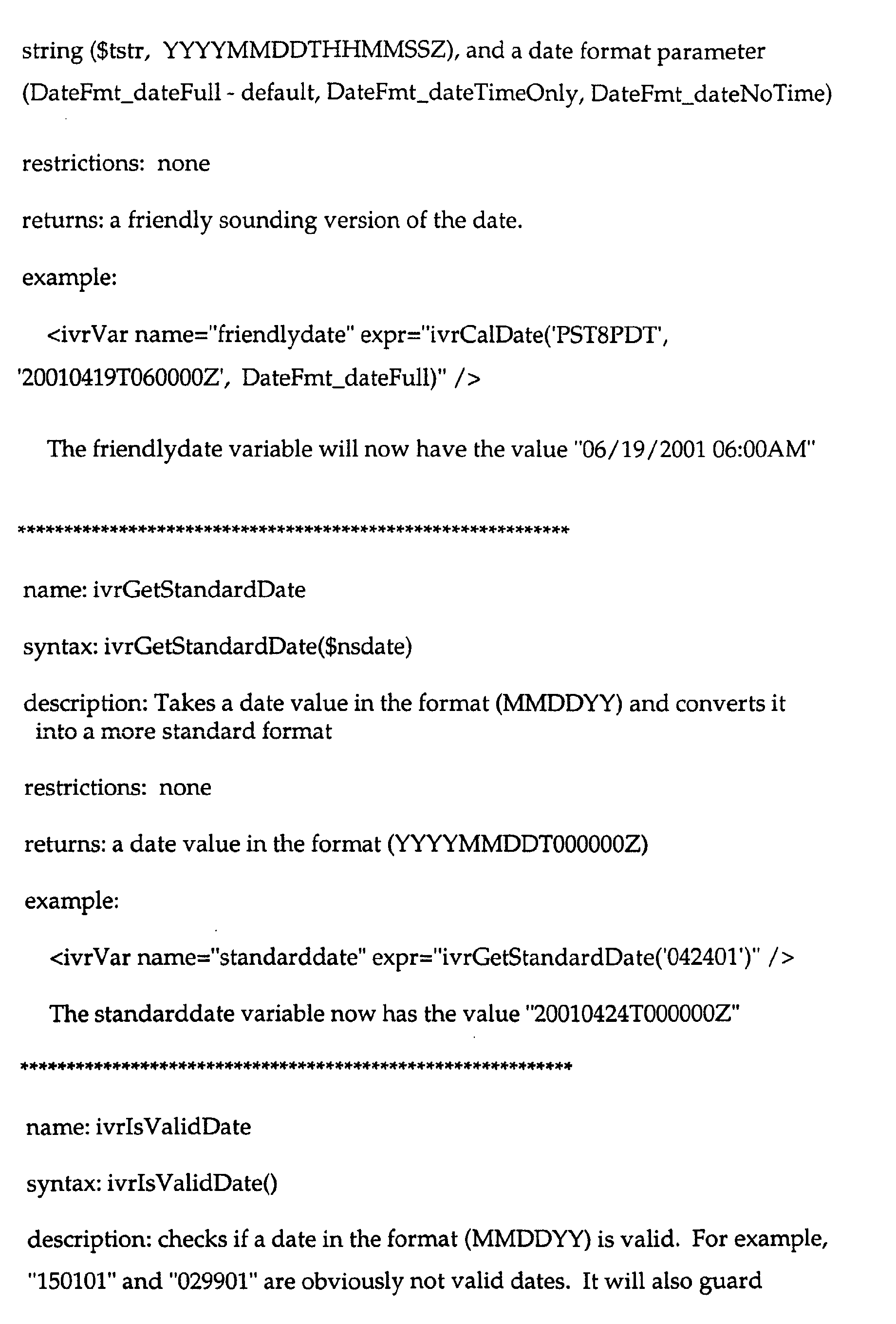

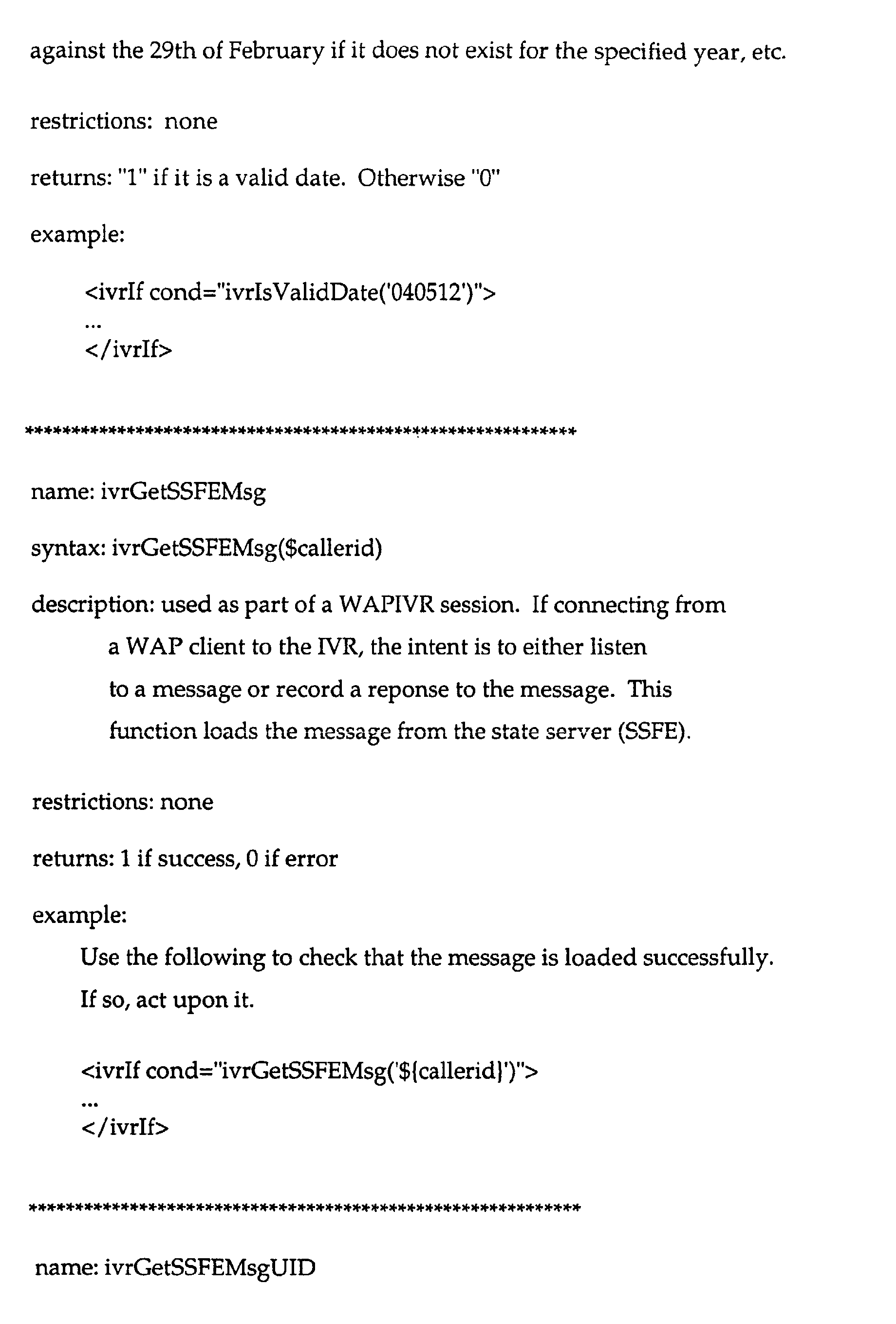

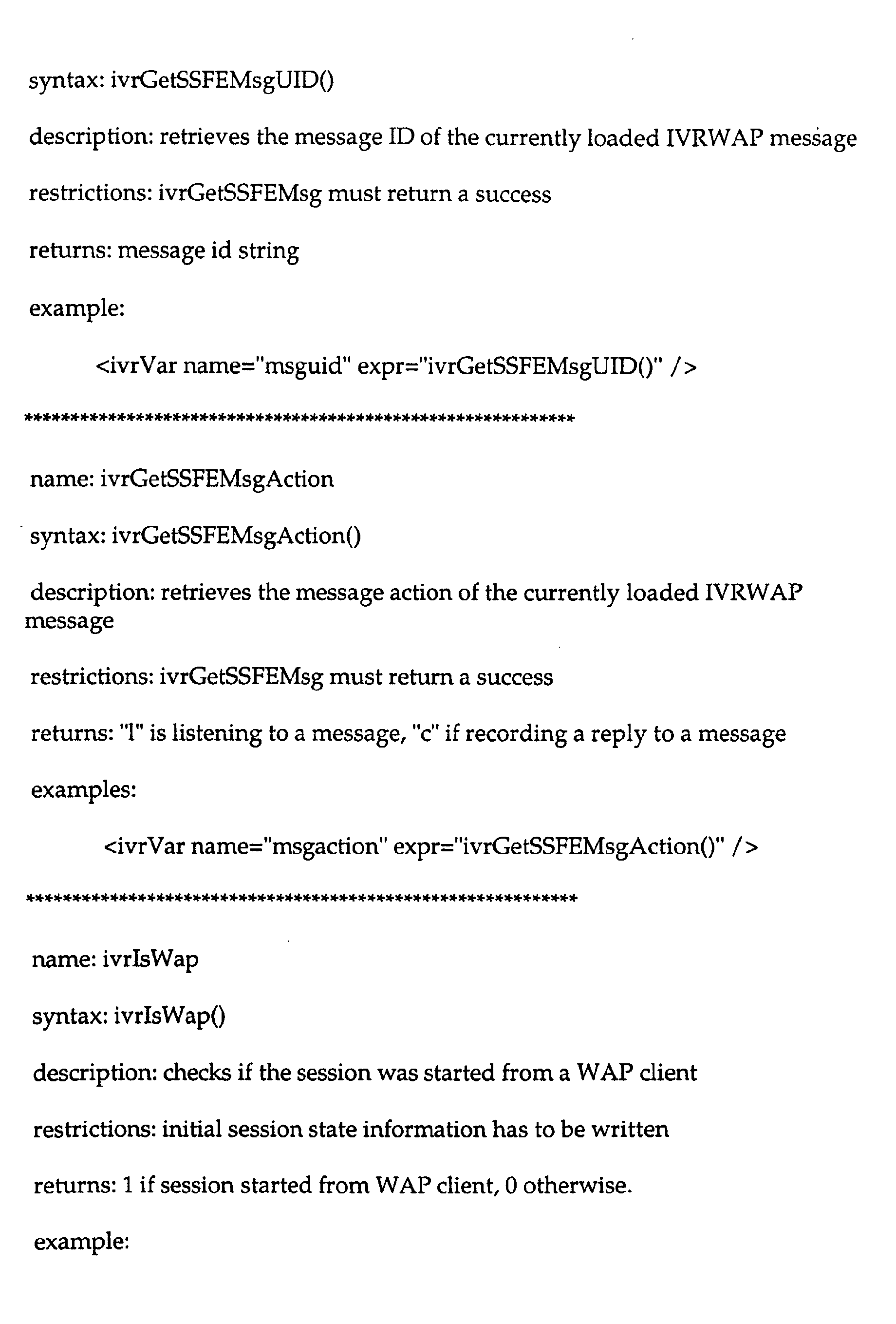

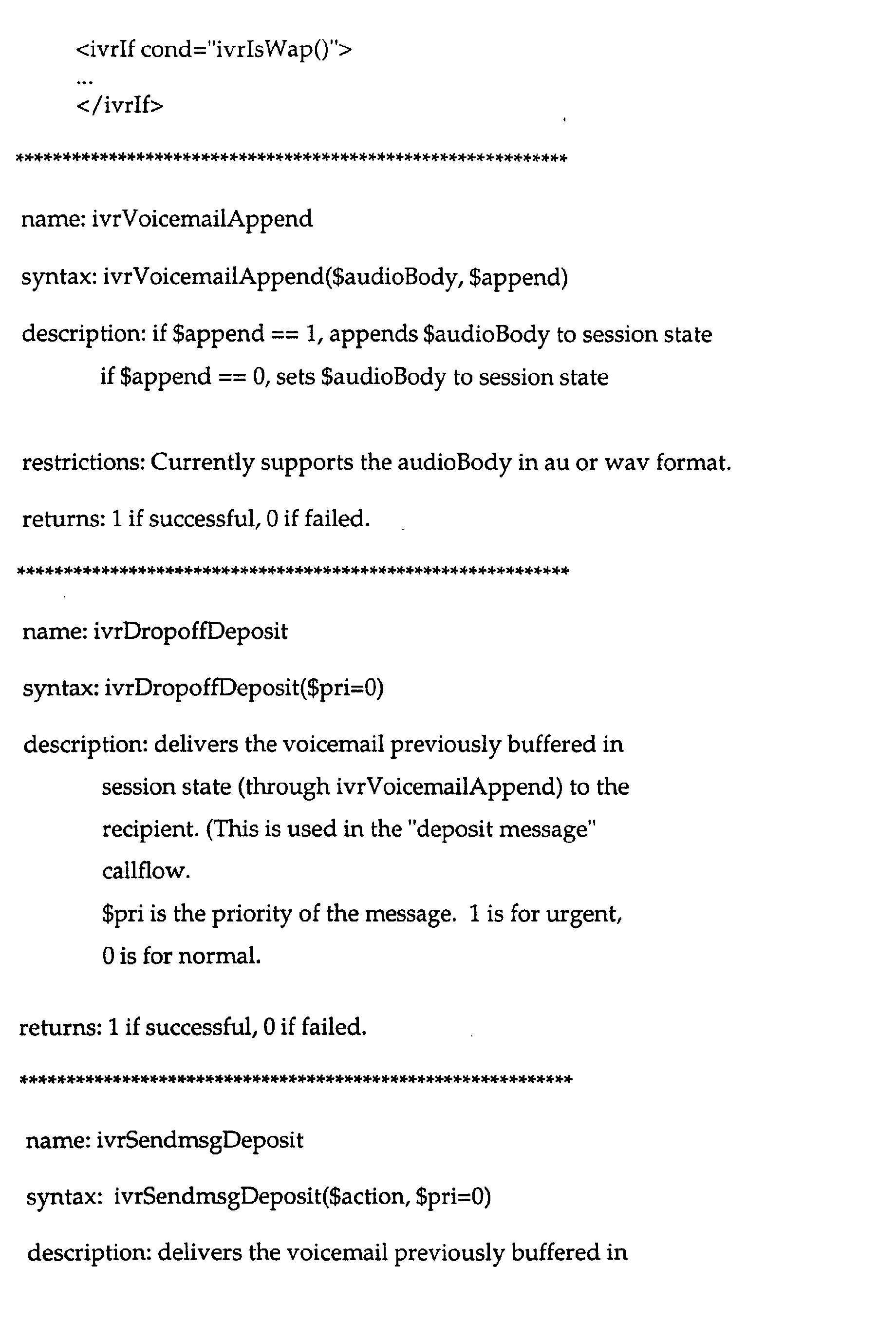

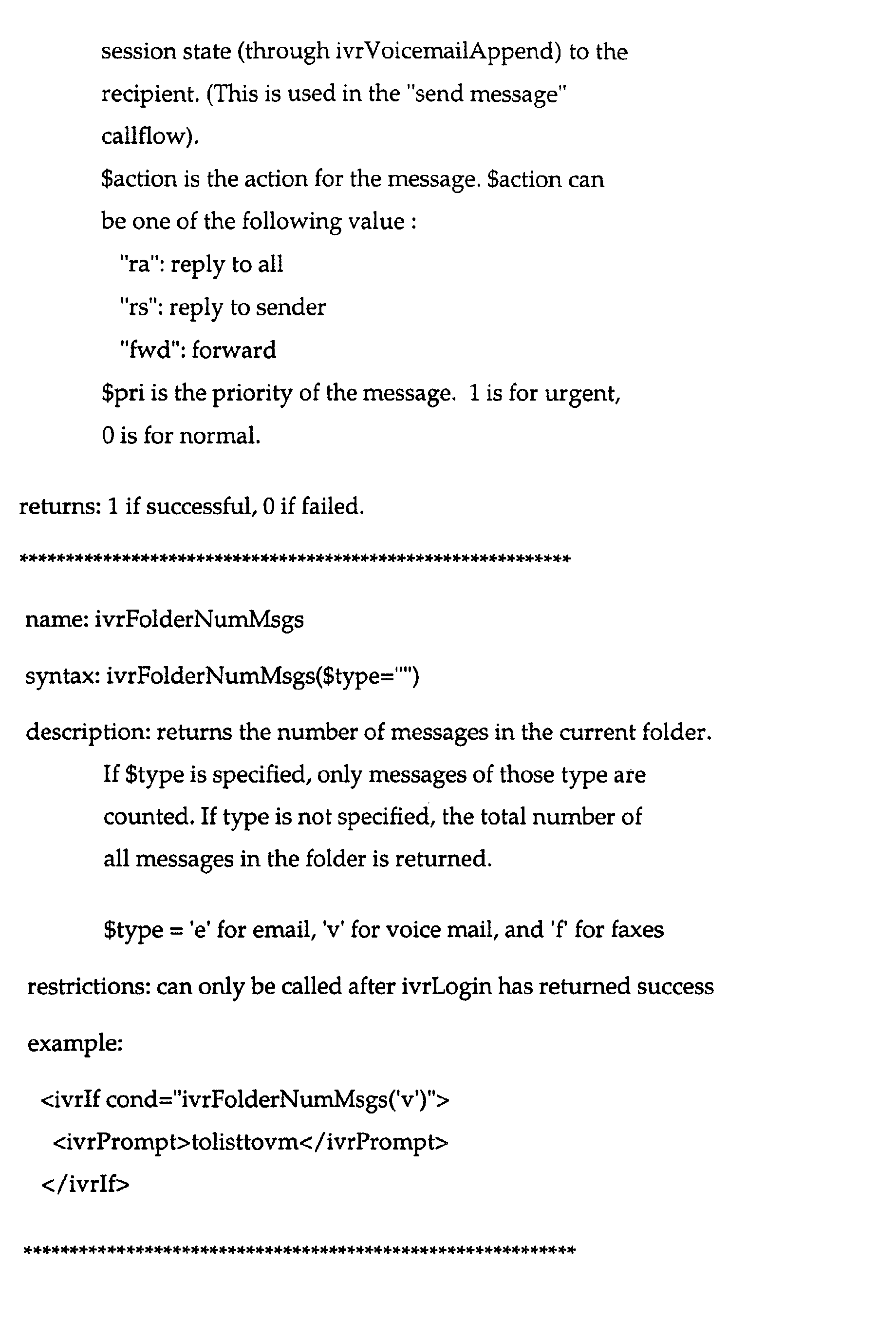

### B. Objects

The following objects are examples of objects which may be included in the described system. Of course, additional objects can be defined, and these objects can be added to the system on-the-fly. For each objects described below, the object name, syntax, description and parameters of the object type are given, along with any applicable restrictions, and where appropriate, examples of usage.

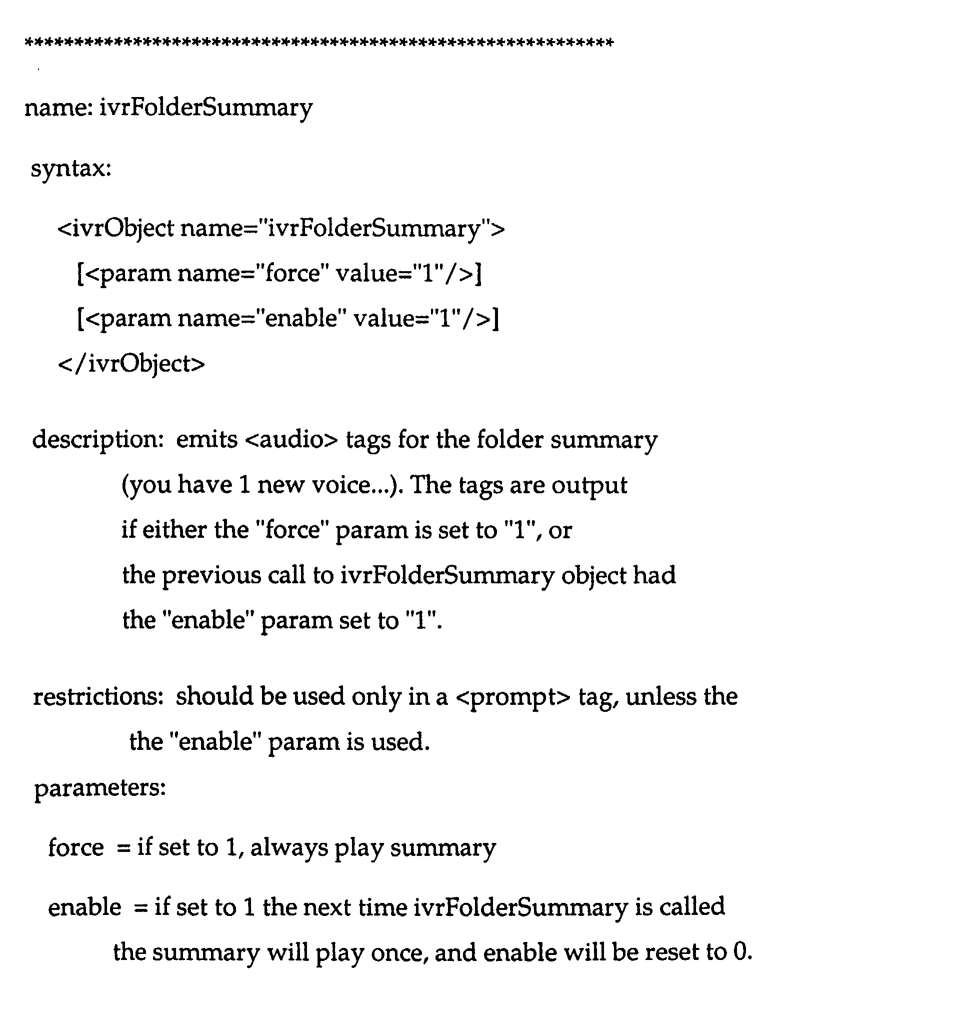

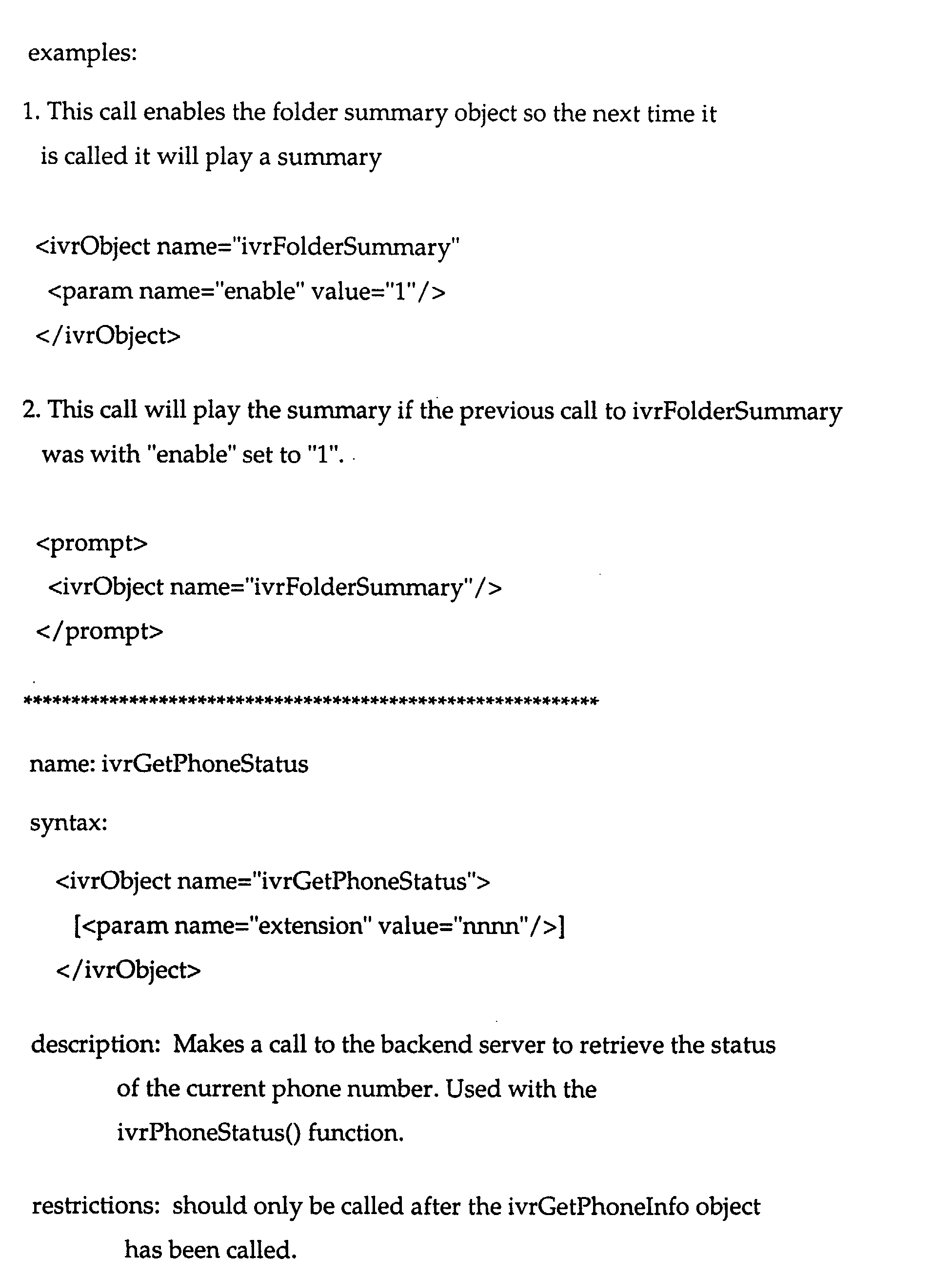

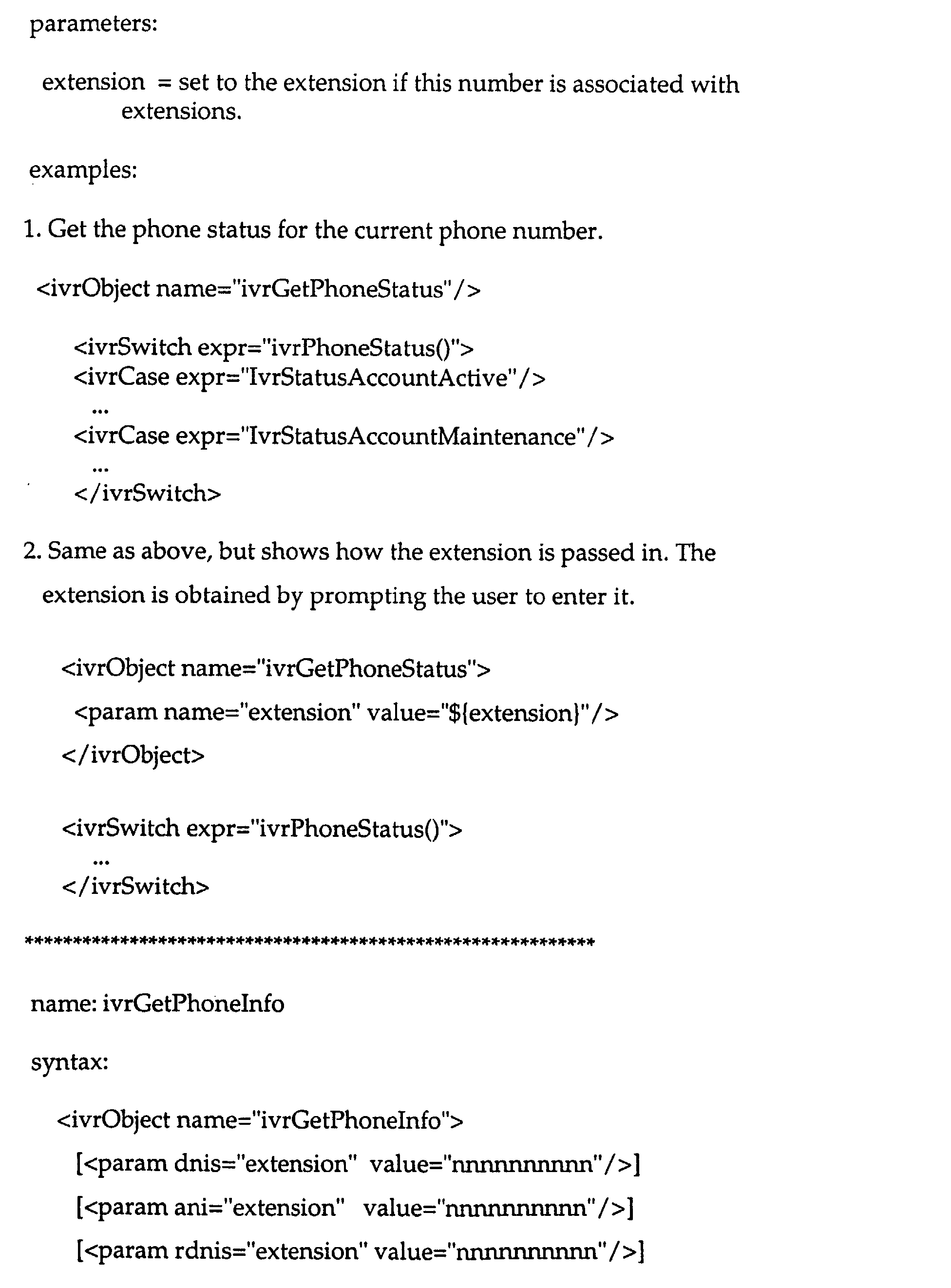

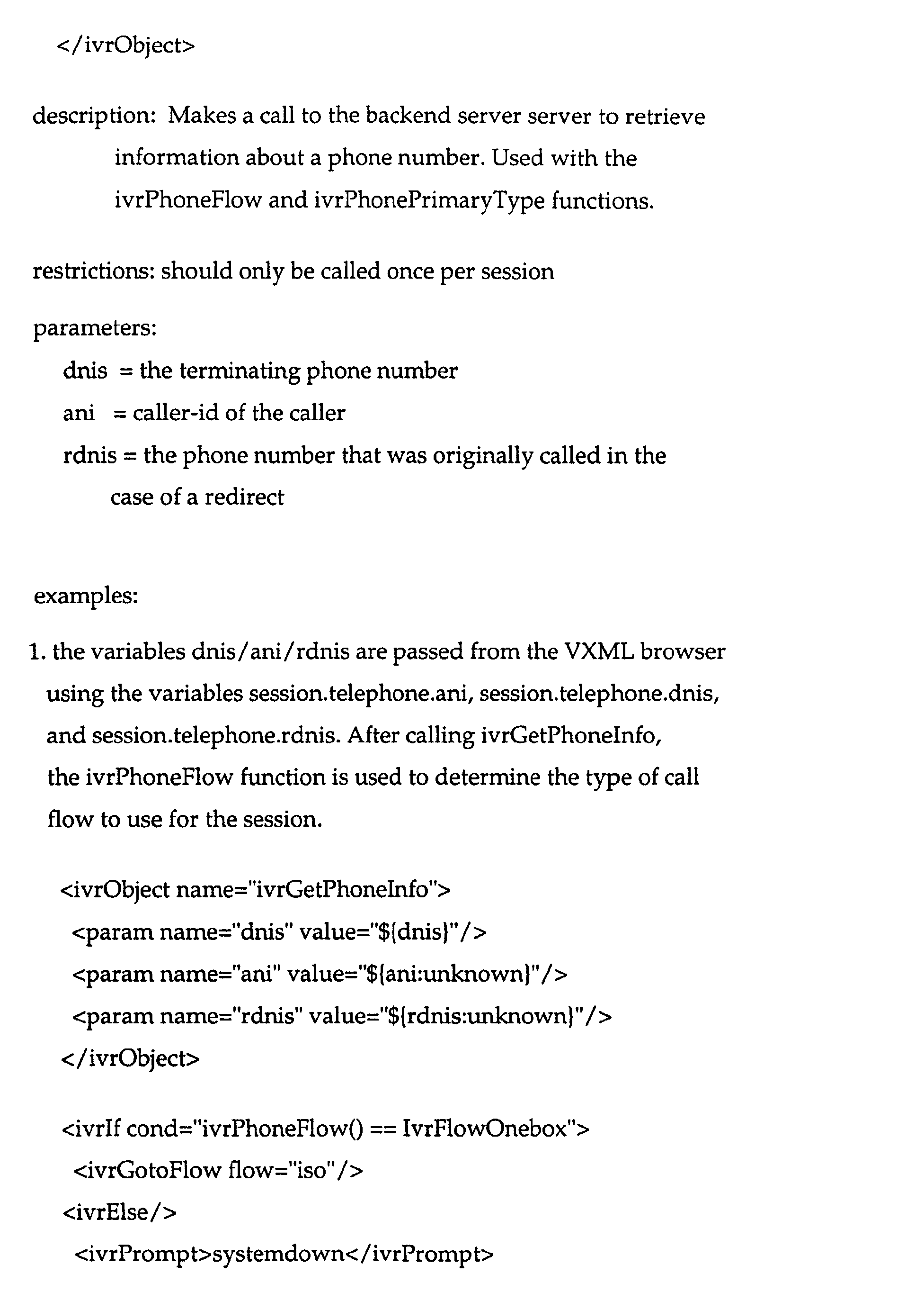

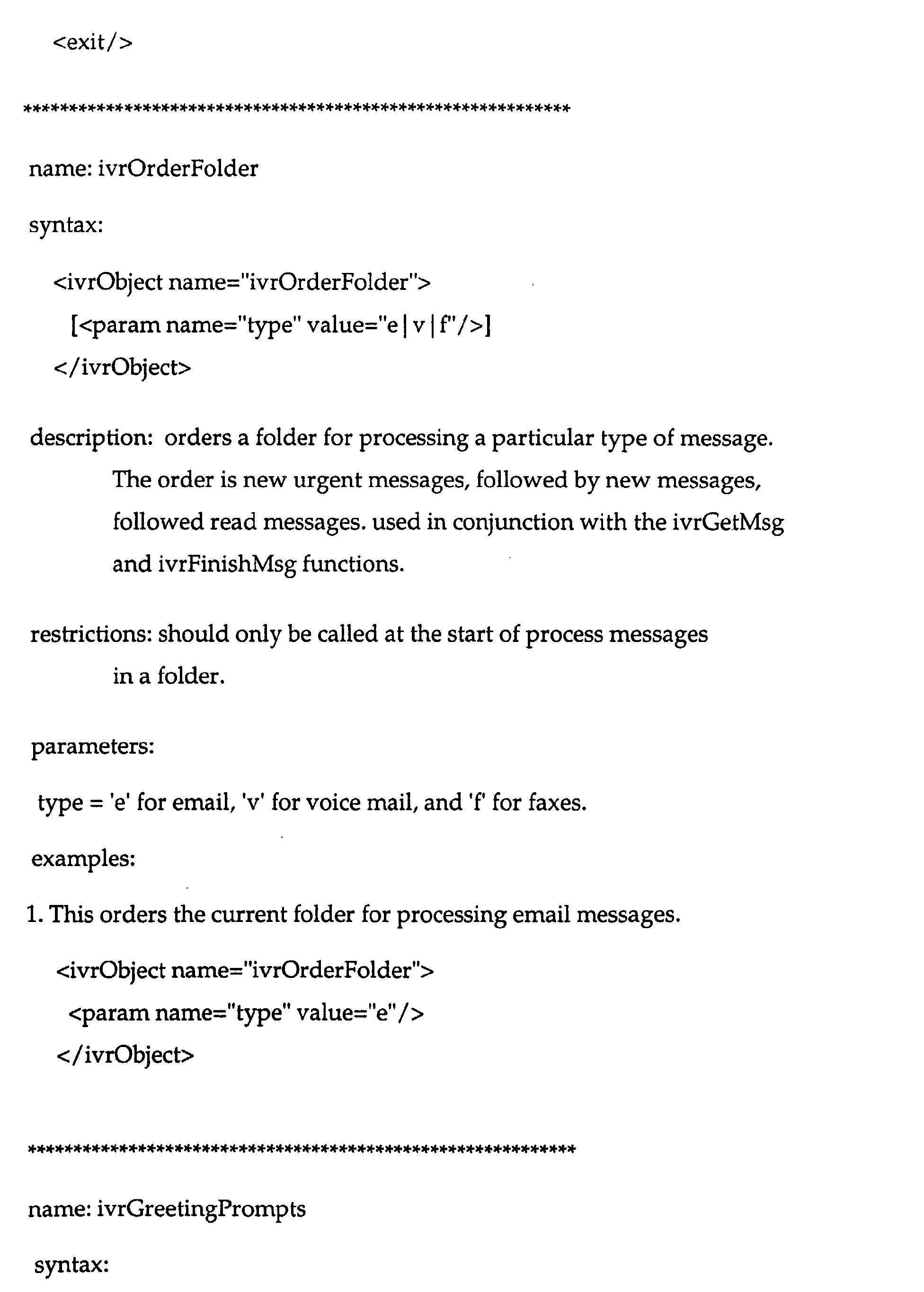

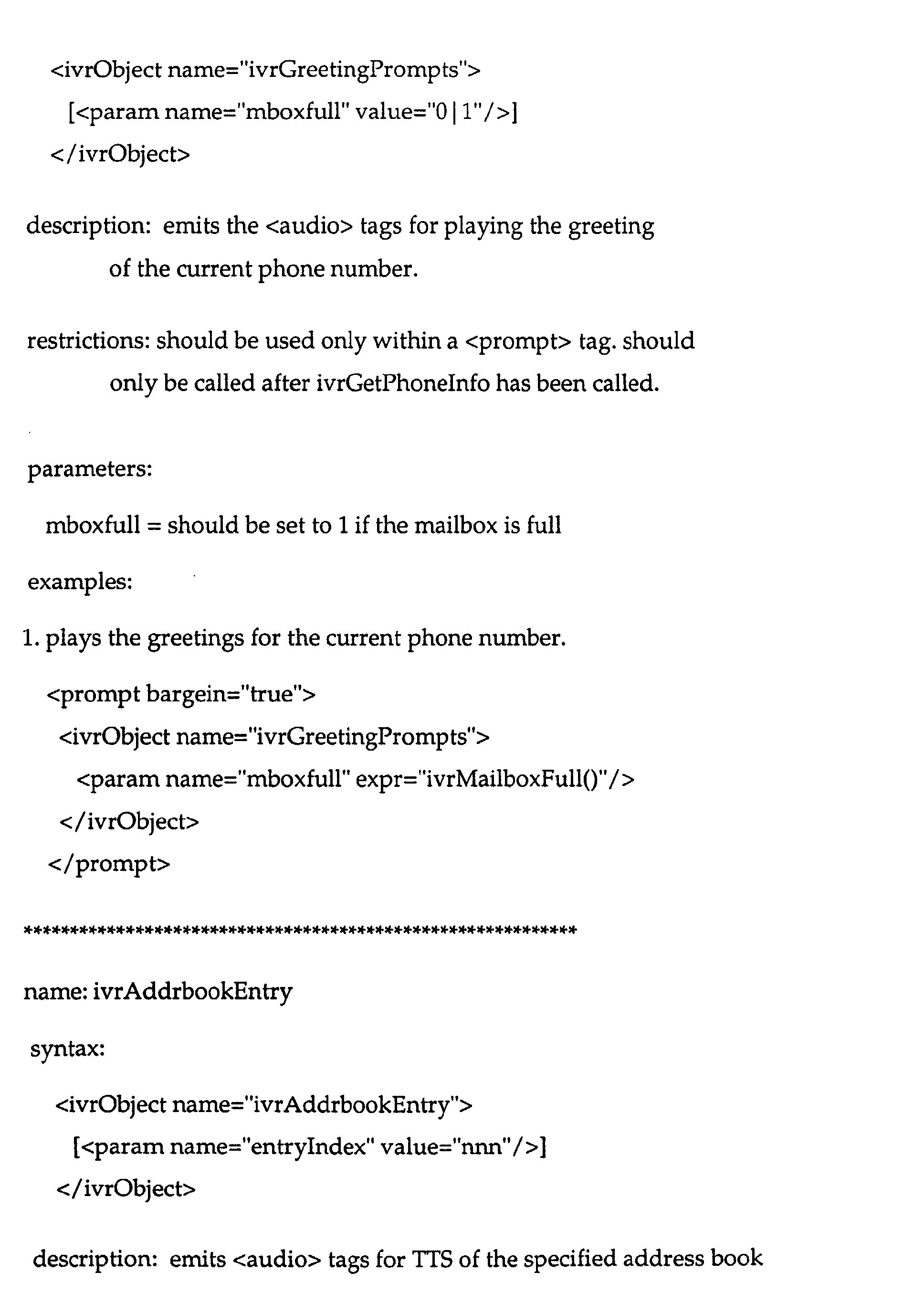

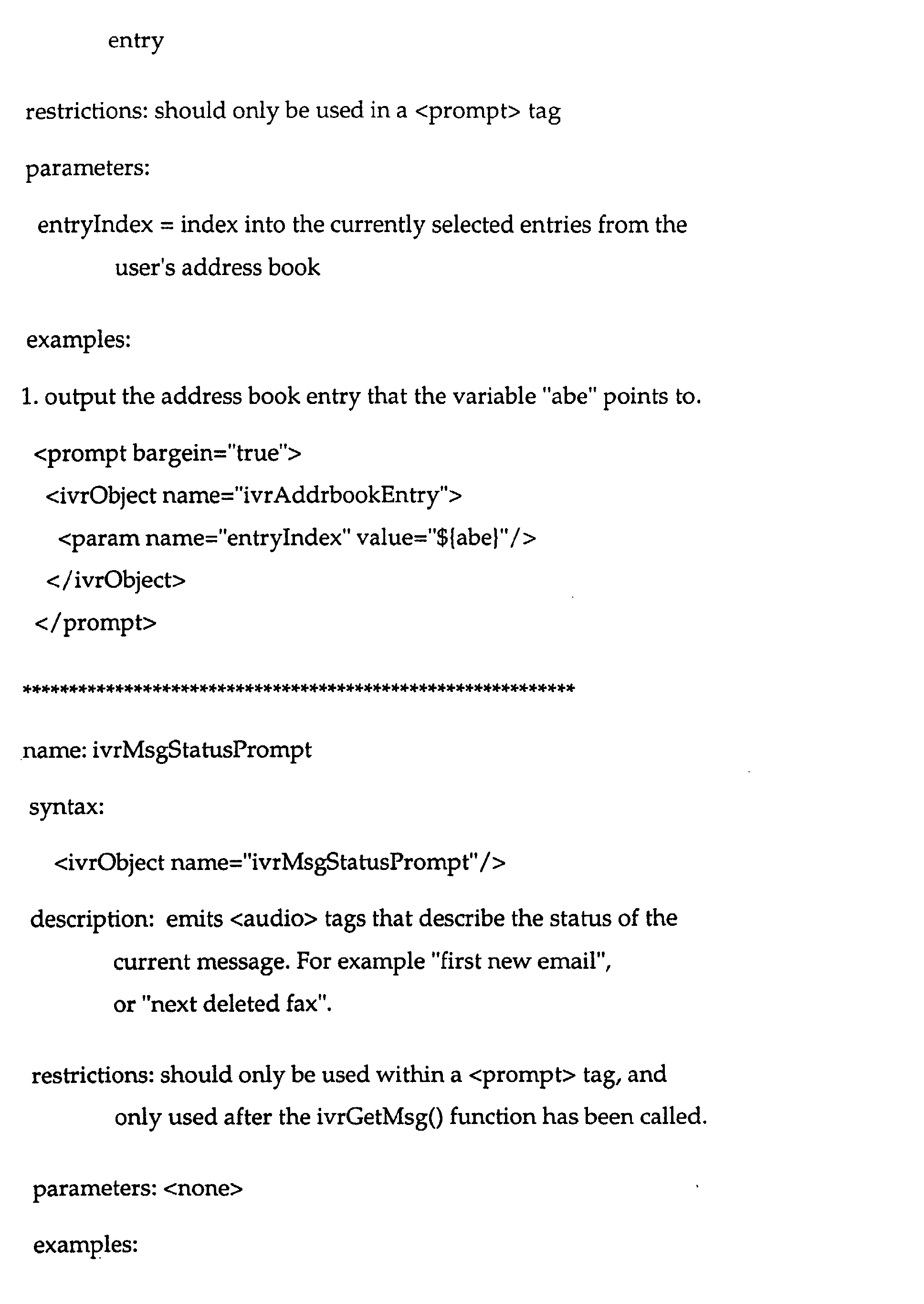

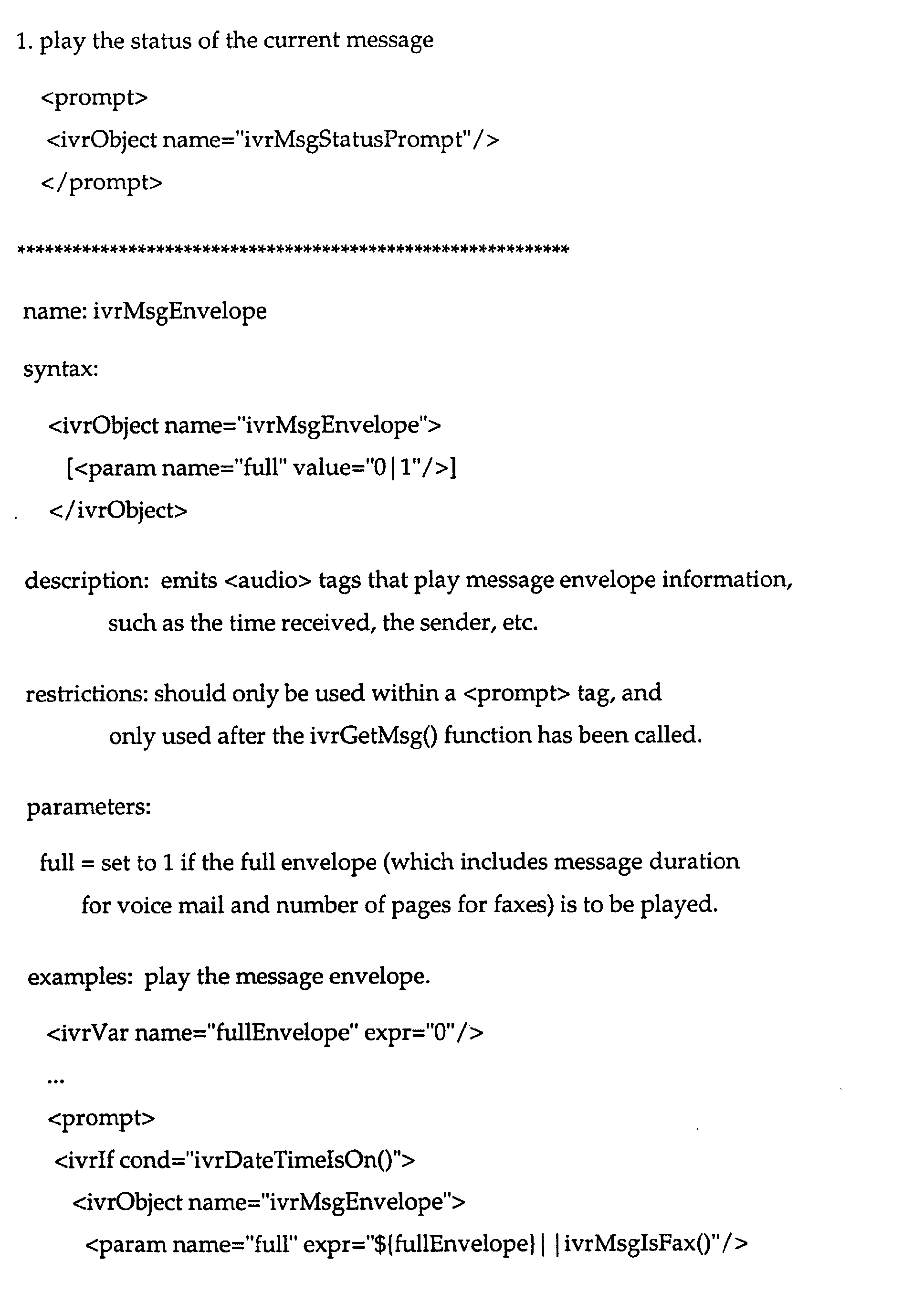

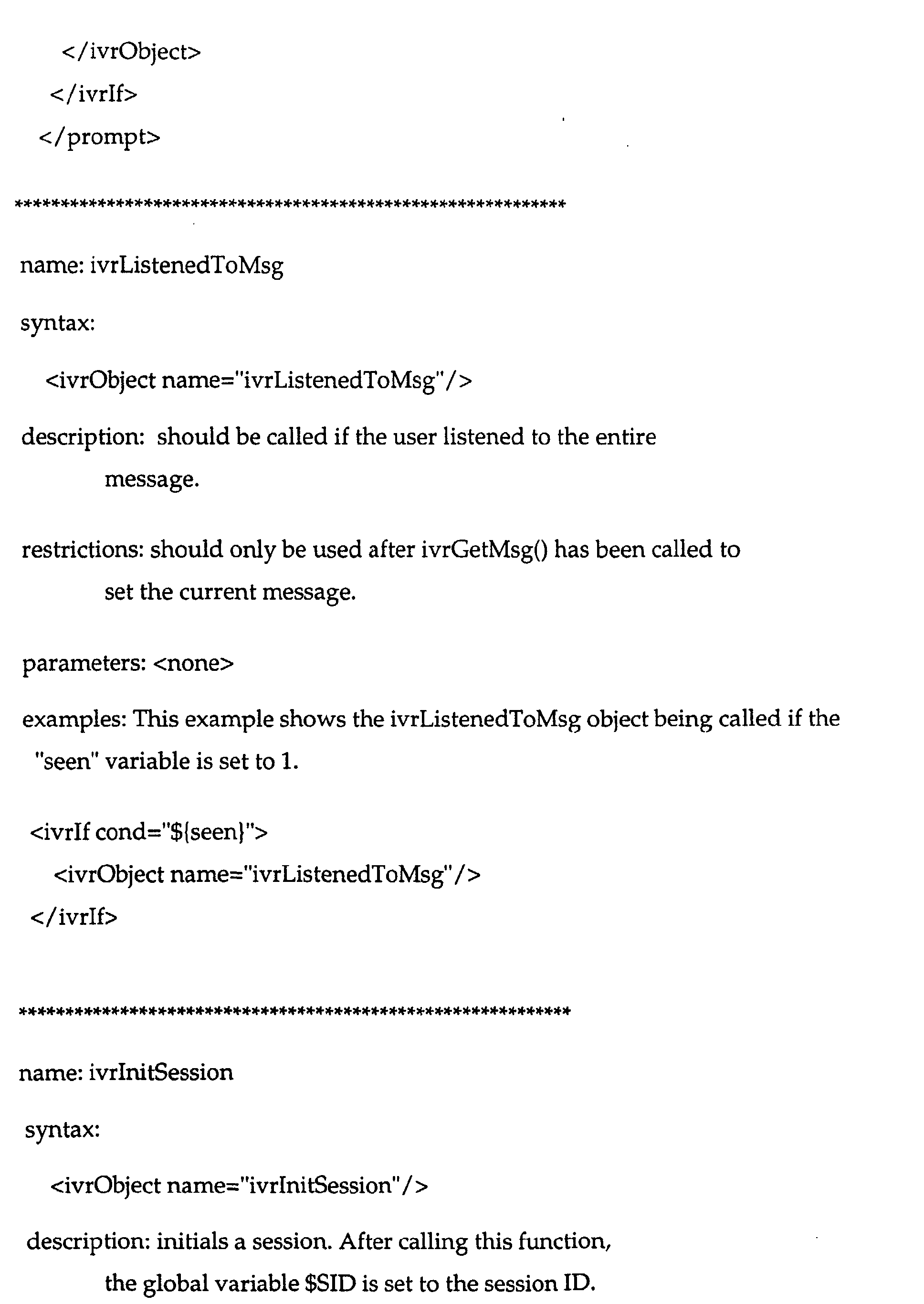

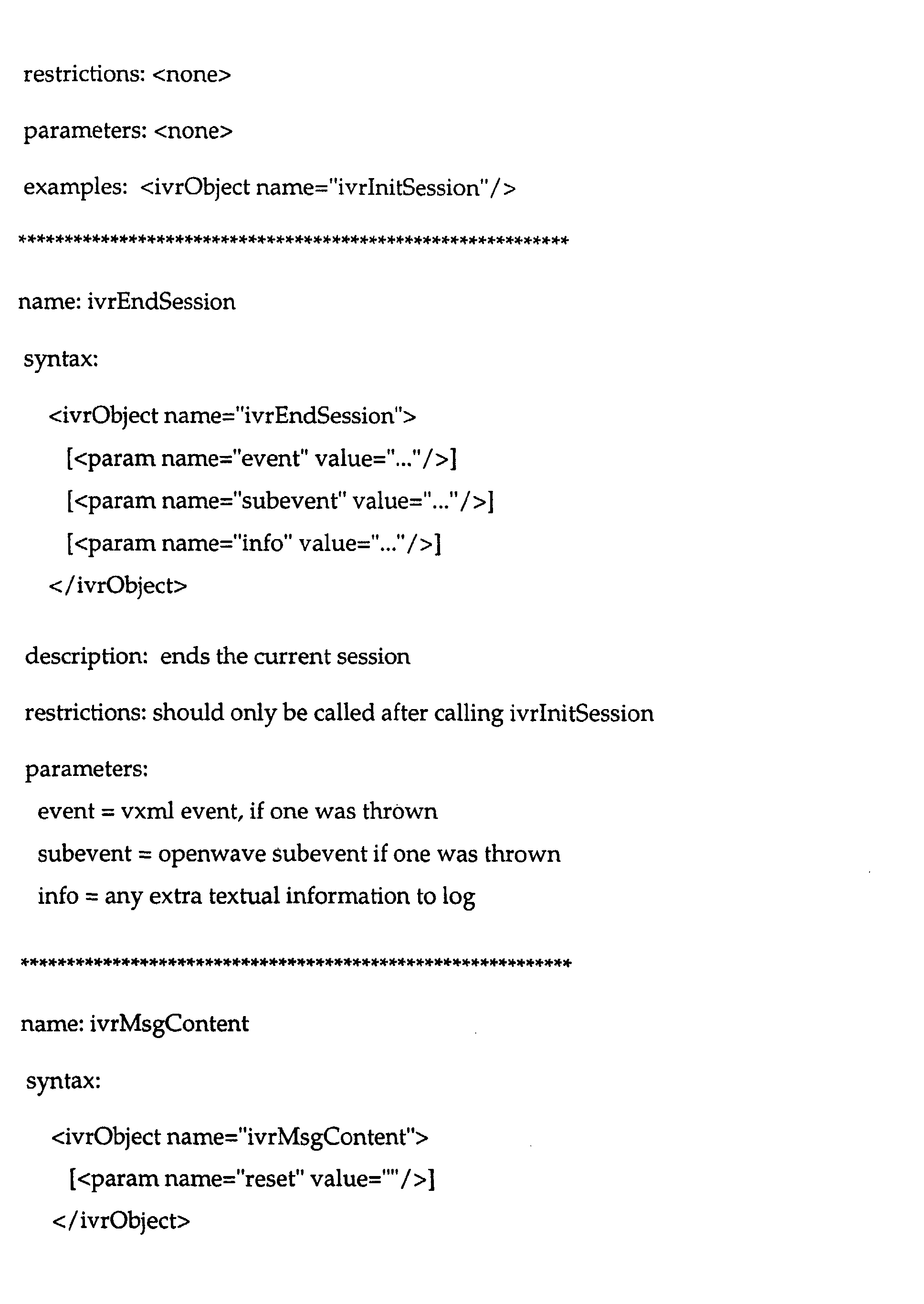

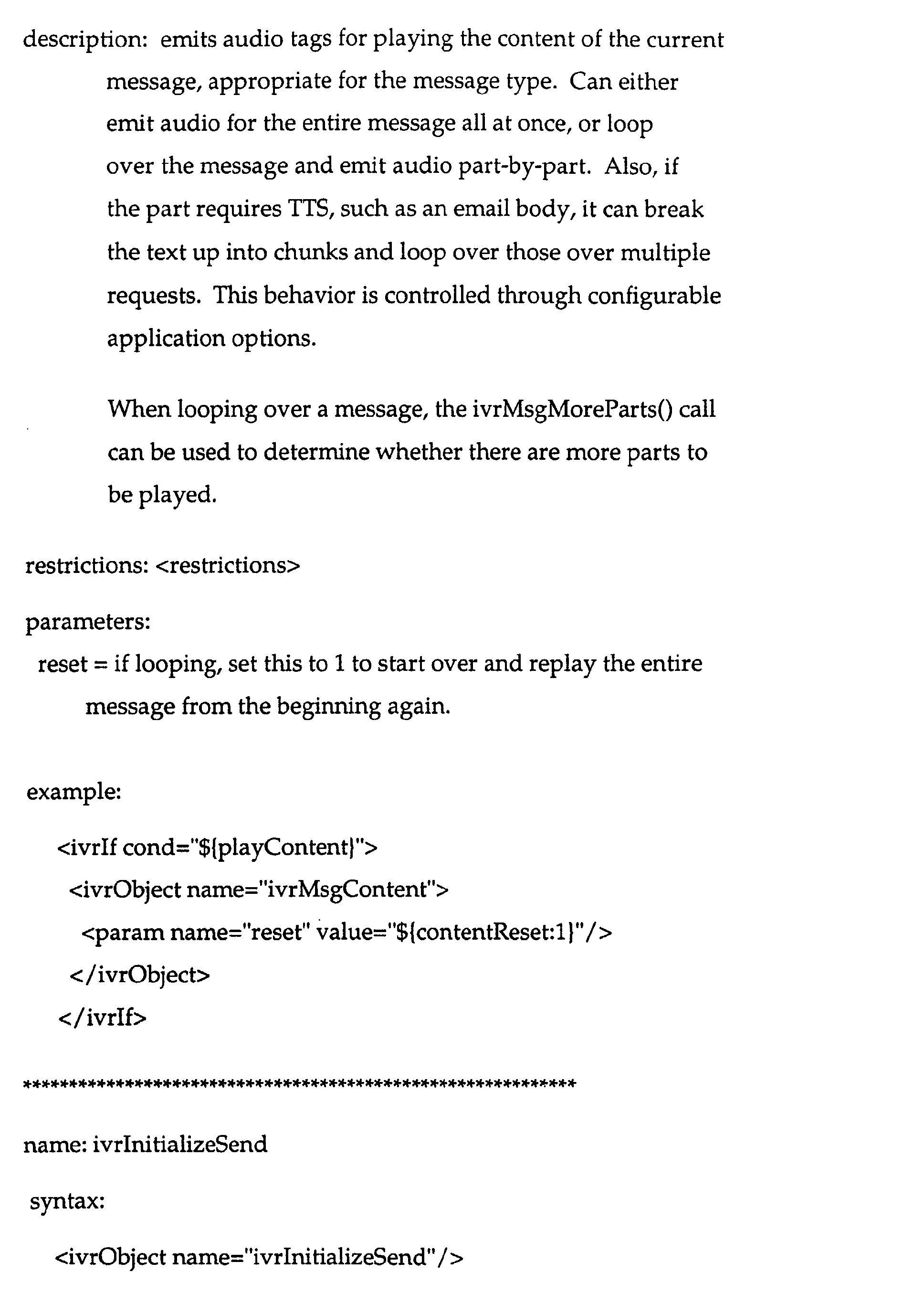

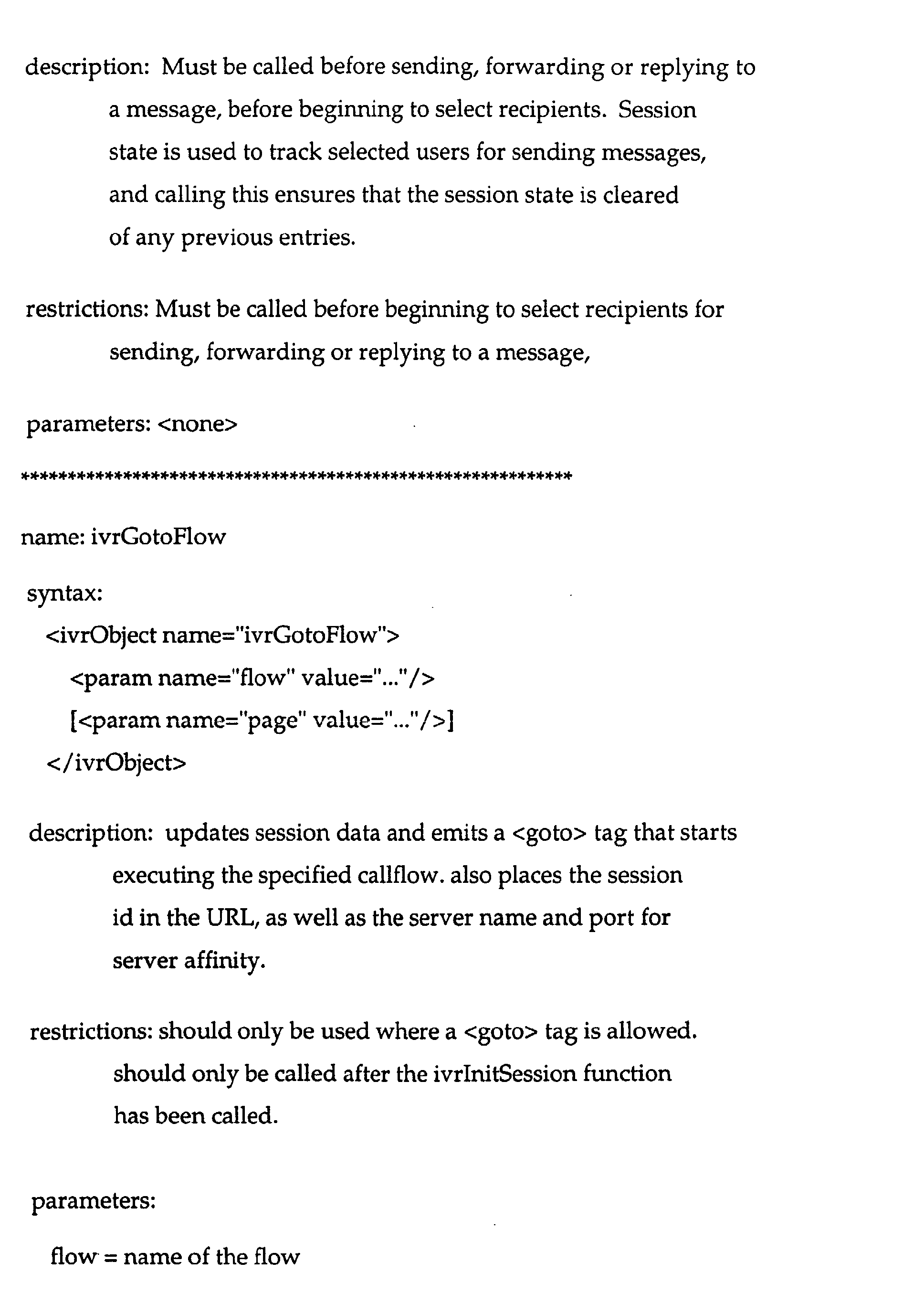

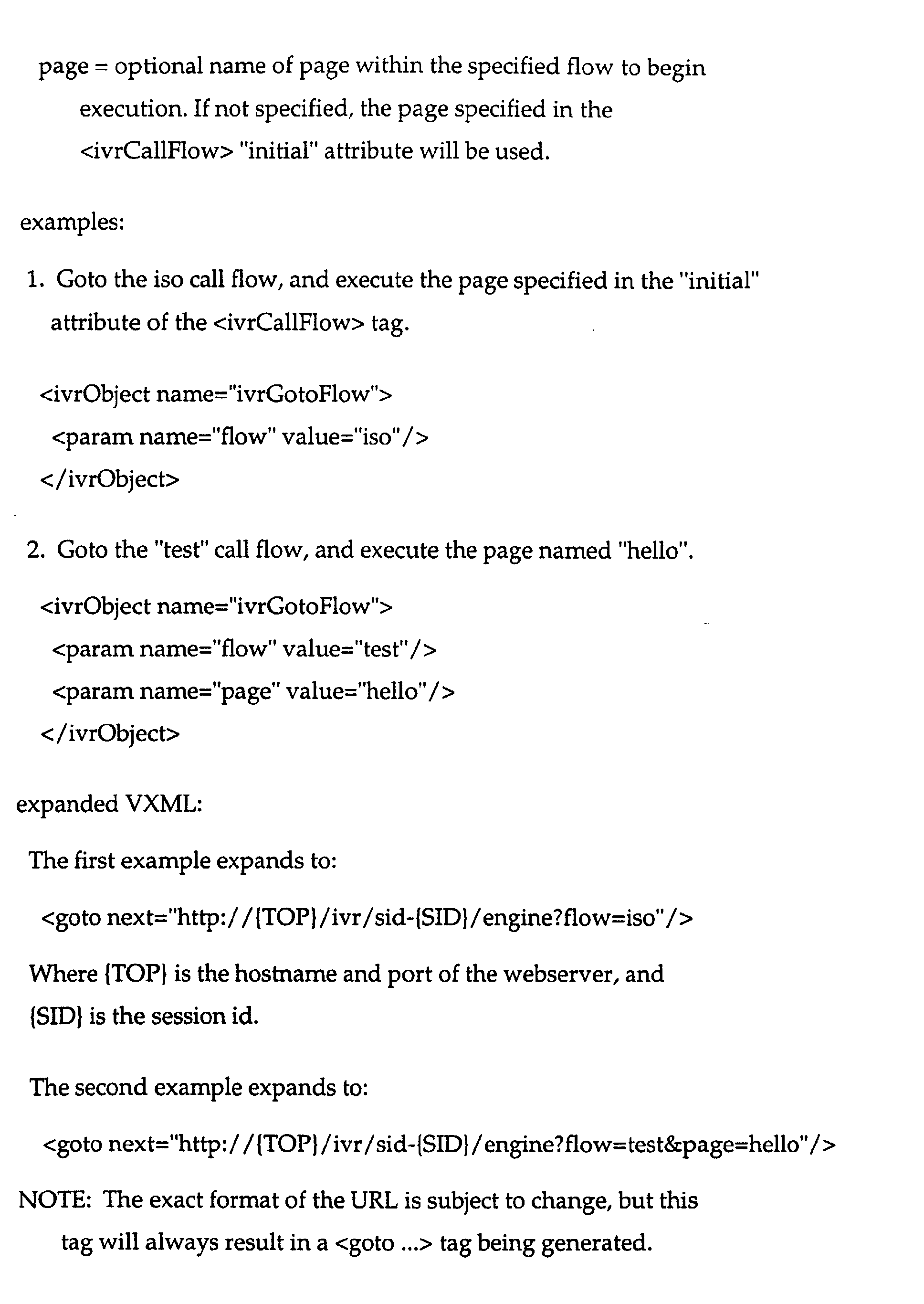

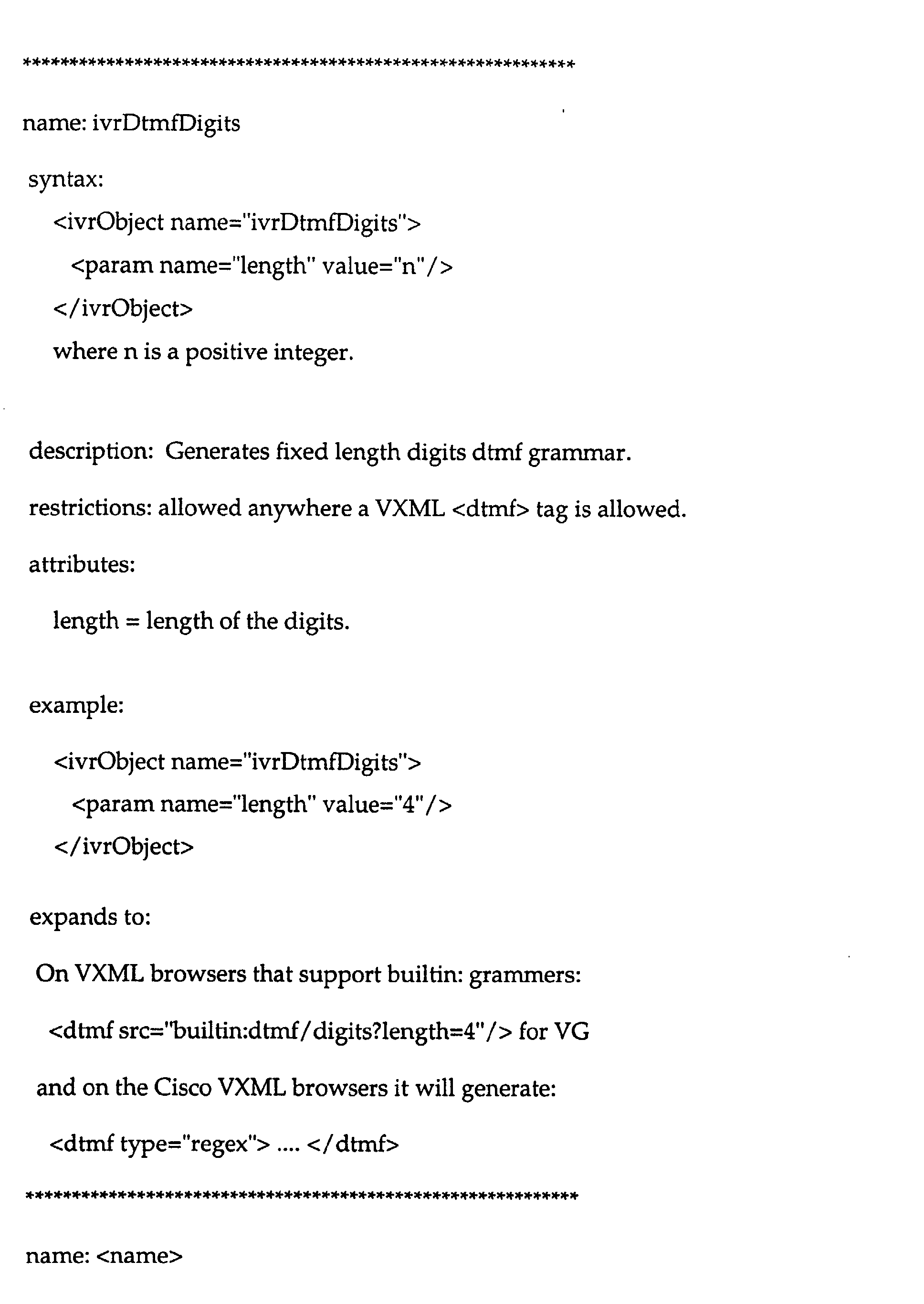

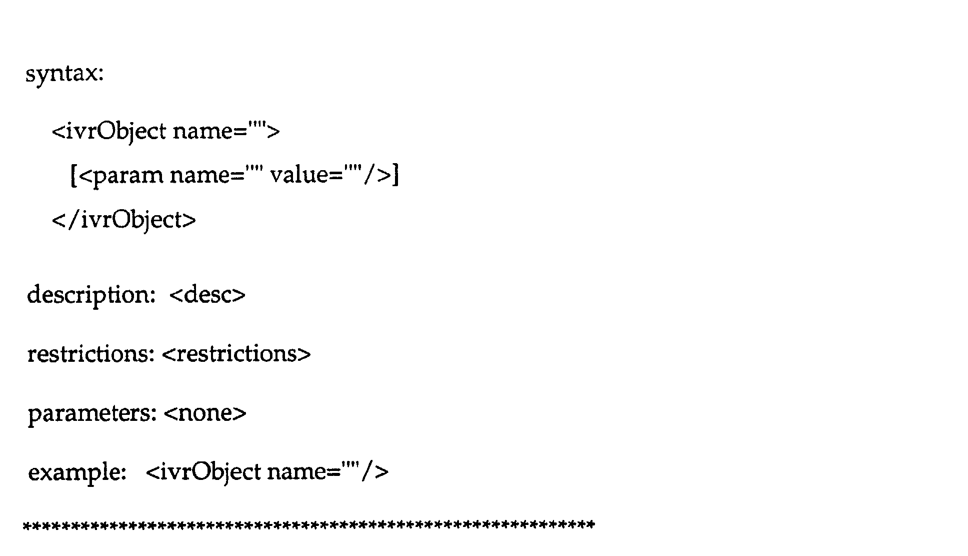

Thus, a method and apparatus for using VXML extensions to incorporate application logic into a voice responsive system have been described. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative sense rather than a restrictive sense.

## Claims

1. A method comprising:
creating a VXML based call flow document for use by a server in a voice responsive system to define a call flow, including incorporating a VXML extension element into the call flow document to provide application logic for the call flow; and
storing the call flow document in the voice responsive system.

2. A method as recited in claim 1, wherein the VXML extension element specifies application logic.

3. A method as recited in claim 2, wherein the a VXML extension element specifies a conditional control flow.

4. A method as recited in claim 1, wherein the VXML extension element specifies a logically separate executable entity that contains application logic.

5. A method as recited in claim 1, wherein said executing the application logic comprises invoking an application-level operation on a remote server as part of the call flow based on one of the VXML extension elements.

6. A method of providing a voice application, the method comprising:
receiving request from a voice browser;
in response to the request, parsing a call flow document, the call flow document including a plurality of predefined VXML extension elements to incorporate application logic into a call flow; and
executing the application logic based on the VXML extension elements.

7. A method as recited in claim 6, wherein the plurality of VXML extension elements include a VXML extension element specifying application logic.

8. A method as recited in claim 7, wherein the a VXML extension element specifies a conditional control flow.

9. A method as recited in claim 6, wherein the plurality of VXML extension elements include a VXML extension element specifying a logically separate entity that contains application logic.

10. A method as recited in claim 6, wherein said executing the application logic comprises invoking an application-level operation on a remote server as part of the call flow based on one of the VXML extension elements.

11. A method of executing a call flow in a voice responsive processing system, the method comprising:
accessing an XML based document in response to a request from a remote entity;
identifying a tag in the XML based document;
determining whether the tag is a predefined XML extension element; and
if the tag is a predefined XML extension element, then executing call flow logic corresponding to the tag.

12. A method as recited in claim 11, wherein the XML based document is a VXML based document, and the predefined XML extension element is a predefined VXML extension element.

13. A method as recited in claim 11, wherein the tag is a predefined XML extension element specifying call flow logic.

14. A method as recited in claim 13, wherein the tag specifies a conditional control flow.

15. A method as recited in claim 11, wherein the tag is a predefined XML extension element specifying a logically separate entity that contains call flow logic.

16. A method as recited in claim 11, wherein said executing call flow logic comprises invoking an application-level operation on a remote server as part of the call flow based on the tag.

17. A method of operating a server in a voice responsive processing system, the method comprising:
receiving a request at the voice server from a voice browser;
accessing a VXML based document in response to the request;
parsing the call flow document, including identifying a tag in the VXML document;
determining whether the tag is a standard VXML tag;
if the tag is a standard VXML tag, then outputting the tag to the voice browser;
if the tag is not a standard VXML tag, determining whether the tag is a predefined VXML extension element;
if the tag is a predefined VXML extension element, then executing call flow logic corresponding to the tag.

18. A method as recited in claim 17, wherein the tag is a predefined VXML extension element specifying call flow logic.

19. A method as recited in claim 18, wherein the tag specifies a conditional control flow.

20. A method as recited in claim 17, wherein the tag is a predefined VXML extension element specifying a logically separate entity that contains call flow logic.

21. A method as recited in claim 17, wherein said executing call flow logic comprises invoking an application-level operation on a remote server as part of the call flow based on the tag.

22. A processing system to execute a call flow, the processing system comprising:
a web server; and
an engine configured to interpret an XML document including a plurality of XML extension elements which incorporate logic into the call flow.

23. A processing system as recited in claim 22, wherein the document is a VXML based document, and the plurality of XML extension elements comprise a plurality of VXML extension elements.

24. A processing system as recited in claim 23, wherein the plurality of VXML extension elements comprises a predefined VXML tag specifying application logic.

25. A processing system as recited in claim 24, wherein the tag specifies a conditional control flow.

26. A processing system as recited in claim 23, wherein the plurality of VXML extension elements comprises a predefined VXML tag specifying a logically separate entity that contains application logic.

27. A processing system as recited in claim 23, wherein the plurality of VXML extension elements comprises a predefined VXML tag for invoking an application-level operation on a remote server as part of the call flow.

28. A voice server comprising:
a web server to respond to requests from a voice browser; and
an engine responsive to the web server to interpret a set of one or more VXML based call flow documents, the set of VXML based call flow documents including a plurality of predefined VXML extension elements, to incorporate logic into a call flow, the plurality of VXML extension elements including a first VXML tag defined to specify application logic, and a second VXML tag defined to reference a logically separate entity that specifies application logic.

29. A voice server as recited in claim 28, wherein the plurality of VXML extension elements includes a VXML extension element specifying execution of an application-level operation on a remote server as part of the call flow.

30. A voice server as recited in claim 28, wherein each of the plurality of VXML extension elements is capable of interaction with VXML code in which it is incorporated.

31. A voice server as recited in claim 28, wherein the first VXML tag specifies conditional control flow.

32. A voice server as recited in claim 28, wherein the second VXML tag specifies an object to be invoked as part of the call flow, the object including application logic.

33. A voice server as recited in claim 28, wherein the plurality of VXML extension elements includes a VXML extension element specifying a prompt to be played as part of the call flow.

34. A voice server as recited in claim 28, wherein the engine interpreting one of the plurality of VXML extension elements causes additional VXML code to be generated and provided to the voice browser via the VXML server in response to the request.

35. An apparatus comprising:
means for receiving request from a voice browser;
means for parsing a call flow document in response to the request, the call flow document including a plurality of predefined VXML extension elements to incorporate application logic into a call flow; and
means for executing the application logic based on the VXML extension elements.

36. An apparatus as recited in claim 35, wherein the plurality of VXML extension elements include a VXML extension element specifying application logic.

37. An apparatus as recited in claim 36, wherein the a VXML extension element specifies a conditional control flow.

38. An apparatus as recited in claim 35, wherein the plurality of VXML extension elements include a VXML extension element specifying a logically separate entity that contains application logic.

39. An apparatus as recited in claim 35, wherein the means for executing the application logic comprises means for invoking an application-level operation on a remote server as part of the call flow based on one of the VXML extension elements.

40. A machine-readable storage medium storing a VXML based call flow document for use by a server in a voice responsive system to define a call flow, the call flow document including a VXML extension element to provide application logic for the call flow.

41. A machine-readable storage medium as recited in claim 40, wherein the VXML extension element specifies application logic.

42. A machine-readable storage medium as recited in claim 41, wherein the a VXML extension element specifies a conditional control flow.

43. A machine-readable storage medium as recited in claim 40, wherein the VXML extension element specifies a logically separate executable entity that contains application logic.

44. A machine-readable storage medium as recited in claim 40, wherein said executing the application logic comprises invoking an application-level operation on a remote server as part of the call flow based on one of the VXML extension elements.

45. A method of modifying a call flow, the method comprising:
storing a VXML based call flow document for use by a server in a voice responsive system, the call flow document defining a call flow and including a set of VXML extension elements for providing application logic for the call flow; and
modifying the call flow by modifying the stored call flow document in the voice responsive system while the voice responsive system is in operation.

46. A method as recited in claim 45, wherein said modifying comprises adding, deleting or modifying a VXML extension element in the call flow document.
